(19)

Europäisches Patentamt

European Patent Office

Office européen des brevets

(11) **EP 3 637 334 A1**

(12) **EUROPEAN PATENT APPLICATION**

(43) Date of publication:
**15.04.2020 Bulletin 2020/16**

(51) Int Cl.:
*G06Q 10/06* (2012.01)          *G06Q 10/08* (2012.01)

(21) Application number: **18199605.9**

(22) Date of filing: **10.10.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Bayer AG**
**51373 Leverkusen (DE)**

(72) Inventor: **The designation of the inventor has not
yet been filed**

(74) Representative: **BIP Patents**
**c/o Bayer Intellectual Property GmbH**
**Alfred-Nobel-Straße 10**
**40789 Monheim am Rhein (DE)**

(54) **PRODUCT PLANNING APPARATUS**

(57)      The present invention relates to a product planning apparatus (300). It is described to provide (410) a processing unit with a plurality of orders of a product, wherein the plurality of orders is formed from open orders and shipped orders. The processing unit is provided (420) with a stock level of the product held in stock. The processing unit determines (430) an open demand of the product to be received, wherein the determination comprises utilisation of the shipped orders, open orders and a total forecast number of the product to be received. The processing unit determines (440) a net demand of the product to be received, wherein the determination comprises utilisation of the open orders, open demand and the stock level. The processing unit determines (450) a production plan, wherein the determination comprises utilisation of the net demand.

Fig. 1

EP 3 637 334 A1

**Description**

FIELD OF THE INVENTION

The present invention relates to a product planning apparatus, to a method for product planning, as well as to a computer program element and a computer readable medium.

BACKGROUND OF THE INVENTION

The general background of this invention is production of a product that is then delivered to various customers in various locations, where delivery is required in a timely manner. Carrying this out in a manner that minimizes overproduction, minimizes stockpiling, whilst at the same time meets customer requirements is difficult. This situation is exacerbated when the product has a lifetime, that can be short, where stock cannot then be held for extended periods and where wastage of product, in terms of having to through away product, then has to be minimizing. A further complicating factor is when the product has a level of efficacy that varies with time. Production planning in such a situation, whilst meeting the above discussed requirements, has become impossible with existing technologies.

SUMMARY OF THE INVENTION

It would be advantageous to have improved means to determine a production plan for a product.

The object of the present invention is solved with the subject matter of the independent claims, wherein further embodiments are incorporated in the dependent claims. It should be noted that the following described aspects and examples of the invention apply also for the product planning apparatus, the method for product planning, and for the computer program element and the computer readable medium.

According to a first aspect, there is provided a product planning apparatus, comprising:

- an input unit;
- a processing unit; and
- an output unit

The input unit is configured to provide the processing unit with a plurality of orders of a product, wherein the plurality of orders is formed from open orders and shipped orders. The input unit is configured to provide the processing unit with a stock level of the product held in stock. The processing unit is configured to determine an open demand of the product to be received, wherein the determination comprises utilisation of the shipped orders, open orders and a total forecast demand number of the product to be received. The processing unit is configured also to determine a net demand of the product to be received, wherein the determination comprises utilisation of the open demand and the stock level. The processing unit is configured also to determine a production plan, wherein the determination comprises utilisation of the net demand. The output unit is configured to output the production plan.

In an example, the input unit is configured to provide the processing unit with a production run schedule, the production run schedule comprising a plurality of dates extending into the future when product production is possible. Determination of the production plan can comprises utilisation of the production run schedule.

In an example, when the shipped orders added to the open orders is equal to or greater than the total forecast demand number the open demand is determined as the open orders.

In an example, determination of the open demand comprises a subtraction of the shipped orders from the total forecast demand number.

In an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open demand comprises a summation of a plurality of sub-open demand extending over the plurality of future dates. The sub-open demand for a future date is the sub-shipped order for that date subtracted from the sub-forecast demand number for that date.

In an example, when the shipped orders added to the open orders is less than the total forecast demand number, determination of the open demand comprises a determination of an open forecast. Determination of the open forecast can comprise a subtraction of the shipped orders and the open orders from the total forecast demand number.

In an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open orders comprises a summation of a plurality of sub-open orders extending over the plurality of future dates, and wherein the open forecast comprises a summation of a plurality of sub-open forecasts extending over the plurality of future dates. A sub-open forecast for a future date is the sub-shipped order summed with the sub-open order for that date subtracted from the sub-forecast demand number for that date. The open forecast is equal to a redistributed open forecast that comprises a summation of a plurality of sub-redistributed open forecasts extending over the plurality of future dates. The sub-open demand for a date equals the sub-open order for that date added to the sub-redistributed open forecast for that date.

In an example, the open orders and the total forecast demand number relate to a plurality of delivery zones having a plurality of different delivery times, wherein each delivery zone has a different delivery time.

In an example, the processing unit is configured to determine a supply plan of product to the plurality of delivery zones, the determination comprising utilisation of the open demand and stock level.

In an example, the product has an associated shelf life, and wherein determination of the supply plan comprises utilisation of the shelf life.

In an example, the product has a level of efficacy that varies with time, and wherein determination of the supply plan comprises utilisation of how the level of efficacy varies with time.

In an example, the product has a half-life, with this being a duration in time over which the level of efficacy of the product halves.

In an example, the input unit is configured to provide the processing unit with at least one product receiving factor of receivers of the product. Determination of the supply plan can then comprise utilisation of the at least one product receiving factor of receivers.

In an example, the at least one product receiving factor of receivers of the product comprises at least one body weight of a receiver in kilograms.

In an example, the processing unit is configured to determine for each delivery zone a characteristic weight distribution for receivers based on data provided from the input unit. The at least one receiving factor of receivers of the product can comprise the characteristic weight distributions in the plurality of deliver zones.

In an example, the at least one product receiving factor comprises an amount of seed a receiver wants to purchase.

In an example, determination of the supply plan comprises matching the levels of efficacy of at least some of the products held in stock with the at least one product receiving factor of receivers of the product for receivers comprised within the open demand.

In an example, the matching comprises identifying two separate products held in stock that have a combined efficacy that matches a receiving factor of a receiver of the product.

In an example, determination of the production plan comprises utilization of the supply plan.

In an example, the processing unit is configured to determine the total forecast demand number, the determination comprising utilisation of at least one probability of product re-receipt.

In an example, the input unit is configured to enable a user to input the at least one probability of product re-receipt, and wherein the input unit is configured to provide the processing unit with the at least one probability of product re-receipt.

In an example, the input unit is configured to provide the processing unit with information relating to historical product receipt, and wherein the processing unit is configured to determine the at least one probability of product re-receipt on the basis of the information relating to the historical product receipt.

In an example, the historical products relate to products being received by one or more receivers on one or more occasions.

In an example, the processing unit is configured to determine a temporal receipt distribution extending into the future, wherein the determination comprises utilization of the information relating to the historical product receipt.

In an example, determination of the receipt distribution comprises a determination of a probability of product receipt for different days of the week.

In an example, the input unit is configured to enable a user to input information relating to at least one period of time in the future when product receipt will not occur. The input unit is configured to provide the processing unit with the information relating to at least one period of time in the future when product receipt will not occur. Determination of the receipt distribution can comprise utilization of the information relating to at least one period of time in the future when product receipt will not occur.

In an example, the input unit is configured to provide the processing unit with a first demand number of a product to be received and/or having already been received over a first period of time. The first demand number of the product comprises a second demand number of the product to be received and/or having already been received by a first plurality of receivers who have previous to the first period of time not received the product. The first demand number of the product comprises also a third demand number of the product to be received and/or having already been received by a second plurality of receivers who have previous to the first period of time received the product on one or more occasions. The total forecast demand number comprises a first sub-total forecast demand number of the product to be received over a second period of time subsequent to the first period of time, wherein the second period of time is in the future. The processing unit is configured to determine the first sub-total forecast demand number, wherein the determination comprises utilization of the at least one probability of product re-receipt. Determination of the first sub-total forecast demand number comprises a determination of a first forecast demand number of the product to be received by a proportion of the first plurality of receivers. The determination of the first forecast demand number comprises a multiplication of the second demand number of the product with a probability of product re-receipt for a receiver having received the product on only one occasion. Determination of the first sub-total forecast demand number comprises determination of a second forecast demand number of the product to be received by a proportion of the second plurality of receivers. The determination of the second forecast demand number comprises at least one multiplication of the third demand number of the product with at least one probability of product re-receipt for a receiver having received the product on at least two occasions.

In an example, the third demand number of the product comprises a fourth demand number of the product, and the second plurality of receivers comprises a third plurality of receivers who have previous to the first period of time received the product on only one occasion. The fourth demand number of the product is a demand number of the product to be received and/or having already been received by the third plurality of receivers. Determination of the second forecast demand number comprises determination of a third forecast demand number of the product to be received by a proportion of the third plurality of receivers. Determination of the third forecast demand number comprises a multiplication of the fourth demand number of the product with a probability of product re-receipt for a receiver having received the product on only two occasions.

In an example, the third demand number of the product comprises a fifth demand number of the product. The second plurality of receivers comprises a fourth plurality of receivers who have previous to the first period of time received the product on at least two occasions. The fifth demand number of the product is a demand number of the product to be received and/or having already been received by the fourth plurality of receivers. Determination of the second forecast demand number comprises determination of a fourth forecast demand number of the product to be received by a proportion of the fourth plurality of receivers. Determination of the fourth forecast demand number comprises at least one multiplication of the fifth demand number of the product with at least one probability of product re-receipt for a receiver having received the product on at least three occasions.

In an example, the fifth demand number of the product comprises a sixth demand number of the product. The fourth plurality of receivers comprises a fifth plurality of receivers who have previous to the first period of time received the product on only two occasions. The sixth demand number of the product is a demand number of the product to be received and/or having already been received by the fifth plurality of receivers. Determination of the fourth forecast demand number comprises determination of a fifth forecast demand number of the product to be received by a proportion of the fifth plurality of receivers. Determination of the fifth forecast demand number comprises a multiplication of the sixth demand number of the product with a probability of product re-receipt for a receiver having received the product on only three occasions.

In an example, the fifth demand number of the product comprises a seventh demand number of the product. The fourth plurality of receivers comprises a sixth plurality of receivers who have previous to the first period of time received the product on at least three occasions. The seventh demand number of the product is a demand number of the product to be received and/or having already been received by the sixth plurality of receivers. Determination of the fourth forecast demand number comprises determination of a sixth forecast demand number of the product to be received by a proportion of the sixth plurality of receivers. Determination of the sixth forecast demand number comprises at least one multiplication of the seventh demand number of the product with at least one probability of product re-receipt for a receiver having received the product on at least four occasions.

In an example, the total forecast demand number comprises a second sub-total forecast demand number of the product to be received over a third period of time subsequent to the second period of time. The processing unit is configured to determine the second sub-total forecast demand number, the determination comprising utilization of the first sub-total forecast demand number of the product to be received over the second period of time and at least one probability of product re-receipt that does not include the probability of product re-receipt for a receiver having received the product on only one occasion.

In an example, determination of the second sub-total forecast demand number comprises a determination of a first additional forecast demand number. Determination of the first additional forecast demand number comprises a multiplication of the first forecast demand number with a probability of product re-receipt for a receiver having received the product on only two occasions. Determination of the second sub-total forecast demand number comprises a determination of a second additional forecast demand number. Determination of the second additional forecast demand number comprises at least one multiplication of the second forecast demand number with at least one probability of product re-receipt for a receiver having received the product on at least three occasions.

In an example, the second additional forecast demand number comprises a third additional forecast demand number. Determination of the third additional forecast demand number comprises a multiplication of the third forecast demand number with a probability of product re-receipt for a receiver having received the product on only three occasions.

In an example, the second additional forecast demand number comprises a fourth additional forecast demand number, Determination of the fourth additional forecast demand number comprises at least one multiplication of the fourth forecast demand number with at least one probability of product re-receipt for a receiver having received the product on at least four occasions.

In an example, the second additional forecast demand number comprises a fifth additional forecast demand number. Determination of the fifth additional forecast demand number comprises a multiplication of the fifth forecast demand number with a probability of product re-receipt for a receiver having received the product on only four occasions.

In an example, the second additional forecast demand number comprises a sixth additional forecast demand number. Determination of the sixth additional forecast demand number comprises at least one multiplication of the sixth forecast demand number with at least one probability of product re-receipt for a receiver having received the product on at least five occasions.

In an example, the second demand number of the product comprises a user provided order demand number of the product to be received and/or having already been received for the first time by one or more receivers.

In an example, the second demand number of the product comprises a user provided forecast demand number of the product to be received for the first time by one or more receivers.

According to a second aspect, there is provided a method for product planning, comprising:

A) providing a processing unit with a plurality of orders of a product, wherein the plurality of orders is formed from open orders and shipped orders;
B) providing the processing unit with a stock level of the product held in stock;
C) determining by the processing unit an open demand of the product to be received, wherein the determination comprises utilisation of the shipped orders, open orders and a total forecast number of the product to be received;
D) determining by the processing unit a net demand of the product to be received, wherein the determination comprises utilisation of the open demand and the stock level; and
F) determining by the processing unit a production plan, wherein the determination comprises utilisation of the net demand.

According to another aspect, there is provided a computer program element for controlling an apparatus as described above, when carrying method steps as described above.

According to another aspect, there is provided a computer readable medium having stored computer element as previously described.

Advantageously, the benefits provided by any of the above aspects equally apply to all of the other aspects and vice versa.

The above aspects and examples will become apparent from and be elucidated with reference to the embodiments described hereinafter.

BRIEF DESCRIPTION OF THE DRAWINGS

Exemplary embodiments will be described in the following with reference to the following drawings:

Fig. 1 shows a schematic set up of an example of a product demand forecasting apparatus;
Fig. 2 shows a method for product forecasting;
Fig. 3 shows a schematic set up of an example of a product planning apparatus for a perishable product;
Fig. 4 shows a method for product planning;
Fig. 5 shows a schematic set up of an example of a product supply apparatus for a perishable product;
Fig. 6 shows a method for product supply;
Fig. 7 shows a detailed example of a high level overview of the overall process;
Fig. 8 shows a detailed example of a high level overview of forecast generation;
Fig. 9 shows a detailed example of a high level overview of the supply planning;
Fig. 10 shows a detailed example of a high level overview of the IT system carrying out the overall process;
Fig. 11 shows an example of a Markov Chain used in modelling the demand number of customer orders to be placed;
Fig. 12 shows an example of supply to different parts of the world having different delivery timescales;
Fig. 13 shows a schematic example of calculations undertaken to determine a picking day in the overall process;
Fig. 14 shows a schematic example of determination of the picking day;
Fig. 15 shows an example of splitting logic used in in splitting open demand across derived weight intervals; and
Fig. 16 shows a graphical representation of an example of the production plan.

DETAILED DESCRIPTION OF EMBODIMENTS

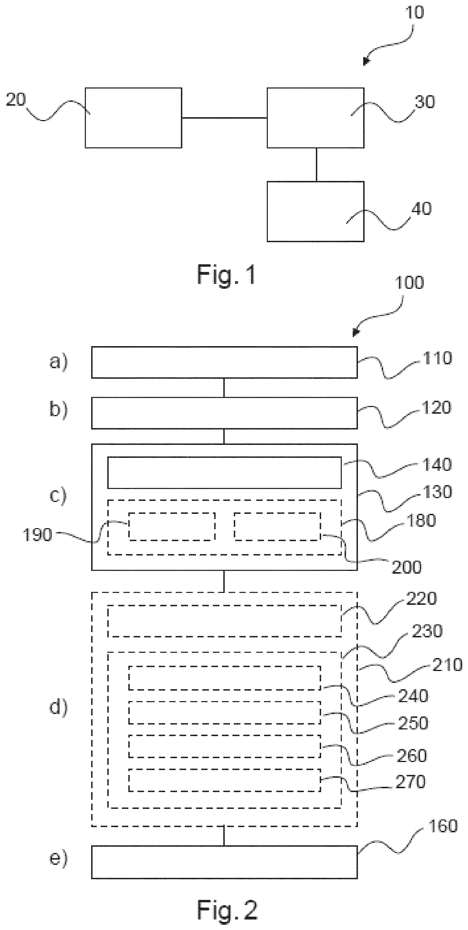

Fig. 1 shows an example of a product demand forecasting apparatus 10. The apparatus 10 comprises an input unit 20, a processing unit 30, and an output unit 40. The input unit is configured to provide the processing unit with a first demand number of a product to be received and/or having already been received over a first period of time. The first demand number of the product comprises a second demand number of the product to be received and/or having already been received by a first plurality of receivers who have previous to the first period of time not received the product. The first demand number of the product comprises a third demand number of the product to be received and/or having already been received by a second plurality of receivers who have previous to the first period of time received the product on one or more occasions. The processing unit is configured to determine a total forecast demand number of the product to be received. The total forecast demand number comprises a first sub-total forecast demand number of the product to be received over a second period of time subsequent to the first period of time. The second period of time is in the future. The processing unit is configured also to determine the first sub-total forecast demand number. The determination of the first sub-total forecast demand number comprises utilization of at least one probability of product re-receipt. Determination of the first sub-total forecast demand number also comprises a determination of a first forecast demand number of the product to be received by a proportion of the first plurality of receivers. The determination of the first forecast demand number comprises a multiplication of the second demand number of the product with a probability of product re-receipt for a receiver having received the product on only one occasion. Determination of the first sub-total forecast demand number also comprises a determination of a second forecast demand number of the product to be consumed by a proportion of the second plurality of receivers. The determination of the second forecast demand number comprises at least one multiplication of the third demand number of the product with at least one probability of product re-receipt for a receiver having consumed the product on at least two occasions. The output unit is configured to output the total forecast demand number.

A receiver here can mean a person who will receive the product in order to be treated by the product. A receiver can also mean someone who will purchase the product. A receiver can also mean someone who receives the product, such as a wholesaler who may initially receive the product, and then subsequently sell the product to an end user. A receiver can also mean someone who purchases the product directly as an end user.

A probability of re-receipt means a probability that a receiver, such as a patient or hospital that will treat a patient with a medicament (an example of a product) or a farmer who buys seed (another example of a product), who has previously received the product on n occasions (n = 1, 2, 3, 4, 5, 6 ....) will require to receive the product an n+1th time.

In this manner, information in the form of one or more probabilities of a user re-receiving the product, whether they have or will have received the product on one or more occasions, is used in conjunction with information relating to product received by receivers who have already received the product in order to determine product forecast information that can also take into account first time receivers.

Thus, the second demand number of the product relating to the first plurality of receivers can relate to orders that have already been received and orders that have been received and the product already received.

This provides a forecast of product receipt going into the future, that can be used for planning of production, planning of storing, planning of delivery, of product, providing for increased efficiency, optimised production of product to match forecast, minimisation of storage facilities, and reduced wastage of products that have a limited shelf-life. In other words, a prediction or forecast is made of the product that will be needed (will need to be received). This includes for example, medicament that will need to be received for the treatment of a patient, seed that will need to be received by farmers or wholesalers who themselves would then supply farmers.

In an example, the first period of time is a week.

In an example, the first period of time is a fortnight.

In an example, the first period of time is four weeks.

In an example, the first period of time is a month.

In an example, the second period of time is a week.

In an example, the second period of time is a fortnight.

In an example, the second period of time is four weeks.

In an example, the second period of time is five weeks.

In an example, the second period of time is six weeks.

In an example, the second period of time is seven weeks.

In an example, the second period of time is eight weeks.

In an example, the second period of time is nine weeks.

In an example, the second period of time is ten weeks.

In an example, the second period of time is a month.

In an example, the second period of time is two months.

In an example, the second period of time is three months.

In an example, the second period of time is four months.

In an example, the second period of time is an integer number of times larger than the first period of time.

In an example, the first period of time is in the past.

In an example, the second period of time is of the same duration as the first period of time.

In an example, the second period of time is of a longer duration that that for the first period of time.

In an example, each occasion of previous receipt occurred in a different period of time.

In an example, the third demand number of the product comprises a user provided order demand number of the product to be received and/or having already been received on one or more occasions.

In an example, the product is a quantity of seeds.

In an example, the product is a medicinal product.

In an example, a particular example of the product has a shelf life that is shorter than the second period of time.

In an example, a particular example of the product has a level of efficacy that varies with time.

In an example, a particular example of the product can be characterised by a half-life, with this being a duration in time over which a level of efficacy of the product halves.

In an example, the product is radioactive.

In an example, the product comprises radium.

In an example, the product comprises radioactive iodine.

In an example, the product is a quantity of seed.

In an example, the determination of the total forecast demand number comprises at least one rounding process. In this way, an integer number can always be generated.

In an example, the at least one probability of product re-receipt comprises a probability that a receiver having received the product only once will receive the product for a second time.

In an example, the at least one probability of product re-receipt comprises a probability that a receiver having received the product only twice will receive the product for a third time.

In an example, the at least one probability of product re-receipt comprises a probability that a receiver having received the product only three times will receive the product for a fourth time.

In an example, the at least one probability of product re-receipt comprises a probability that a receiver having received the product only n times will receive the product for an n+1 time.

According to an example, the third demand number of the product comprises a fourth demand number of the product, and the second plurality of receivers comprises a third plurality of receivers who have previous to the first period of time received the product on only one occasion. The fourth demand number of the product is a demand number of the product to be received and/or having already been received by the third plurality of receivers. Determination of the second forecast demand number comprises a determination of a third forecast demand number of the product to be received by a proportion of the third plurality of receivers. Determination of the third forecast demand number comprises a multiplication of the fourth demand number of the product with a probability of product re-receipt for a receiver having received the product on only two occasions.

According to an example, the third demand number of the product comprises a fifth demand number of the product, and the second plurality of receivers comprises a fourth plurality of receivers who have previous to the first period of time received the product on at least two occasions. The fifth demand number of the product is a demand number of the product to be received and/or having already been received by the fourth plurality of receivers. Determination of the second forecast demand number comprises a determination of a fourth forecast demand number of the product to be received by a proportion of the fourth plurality of receivers. Determination of the fourth forecast demand number comprises at least one multiplication of the fifth demand number of the product with at least one probability of product re-receipt for a receiver having received the product on at least three occasions.

According to an example, the fifth demand number of the product comprises a sixth demand number of the product, and the fourth plurality of receivers comprises a fifth plurality of receivers who have previous to the first period of time received the product on only two occasions. The sixth demand number of the product is a demand number of the product to be received and/or having already been received by the fifth plurality of receivers. Determination of the fourth forecast demand number comprises a determination of a fifth forecast demand number of the product to be received by a proportion of the fifth plurality of receivers. Determination of the fifth forecast demand number comprises a multiplication of the sixth demand number of the product with a probability of product re-receipt for a receiver having received the product on only three occasions.

According to an example, the fifth demand number of the product comprises a seventh demand number of the product, wherein the fourth plurality of receivers comprises a sixth plurality of receivers who have previous to the first period of time received the product on at least three occasions. The seventh demand number of the product is a demand number of the product to be received and/or having already been received by the sixth plurality of receivers. Determination of the fourth forecast demand number comprises a determination of a sixth forecast demand number of the product to be received by a proportion of the sixth plurality of receivers. Determination of the sixth forecast demand number comprises at least one multiplication of the seventh demand number of the product with at least one probability of product re-receipt for a receiver having received the product on at least four occasions.

According to an example, the total forecast demand number comprises a second sub-total forecast demand number of the product to be received over a third period of time subsequent to the second period of time. The processing unit is configured to determine the second sub-total forecast demand number. The determination comprises utilization of the first sub-total forecast demand number of the product to be received over the second period of time and at least one probability of product re-receipt that does not include the probability of product re-receipt for a receiver having received the product on only one occasion.

In an example, the second forecast demand number of the product comprises a user provided order demand number of the product to be received and/or having already been received for the first time by one or more receivers multiplied by the probability of product re-receipt for a receiver having received the product on only one occasion.

In an example, the second forecast demand number of the product comprises a user provided forecast demand number of the product to be received for the first time by one or more receivers multiplied by the probability of product re-receipt for a receiver having received the product on only one occasion.

In other words, the forecast can be modelled in terms of a Markov Chain, where the modelling process moves from one state to the next state (from time period to time period into the future) and where the forecast for subsequent time periods depends on the forecast for a previous time periods. To put this another way, the stochastic model allows the modelling of the re-receipt of receivers, depending upon the current demand number of product being received.

In an example, the third period of time is a week.

In an example, the third period of time is a fortnight.

In an example, the third period of time is four weeks.

In an example, the third period of time is a month.

In an example, the third period of time is of the same duration as the first period of time.

According to an example, determination of the second sub-total forecast demand number comprises a determination of a first additional forecast demand number. Determination of the first additional forecast demand number comprises a multiplication of the first forecast demand number with a probability of product re-receipt for a receiver having received the product on only two occasions. Determination of the second sub-total forecast demand number comprises a determination of a second additional forecast demand number. Determination of the second additional forecast demand number comprises at least one multiplication of the second forecast demand number with at least one probability of product re-receipt for a receiver having received the product on at least three occasions.

According to an example, the second additional forecast number comprises a third additional forecast demand number. Determination of the third additional forecast demand number comprises a multiplication of the third forecast demand number with a probability of product re-receipt for a receiver having received the product on only three occasions.

According to an example, the second additional forecast demand number comprises a fourth additional forecast demand number. Determination of the fourth additional forecast demand number comprises at least one multiplication of the fourth forecast demand number with at least one probability of product re-receipt for a receiver having received the product on at least four occasions.

According to an example, the second additional forecast demand number comprises a fifth additional forecast demand number. Determination of the fifth additional forecast demand number comprises a multiplication of the fifth forecast demand number with a probability of product re-receipt for a receiver having received the product on only four occasions.

According to an example, the second additional forecast demand number comprises a sixth additional forecast demand number. Determination of the sixth additional forecast demand number comprises at least one multiplication of the sixth forecast demand number with at least one probability of product re-receipt for a receiver having received the product on at least five occasions.

According to an example, the input unit is configured to enable a user to input the at least one probability of product re-receipt. The input unit is configured to provide the processing unit with the at least one probability of product re-receipt.

According to an example, the input unit is configured to provide the processing unit with information relating to historical product receipt comprising a plurality of demand numbers of products received in a plurality of different periods of time previous to the first period of time. The processing unit is configured to determine the at least one probability of product re-receipt on the basis of the information relating to the historical product receipt.

According to an example, the historical products relate to products being received by one or more receivers on one or more occasions.

In other words, historical information on the probability of a receiver having received the product once then receiving the product a second time is used to predict the forecast. Similarly, the probability that a receiver who has received the product twice, three times, four times, five times, n times, will receive the product three times, four times, five times, six times, n+1 times is used to predict the forecast of product receipt.

According to an example, the processing unit is configured to determine a receipt distribution within the second period of time. The determination comprises utilization of the information relating to the historical product receipt.

In this manner, rather than having only a forecasted quantity of product to be received within a time period, that time period can be split into shorter time periods, even on a day basis, and the quantity of product predicted to be received at a higher temporal degree of fidelity can be provided,

According to an example, determination of the receipt distribution comprises a determination of a probability of product receipt for different days of the week.

In other words, an understanding of what days of the week the product is generally received can be used in demand forecasting prediction, thereby provided a degree of fidelity that can be utilized in production planning of products that have a short shelf-life for example.

According to an example, the input unit is configured to enable a user to input information relating to at least one period of time within the second period of time when product receipt will not occur. The input unit is configured to provide the processing unit with the information relating to the at least one period of time within the second period of time when product receipt will not occur. Determination of the receipt distribution comprises utilization of the information relating to the at least one period of time within the second period of time when product receipt will not occur.

In this way, the forecast can be provided at a level of fidelity that can use historical data to determine an expected distribution of receipt, that then takes into account known information relating to when receipt is predicted not to occur. This enables product that will need to be received to be better predicted at a fidelity level of short periods of time, and even at a daily basis, providing a forecast that can be better used for all aspects of production planning for example,

In an example, the at least one period when product receipt will not occur comprises one or more bank holidays.

In an example, the at least one period when product receipt will not occur comprises one or more Sundays.

In an example, the at least one period when product receipt will not occur comprises one or more weekends.

In an example, the at least one period when product receipt will not occur comprises one or more days when strike and/or industrial action is known or predicted to occur.

According to an example, the second demand number of the product comprises a user provided order demand number of the product to be received and/or having already been received for the first time by one or more receivers.

According to an example, the second demand number of the product comprises a user provided forecast demand number of the product to be received for the first time by one or more receivers.

Fig. 2 shows a method for product demand forecasting 100 in its basic steps where optional method steps are shown with dashed lines. The method 100 comprises:

in a providing step 110, also referred to as step a), providing a processing unit 30 with a first demand number of a product to be received and/or having already been received over a first period of time, wherein, the first demand number of the product comprises a second demand number of the product to be received and/or having already been received by a first plurality of receivers who have previous to the first period of time not received the product; and wherein the first demand number of the product comprises a third demand number of the product to be received and/or having already been received by a second plurality of receivers who have previous to the first period of time received the product on one or more occasions;

in a determining step 120, also referred to as step b), determining by the processing unit a total forecast demand number of the product to be received, wherein the total forecast demand number comprises a first sub-total forecast demand number of the product to be received over a second period of time subsequent to the first period of time, wherein the second period of time is in the future;

in a determining step 130, also referred to as step c), determining 130 by the processing unit the first sub-total forecast demand number, the determination comprising utilizing at least one probability of product re-receipt, wherein step c) comprises steps c1) and c2);

c1) determining 140 a first forecast demand number of the product to be received by a proportion of the first plurality of receivers, the determination comprising multiplying the second demand number of the product by a probability of product re-receipt for a receiver having received the product on only one occasion;

c2) determining 150 a second forecast demand number of the product to be received by a proportion of the second plurality of receivers, the determination comprising multiplying the third demand number of the product by at least one probability of product re-receipt for at least one receiver having received the product on at least two occasions; and

in an outputting step 160, also referred to as step e), outputting by an output unit 40 the total forecast demand number.

According to an example, the third demand number of the product comprises a fourth demand number of the product, and the second plurality of receivers comprises a third plurality of receivers who have previous to the first period of time received the product on only one occasion. The fourth demand number of the product is a demand number of the product to be received and/or having already been received by the third plurality of receivers. Step c2) comprises step c2a) determining 170 a third forecast demand number of the product to be received by a proportion of the third plurality of receivers. Step c2a) comprises a multiplication of the fourth demand number of the product with a probability of product re-receipt for a receiver having received the product on only two occasions.

According to an example, the third demand number of the product comprises a fifth demand number of the product, and the second plurality of receivers comprises a fourth plurality of receivers who have previous to the first period of time received the product on at least two occasions. The fifth demand number of the product is a demand number of the product to be received and/or having already been received by the fourth plurality of receivers. Step c2) comprises step c2b) determining 180 a fourth forecast demand number of the product to be received by a proportion of the fourth plurality of receivers. Step c2b) comprises at least one multiplication of the fifth demand number of the product with at least one probability of product re-receipt for a receiver having received the product on at least three occasions.

According to an example, the fifth demand number of the product comprises a sixth demand number of the product, and the fourth plurality of receivers comprises a fifth plurality of receivers who have previous to the first period of time received the product on only two occasions. The sixth demand number of the product is a demand number of the product to be received and/or having already been received by the fifth plurality of receivers. Step c2b) comprises step c2b1) determining 190 a fifth forecast demand number of the product to be received by a proportion of the fifth plurality of receivers. Step c2b1) comprises a multiplication of the sixth demand number of the product with a probability of product re-receipt for a receiver having received the product on only three occasions.

According to an example, the fifth demand number of the product comprises a seventh demand number of the product, and the fourth plurality of receivers comprises a sixth plurality of receivers who have previous to the first period of time received the product on at least three occasions. The seventh demand number of the product is a demand number of the product to be received and/or having already been received by the sixth plurality of receivers. Step c2b) comprises step c2b2) determining 200 a sixth forecast demand number of the product to be received by a proportion of the sixth plurality of receivers. Step c2b2) comprises at least one multiplication of the seventh demand number of the product with at least one probability of product re-receipt for a receiver having received the product on at least four occasions.

According to an example, the total forecast demand number comprises a second sub-total forecast demand number of the product to be received over a third period of time subsequent to the second period of time. The method then comprises step d) determining 210 by the processing unit the second sub-total forecast demand number. The determination comprises utilizing the first sub-total forecast demand number of the product to be received over the second period of time and at least one probability of product re-receipt that does not include the probability of product re-receipt for a receiver having received the product on only one occasion.

In an example, the second forecast demand number of the product comprises a user provided order demand number of the product to be received and/or having already been received for the first time by one or more receivers multiplied by the probability of product re-receipt for a receiver having received the product on only one occasion.

In an example, the second forecast demand number of the product comprises a user provided forecast demand number of the product to be received for the first time by one or more receivers multiplied by the probability of product re-receipt for a receiver having received the product on only one occasion.

According to an example, step d) comprises steps d1) and d2): d1) determining 220 a first additional forecast demand number, the determination comprising multiplying the first forecast demand number with a probability of product re-receipt for a receiver having received the product on only two occasions; d2) determining 230 a second additional forecast demand number, the determination comprising at least one multiplication of the second forecast demand number with at least one probability of product re-receipt for a receiver having received the product on at least three occasions.

According to an example, step d2) comprises step d2a) determining 240 a third additional forecast demand number. Step d2a) comprises multiplying the third forecast demand number with a probability of product re-receipt for a receiver having received the product on only three occasions.

According to an example, step d2) comprises step d2b) determining 250 a fourth additional forecast demand number. Step d2b) comprises at least one multiplication of the fourth forecast demand number with at least one probability of product re-receipt for a receiver having received the product on at least four occasions.

According to an example, step d2) comprises step d2c) determining 260 a fifth additional forecast demand number. Step d2c) comprises a multiplication of the fifth forecast demand number with a probability of product re-receipt for a receiver having received the product on only four occasions.

According to an example, step d2) comprises step d2d) determining 270 a sixth additional forecast demand number. Step d2d) comprising at least one multiplication of the sixth forecast demand number with at least one probability of product re-receipt for a receiver having received the product on at least five occasions.

According to an example, the method comprises enabling via an input unit a user to input the at least one probability of product re-receipt. The input unit is configured to provide the processing unit with the at least one probability of product re-receipt.

According to an example, the method comprises providing the processing unit with information relating to historical product receipt comprising a plurality of demand numbers of products received in a plurality of different periods of time previous to the first period of time. Information relating to historical product receipt here means known information on what product has previously been received by receivers. The method then comprises determining by the processing unit the at least one probability of product re-receipt on the basis of the information relating to the historical product receipt.

According to an example, the historical products relate to products being received by one or more receivers on one or more occasions.

According to an example, the method comprises determining by the processing unit a receipt distribution within the second period of time, the determination comprising utilization of the information relating to the historical product receipt.

According to an example, determining the receipt distribution comprises determining a probability of product receipt for different days of the week.

According to an example, the method comprises enabling a user via an input unit to input information relating to at least one period of time within the second period of time when product receipt will not occur, and providing the processing unit with the information relating to the at least one period of time within the second period of time when product receipt will not occur. Determining the receipt distribution then comprises utilizing the information relating to the at least one period of time within the second period of time when product receipt will not occur.

According to an example, the second demand number of the product comprises a user provided order demand number of the product to be received and/or having already been received for the first time by one or more receivers.

According to an example, the second demand number of the product comprises a user provided forecast demand number of the product to be received for the first time by one or more receivers.

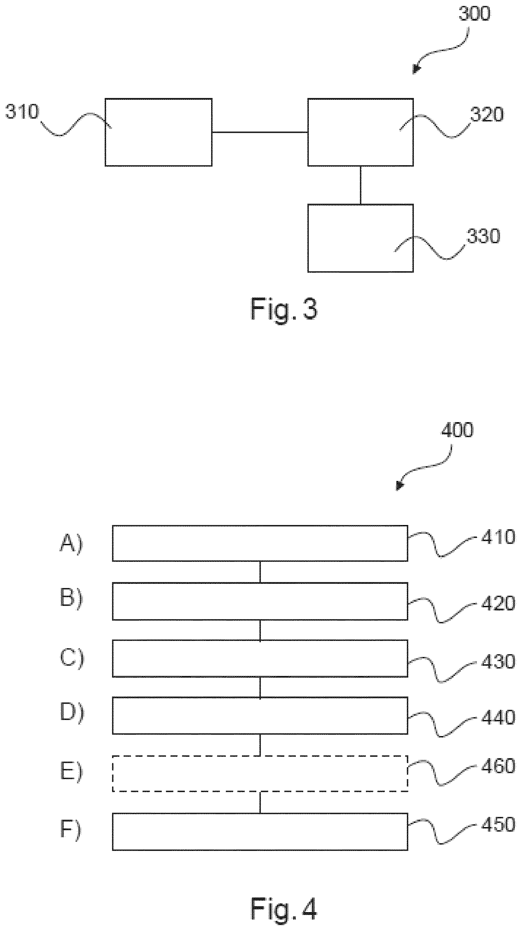

Fig. 3 shows an example of a product planning apparatus 300 for a perishable product. The apparatus 300 comprises an input unit 310, a processing unit 320, and an output unit 330. The input unit is configured to provide the processing unit with a plurality of orders of a product. The plurality of orders is formed from open orders and shipped orders. The input unit is configured also to provide the processing unit with a stock level of the product held in stock. The processing unit is configured to determine an open demand of the product to be received. The determination of the open demand comprises utilisation of the shipped orders, open orders and a total forecast demand number of the product to be received. The processing unit is configured also to determine a net demand of the product to be received. The determination of the net demand comprises utilisation of the open demand and the stock level. The processing unit is configured also to determine a production plan. The determination of the production plan comprises utilisation of the net demand. The output unit is configured to output the production plan.

Thus, demand forecasting information is used in conjunction with order and stock information to determine a production plan.

Product planning means determining a production plan, but it can also mean determining a supply plan for that product in addition to the production plan.

According to an example, the input unit is configured to provide the processing unit with a production run schedule. The production run schedule comprises a plurality of dates extending into the future when product production is possible. Determination of the production plan then comprises utilisation of the production run schedule.

In other words, the production plan can take into account the actual days when production is possible.

According to an example, when the shipped orders added to the open orders is equal to or greater than the total forecast demand number the open demand is determined as the open orders.

According to an example, determination of the open demand comprises a subtraction of the shipped orders from the total forecast demand number.

According to an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open demand comprises a summation of a plurality of sub-open demand extending over the plurality of future dates, wherein the sub-open demand for a future date is the sub-shipped order for that date subtracted from the sub-forecast demand number for that date.

According to an example, when shipped orders added to the open orders is less than the total forecast demand number, determination of the open demand comprises a determination of an open forecast, wherein determination of the open forecast comprises a subtraction of the shipped orders and the open orders from the total forecast demand number.

According to an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open orders comprises a summation of a plurality of sub-open orders extending over the plurality of future dates, and wherein the open forecast comprises a summation of a plurality of sub-open forecasts extending over the plurality of future dates, wherein a sub-open forecast for a future date is the sub-shipped order summed with the sub-open order for that date subtracted from the sub-forecast demand number for that date, and wherein the open forecast is equal to a redistributed open forecast that comprises a summation of a plurality of sub-redistributed open forecasts extending over the plurality of future dates, and wherein the sub-open demand for a date equals the sub-open order for that date added to the sub-redistributed open forecast for that date.

In this way, even when a demand number of product having already been shipped for receipt on a particular date is greater than an order demand number or forecast demand number for receipt on that particular date, production can still be planned in order that the production facility does not lie idle, by re-organising production planning slightly. To put this another way, an open demand for a particular day could be negative, but by redistributing the open forecast the open demand can be made always to be greater than or equal to zero.

According to an example, the open orders and the total forecast demand number relate to a plurality of delivery zones having a plurality of different delivery times. Each delivery zone has a different delivery time.

In this manner, the production plan can take into account how long it will take to deliver the product to customers, thereby enabling product to be ready for shipping at the optimum time taking into account various delivery times.

In an example, a delivery time for a delivery zone depends upon the day the product is scheduled to be received (determined from the forecast) - thus for example takes into account if delivery is to occur during the week or extends over a weekend including a Sunday, and/or extends over a public holiday and/or extends over a day when there will be a postal or delivery strike in which case the delivery time can be longer. Thus, in an example the delivery time is calculated for each possible day of the product to be received by a receiver in a delivery zone.

According to an example, the processing unit is configured to determine a supply plan of product to the plurality of delivery zones, the determination comprising utilisation of the open demand and stock level.

In this way, production can take into account how long it will take to deliver the perishable product to different receivers around the world within an optimised supply plan, thus also enabling better production planning.

In an example, the output unit is configured to output the supply plan.

According to an example, the product has an associated shelf life, and wherein determination of the supply plan comprises utilisation of the shelf life - in terms of the duration of the shelf life and optionally the temporal profile of the duration of the shelf life.

In this manner, product supply can take into account the lifetime of the product, with the product supply plan then being able to influence the production plan.

According to an example, the product has a level of efficacy that varies with time. Determination of the supply plan can then comprise utilisation of how the level of efficacy varies with time.

Thus, at a first time point a set amount of product can have a first level of efficacy and then at a later time point, the same set amount of product can have a second lower level of efficacy.

Thus for example, a tonne of agricultural seed at a first time point, can expect to yield a certain germination rate and lead to a certain number of mature plants. However, with time the efficacy falls, and at a second later point in time the tonne of seed will have a lower germination rate in that a smaller percentage of the seed will germinate, and lead to a lower number of mature plants. This information can be taken into account, in that some customers always require fresh seed, whilst others want a certain number of mature plants to develop from the seed they buy. Thus, taking into account how the efficacy rate of the seed varies, for example on one occasion one tonne of seed of a certain age can be delivered to a customer, whilst at a later date two tonnes of seed that is older can be sold to the customer, where the efficacy rate has halved - the customer is then also told to sow the seed at double the rate per unit area in the second situation with regard to the first.

Another example, is for a medicament that has a level of efficacy that varies with time, for example a radioactive medicament. A receiver, in this case a patient can then require a certain dosage level that could come from an amount of product of a certain age or from a larger amount of product that is older.

Thus, the supply plan can take into account how long it takes to deliver product, and also take into account how the product is aging to ensure that product is supplied correctly. This can also be used to inform production, because certain receiver requirements will be able to be met from stock, whilst other requirements will necessitate production of fresh product having a highest level of efficacy.

According to an example, the product has a half-life, with this being a duration in time over which the level of efficacy of the product halves.

According to an example, the input unit is configured to provide the processing unit with at least one product receiving factor of receivers of the product. Determination of the supply plan can then comprise utilisation of the at least one product receiving factor of receivers.

This enables, product to be delivered to receivers taking into account how much they will need to receive, that can take into account how the efficacy level of the product varies and delivery timescales.

According to an example, the at least one product receiving factor of receivers of the product comprises at least one body weight of a receiver in kilograms.

Thus for example, taking the example of a medicament, a receiver (patient or the hospital receiving the medicament in order treat the patient) may need to take a quantity of active medicament that varies with their weight. Or different farmers can require different quantities of seed. By taking into account, the product can be effectively supplied, and this can also take into account if necessary a level of efficacy of the product that varies with time.

According to an example, the processing unit is configured to determine for each delivery zone a characteristic weight distribution for receivers based on data provided from the input unit. The at least one receiving factor of receivers of the product can then comprise the characteristic weight distributions in the plurality of deliver zones.

Thus, the supply of product can take into account accurate weight distributions of receivers, for examples patients who will take a certain amount of medicament that can vary with their weight. This enables the supply of product to different territories to take into account not only how long it takes to arrive, but enables effective supply and indeed production to account for the weight distribution of the receivers. In this manner, differences between the population of North American receivers and those in Japan can be taken into account when supplying, and indeed producing product.

According to an example, the at least one product receiving factor comprises an amount of seed a receiver wants to purchase.

According to an example, determination of the supply plan comprises matching the levels of efficacy of at least some of the products held in stock with the at least one product receiving factor of receivers of the product for receivers comprised within the open demand.

According to an example, the matching comprises identifying two separate products held in stock that have a combined efficacy that matches a receiving factor of a receiver of the product.

According to an example, determination of the production plan comprises utilization of the supply plan.

In this way, if it is determined that product in stock can not be used to fulfil an order, whether open or forecasted requiring that stock will have to be discarded, this can be taken into account in the production planning with more product then having to be produced.

Thus, determination of the production plan, can be an iterative process.

In an example, determination of the supply plan comprises utilization of the production plan. Thus determination of the production and supply plans can run hand-in-hand, with an optimised solution being arrived at iteratively.

According to an example, the processing unit is configured to determine the total forecast demand number. The determination comprises utilisation of at least one probability of product re-receipt.

In this manner, information in the form of one or more probabilities of a user re-receiving the product, whether they have or will have received the product on one or more occasions, is used in conjunction with orders and stock levels in determining a production plan.

According to an example, the input unit is configured to enable a user to input the at least one probability of product re-receipt. The input unit is configured also to provide the processing unit with the at least one probability of product re-receipt.

According to an example, the input unit is configured to provide the processing unit with information relating to historical product receipt. The processing unit is configured to determine the at least one probability of product re-receipt on the basis of the information relating to the historical product receipt.

According to an example, the historical products relate to products being received by one or more receivers on one or more occasions.

In other words, historical information on the probability of a receiver having received the product once them receiving the product a second time is used to predict the forecast. Similarly, the probability that a receiver who has received the product twice, three times, four times, five times, n times, will receive the product three times, four times, five times, six times, n+1 times is used to predict the forecast of product receipt.

According to an example, the processing unit is configured to determine a temporal receipt distribution extending into the future. The determination comprises utilization of the information relating to the historical product receipt.

In this manner, rather than having only a forecasted quantity of product to be received within a time period, that time period can be split into shorter time periods, even on a day basis, and the quantity of product predicted to be received at a higher temporal degree of fidelity can be provided.

According to an example, determination of the receipt distribution comprises a determination of a probability of product receipt for different days of the week.

In other words, an understanding of what days of the week the product is generally received can be used in demand forecasting prediction, thereby provided a degree of fidelity that can be utilized in production planning of products that have a short shelf-life for example.

According to an example, the input unit is configured to enable a user to input information relating to at least one period of time in the future when product receipt will not occur. The input unit is configured also to provide the processing unit with the information relating to at least one period of time in the future when product receipt will not occur. Determination of the receipt distribution can then comprise utilization of the information relating to at least one period of time in the future when product receipt will not occur.

In this way, the forecast can be provided at a level of fidelity that can use historical data to determine an expected distribution of receipt, that then takes into account known information relating to when receipt is predicted not to occur. This enables product demand to be better predicted at a fidelity level of short periods of time, and even at a daily basis, providing a forecast that can be better used for all aspects of production planning for example, Thus, it can be known that a hospital will treat patients only on certain days of the week, and require a medicament just before treatment for example on the same day of treatment, and this information can be used as detailed above. Similarly, a farmer may wish to receive seed and immediately sow that seed, but only sows seeds at certain times.

In an example, the at least one period when product receipt will not occur comprises one or more bank holidays.

In an example, the at least one period when product receipt will not occur comprises one or more Sundays.

In an example, the at least one period when product receipt will not occur comprises one or more weekends.

In an example, the at least one period when product receipt will not occur comprises one or more days when strike and/or industrial action is known or predicted to occur.

According to an example, the input unit is configured to provide the processing unit with a first demand number of a product to be received and/or having already been received over a first period of time. The first demand number of the product comprises a second demand number of the product to be received and/or having already been received by a first plurality of receivers who have previous to the first period of time not received the product, i.e., this could be a farmer who has not yet received this seed from the grower or could be a patient who has not yet received this medicament. The first demand number of the product also comprises a third demand number of the product to be received and/or having already been received by a second plurality of receivers who have previous to the first period of time received the product on one or more occasions. The total forecast demand number comprises a first sub-total forecast demand number of the product to be received over a second period of time subsequent to the first period of time. The second period of time is in the future. The processing unit is configured to determine the first sub-total forecast demand number. The determination of the first sub-total forecast demand number comprises utilization of the at least one probability of product re-receipt. The determination of the first sub-total forecast demand number also comprises a determination of a first forecast demand number of the product to be received by a proportion of the first plurality of receivers. The determination of the first forecast demand number comprises a multiplication of the second demand number of the product with a probability of product re-receipt for a receiver having received the product on only one occasion. Determination of the first sub-total forecast demand number also comprises determination of a second forecast demand number of the product to be received by a proportion of the second plurality of receivers. The determination of the second forecast demand number comprises at least one multiplication of the third demand number of the product with at least one probability of product re-receipt for a receiver having received the product on at least two occasions.

In this manner, information in the form of one or more probabilities of a user re-receiving the product, whether they have or will have received the product on one or more occasions, is used in conjunction with information relating to product received by receivers who have already received the product in order to determine product forecast information that can also take into account first time receivers.

Thus, the second demand number of the product relating to the first plurality of receivers can relate to orders that have already been received and orders that have been received and the product already received.

This provides a forecast of product receipt (i.e., product that is predicted to need to be received) going into the future, that can be used for planning of production, planning of storing, planning of delivery, of product, providing for increased efficiency, optimised production of product to match forecast, minimisation of storage facilities, and reduced wastage of products that have a limited shelf-life.

In an example, the first period of time is a week.

In an example, the first period of time is a fortnight.

In an example, the first period of time is four weeks.

In an example, the first period of time is a month.

In an example, the second period of time is a week.

In an example, the second period of time is a fortnight.

In an example, the second period of time is four weeks.

In an example, the second period of time is five weeks.

In an example, the second period of time is six weeks.

In an example, the second period of time is seven weeks.

In an example, the second period of time is eight weeks.

In an example, the second period of time is nine weeks.

In an example, the second period of time is ten weeks.

In an example, the second period of time is a month.

In an example, the second period of time is two months.

In an example, the second period of time is three months.

In an example, the second period of time is four months.

In an example, the second period of time is an integer number of times larger than the first period of time.

In an example, the first period of time is in the past.

In an example, the second period of time is of the same duration as the first period of time.

In an example, the second period of time is of a longer duration that that for the first period of time.

In an example, each occasion of previous receipt occurred in a different period of time.

In an example, the third demand number of the product comprises a user provided order demand number of the product to be received and/or having already been received on one or more occasions.

In an example, the product is a quantity of seeds.

In an example, the product is a medicinal product.

In an example, a particular example of the product has a shelf life that is shorter than the second period of time.

In an example, a particular example of the product has a level of efficacy that varies with time.

In an example, a particular example of the product can be characterised by a half-life, with this being a duration in time over which a level of efficacy of the product halves.

In an example, the product is radioactive.

In an example, the product comprises radium.

In an example, the product comprises radioactive iodine.

In an example, the product is a quantity of seed.

In an example, the determination of the total forecast demand number comprises at least one rounding process. In this way, an integer number can always be generated.

In an example, the at least one probability of product re-receipt comprises a probability that a receiver having received the product only once will receive the product for a second time.

In an example, the at least one probability of product re-receipt comprises a probability that a receiver having received the product only twice will receive the product for a third time.

In an example, the at least one probability of product re-receipt comprises a probability that a receiver having received the product only three times will receive the product for a fourth time.

In an example, the at least one probability of product re-receipt comprises a probability that a receiver having received the product only n times will receive the product for an n+1 time.

According to an example, the third demand number of the product comprises a fourth demand number of the product, and the second plurality of receivers comprises a third plurality of receivers who have previous to the first period of time received the product on only one occasion. The fourth demand number of the product is a demand number of the product to be received and/or having already been received by the third plurality of receivers. Determination of the second forecast demand number comprises determination of a third forecast demand number of the product to be received by a proportion of the third plurality of receivers. Determination of the third forecast demand number also comprises a multiplication of the fourth demand number of the product with a probability of product re-receipt for a receiver having received the product on only two occasions.

According to an example, the third demand number of the product comprises a fifth demand number of the product, wherein the second plurality of receivers comprises a fourth plurality of receivers who have previous to the first period of time received the product on at least two occasions. The fifth demand number of the product is a demand number of the product to be received and/or having already been received by the fourth plurality of receivers. Determination of the second forecast demand number comprises determination of a fourth forecast demand number of the product to be received by a proportion of the fourth plurality of receivers. Determination of the fourth forecast demand number comprises at least one multiplication of the fifth demand number of the product with at least one probability of product re-receipt for a receiver having received the product on at least three occasions.

According to an example, the fifth demand number of the product comprises a sixth demand number of the product, and the fourth plurality of receivers comprises a fifth plurality of receivers who have previous to the first period of time received the product on only two occasions. The sixth demand number of the product is a demand number of the product to be received and/or having already been received by the fifth plurality of receivers. Determination of the fourth forecast demand number comprises determination of a fifth forecast demand number of the product to be received by a proportion of the fifth plurality of receivers. Determination of the fifth forecast demand number comprises a multiplication of the sixth demand number of the product with a probability of product re-receipt for a receiver having received the product on only three occasions.

According to an example, the fifth demand number of the product comprises a seventh demand number of the product, wherein the fourth plurality of receivers comprises a sixth plurality of receivers who have previous to the first period of time received the product on at least three occasions. The seventh demand number of the product is a demand number of the product to be received and/or having already been received by the sixth plurality of receivers. Determination of the fourth forecast demand number comprises determination of a sixth forecast demand number of the product to be received by a proportion of the sixth plurality of receivers. Determination of the sixth forecast demand number comprises at least one multiplication of the seventh demand number of the product with at least one probability of product re-receipt for a receiver having received the product on at least four occasions.

According to an example, the total forecast demand number comprises a second sub-total forecast demand number of the product to be received over a third period of time subsequent to the second period of time. The processing unit is configured to determine the second sub-total forecast demand number. The determination of the second sub-total forecast demand number comprises utilization of the first sub-total forecast demand number of the product to be received over the second period of time and at least one probability of product re-receipt that does not include the probability of product re-receipt for a receiver having received the product on only one occasion.

In an example, the second forecast demand number of the product comprises a user provided order demand number of the product to be received and/or having already been received for the first time by one or more receivers multiplied by the probability of product re-receipt for a receiver having received the product on only one occasion.

In an example, the second forecast demand number of the product comprises a user provided forecast demand number of the product to be received for the first time by one or more receivers multiplied by the probability of product re-receipt for a receiver having received the product on only one occasion.

In other words, the forecast can be modelled in terms of a Markov Chain, where the modelling process moves from one state to the next state (from time period to time period into the future) and where the forecast for subsequent time periods depends on the forecast and actual demand/orders for a previous time periods, thereby information about actual receipt (such as medicament treatments) is used for a past period such as two weeks ago to predict the demand (e.g. for treatment) in the future, such as two weeks in the future. To put this another way, a stochastic model allows the modelling of the re-receipt of receivers, depending upon the current demand number of product being received.

In an example, the third period of time is a week.

In an example, the third period of time is a fortnight.

In an example, the third period of time is four weeks.

In an example, the third period of time is a month.

In an example, the third period of time is of the same duration as the first period of time.

According to an example, determination of the second sub-total forecast demand number comprises a determination of a first additional forecast demand number. Determination of the first additional forecast demand number comprises a multiplication of the first forecast demand number with a probability of product re-receipt for a receiver having received the product on only two occasions. Determination of the second sub-total forecast demand number comprises a determination of a second additional forecast demand number. Determination of the second additional forecast demand number comprises at least one multiplication of the second forecast demand number with at least one probability of product re-receipt for a receiver having received the product on at least three occasions.

According to an example, the second additional forecast demand number comprises a third additional forecast demand number. Determination of the third additional forecast demand number comprises a multiplication of the third forecast demand number with a probability of product re-receipt for a receiver having received the product on only three occasions.

According to an example, the second additional forecast demand number comprises a fourth additional forecast demand number. Determination of the fourth additional forecast demand number comprises at least one multiplication of the fourth forecast demand number with at least one probability of product re-receipt for a receiver having received the product on at least four occasions.

According to an example, the second additional forecast demand number comprises a fifth additional forecast demand number. Determination of the fifth additional forecast demand number comprises a multiplication of the fifth forecast demand number with a probability of product re-receipt for a receiver having received the product on only four occasions.

According to an example, the second additional forecast demand number comprises a sixth additional forecast demand number. Determination of the sixth additional forecast demand number comprises at least one multiplication of the sixth forecast demand number with at least one probability of product re-receipt for a receiver having received the product on at least five occasions.

According to an example, the second demand number of the product comprises a user provided order demand number of the product to be received and/or having already been received for the first time by one or more receivers.

According to an example, the second demand number of the product comprises a user provided forecast demand number of the product to be received for the first time by one or more receivers.

Fig. 4 shows an example of a method for product planning 400 in its basic steps, where optional method steps are shown in dashed lines. The method 400 comprises:

in a providing step 410, also referred to as step A), providing a processing unit with a plurality of orders of a product, wherein the plurality of orders is formed from open orders and shipped orders;

in a providing step 420, also referred to as step B), providing the processing unit with a stock level of the product held in stock;

in a determining step 430, also referred to as step C), determining by the processing unit an open demand of the product to be received, wherein the determination comprises utilisation of the shipped orders, open orders and a total forecast demand number of the product to be received;

in a determining step 440, also referred to as step D), determining by the processing unit a net demand of the product to be received, wherein the determination comprises utilisation of the open demand and the stock level; and

in a determining step 450, also referred to as step F), determining by the processing unit a production plan, wherein the determination comprises utilisation of the net demand.

In an example, the method comprises providing the processing unit with a production run schedule, the production run schedule comprising a plurality of dates extending into the future when product production is possible; and wherein step F) comprises utilisation of the production run schedule.

In an example, when shipped orders added to the open orders is equal to or greater than the total forecast demand number, in step C) the open demand is determined as the open orders.

In an example, step C) comprises a subtraction of the shipped orders from the total forecast demand number.

In an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open demand comprises a summation of a plurality of sub-open demand extending over the plurality of future dates, wherein the sub-open demand for a future date is the sub-shipped order for that date subtracted from the sub-forecast demand number for that date.

In an example, when shipped orders added to the open orders is less than the total forecast demand number, step C) comprises determining an open forecast, wherein determining the open forecast comprises subtracting the shipped orders and the open orders from the total forecast demand number.

In an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open orders comprises a summation of a plurality of sub-open orders extending over the plurality of future dates, and wherein the open forecast comprises a summation of a plurality of sub-open forecasts extending over the plurality of future dates, wherein a sub-open forecast for a future date is the sub-shipped order summed with the sub-open order for that date subtracted from the sub-forecast demand number for that date, and wherein the open forecast is equal to a redistributed open forecast that comprises a summation of a plurality of sub-redistributed open forecasts extending over the plurality of future dates, and wherein step C) comprises determining a sub-open demand for a date of the plurality of future dates by adding the sub-open order for that date to the sub-redistributed open forecast for that date.

In an example, the open orders and the total forecast demand number relate to a plurality of delivery zones having a plurality of different delivery times. Each delivery zone has a different delivery time.

In an example, the method comprises step E), determining 460 by the processing unit a supply plan of product to the plurality of delivery zones, the determination comprising utilisation of the open demand and stock level.

In an example, the product has an associated shelf life, and wherein step E) comprises utilisation of the shelf life.

In an example, the product has a level of efficacy that varies with time, and wherein step E) comprises utilisation of how the level of efficacy varies with time.

In an example, the product has a half-life, with this being a duration in time over which the level of efficacy of the product halves.

In an example, the method comprises providing the processing unit with at least one product receiving factor of receivers of the product, and wherein step E) comprises utilisation of the at least one product receiving factor of receivers.

In an example, the at least one product receiving factor of receivers of the product comprises at least one body weight of a receiver in kilograms.

In an example, the method comprise providing the processing unit with data relating to the weight of receivers, and determining by the processing unit for each delivery zone a characteristic weight distribution for receivers based on the data relating to the weight of receivers. The at least one receiving factor of receivers of the product can then comprise the characteristic weight distributions in the plurality of delivery zones.

In an example, the at least one product receiving factor comprises an amount of seed a receiver wants to purchase.

In an example, step E) comprises matching the levels of efficacy of at least some of the products held in stock with the at least one product receiving factor of receivers of the product for receivers comprised within the open demand.

In an example, the matching comprises identifying two separate products held in stock that have a combined efficacy that matches a receiving factor of a receiver of the product.

In an example, step F) comprises utilization of the supply plan.

In an example, the method comprises determining by the processing unit the total forecast demand number. The determination comprises utilisation of at least one probability of product re-receipt.

In an example, the method comprises a user inputting via an input unit the at least one probability of product re-receipt. The input unit provides the processing unit with the at least one probability of product re-receipt.

In an example, the method comprises inputting via an input unit information relating to historical product receipt. The input unit provides the processing unit with the information relating to historical product receipt. The processing unit determines the at least one probability of product re-receipt on the basis of the information relating to the historical product receipt.

In an example, the historical products relate to products being received by one or more receivers on one or more occasions.

In an example, the method comprises the processing unit determining a temporal receipt distribution extending into the future. The determination comprises utilization of the information relating to the historical product receipt.

In an example, determination of the receipt distribution comprises a determination of a probability of product receipt for different days of the week.

In an example, the method comprises a user inputting via an input unit information relating to at least one period of time in the future when product receipt will not occur. The input unit provides the processing unit with the information relating to the at least one period of time in the future when product receipt will not occur. Determination of the receipt distribution then comprises utilization of the information relating to the at least one period of time in the future when product receipt will not occur.

In an example, the method comprises the input unit providing the processing unit with a first demand number of a product to be received and/or having already been received over a first period of time. The first demand number of the product comprises a second demand number of the product to be received and/or having already been received by a first plurality of receivers who have previous to the first period of time not received the product. The first demand number of the product also comprises a third demand number of the product to be received and/or having already been received by a second plurality of receivers who have previous to the first period of time received the product on one or more occasions. The total forecast demand number comprises a first sub-total forecast demand number of the product to be received over a second period of time subsequent to the first period of time, wherein the second period of time is in the future. The processing unit determines the first sub-total forecast demand number, wherein the determination comprises utilization of the at least one probability of product re-receipt. Determination of the first sub-total forecast demand number also comprises a determination of a first forecast demand number of the product to be received by a proportion of the first plurality of receivers. The determination of the first forecast demand number comprises a multiplication of the second demand number of the product with a probability of product re-receipt for a receiver having received the product on only one occasion. Determination of the first sub-total forecast demand number also comprises a determination of a second forecast demand number of the product to be received by a proportion of the second plurality of receivers. The determination of the second forecast demand number comprises at least one multiplication of the third demand number of the product with at least one probability of product re-receipt for a receiver having received the product on at least two occasions.

In an example, the third demand number of the product comprises a fourth demand number of the product, and the second plurality of receivers comprises a third plurality of receivers who have previous to the first period of time received the product on only one occasion. The fourth demand number of the product is a demand number of the product to be received and/or having already been received by the third plurality of receivers. Determination of the second forecast number comprises determination of a third forecast demand number of the product to be received by a proportion of the third plurality of receivers. Determination of the third forecast demand number comprises a multiplication of the fourth demand number of the product with a probability of product re-receipt for a receiver having received the product on only two occasions.

In an example, the third demand number of the product comprises a fifth demand number of the product, wherein the second plurality of receivers comprises a fourth plurality of receivers who have previous to the first period of time received the product on at least two occasions. The fifth demand number of the product is a demand number of the product to be received and/or having already been received by the fourth plurality of receivers. Determination of the second forecast demand number comprises a determination of a fourth forecast demand number of the product to be received by a proportion of the fourth plurality of receivers. Determination of the fourth forecast demand number comprises at least one multiplication of the fifth demand number of the product with at least one probability of product re-receipt for a receiver having received the product on at least three occasions.

In an example, the fifth demand number of the product comprises a sixth demand number of the product, and the fourth plurality of receivers comprises a fifth plurality of receivers who have previous to the first period of time received the product on only two occasions. The sixth demand number of the product is a demand number of the product to be received and/or having already been received by the fifth plurality of receivers. Determination of the fourth forecast demand number comprises determination of a fifth forecast demand number of the product to be received by a proportion of the fifth plurality of receivers. Determination of the fifth forecast demand number comprises a multiplication of the sixth demand number of the product with a probability of product re-receipt for a receiver having received the product on only three occasions.

In an example, the fifth demand number of the product comprises a seventh demand number of the product, wherein the fourth plurality of receivers comprises a sixth plurality of receivers who have previous to the first period of time received the product on at least three occasions. The seventh demand number of the product is a demand number of the product to be received and/or having already been received by the sixth plurality of receivers. Determination of the fourth forecast demand number comprises a determination of a sixth forecast demand number of the product to be received by a proportion of the sixth plurality of receivers. Determination of the sixth forecast demand number comprises at least one multiplication of the seventh demand number of the product with at least one probability of product re-receipt for a receiver having received the product on at least four occasions.

In an example, the total forecast demand number comprises a second sub-total forecast demand number of the product to be received over a third period of time subsequent to the second period of time. The processing unit determines the second sub-total forecast demand number. The determination comprises utilization of the first sub-total forecast demand number of the product to be received over the second period of time and at least one probability of product re-receipt that does not include the probability of product re-receipt for a receiver having received the product on only one occasion.

In an example, the second forecast demand number of the product comprises a user provided order demand number of the product to be received and/or having already been received for the first time by one or more receivers multiplied by the probability of product re-receipt for a receiver having received the product on only one occasion.

In an example, the second forecast demand number of the product comprises a user provided forecast demand number of the product to be received for the first time by one or more receivers multiplied by the probability of product re-receipt for a receiver having received the product on only one occasion.

In an example, determination of the second sub-total forecast demand number comprises a determination of a first additional forecast demand number. Determination of the first additional forecast demand number comprises a multiplication of the first forecast demand number with a probability of product re-receipt for a receiver having received the product on only two occasions. Determination of the second sub-total forecast demand number comprises a determination of a second additional forecast demand number. Determination of the second additional forecast demand number comprises at least one multiplication of the second forecast demand number with at least one probability of product re-receipt for a receiver having received the product on at least three occasions.

In an example, the second additional forecast demand number comprises a third additional forecast demand number. Determination of the third additional forecast demand number comprises a multiplication of the third forecast demand number with a probability of product re-receipt for a receiver having received the product on only three occasions.

In an example, the second additional forecast demand number comprises a fourth additional forecast demand number. Determination of the fourth additional forecast demand number comprises at least one multiplication of the fourth forecast demand number with at least one probability of product re-receipt for a receiver having received the product on at least four occasions.

In an example, the second additional forecast demand number comprises a fifth additional forecast demand number. Determination of the fifth additional forecast demand number comprises a multiplication of the fifth forecast demand number with a probability of product re-receipt for a receiver having received the product on only four occasions.

In an example, the second additional forecast demand number comprises a sixth additional forecast demand number. Determination of the sixth additional forecast demand number comprises at least one multiplication of the sixth forecast demand number with at least one probability of product re-receipt for a receiver having received the product on at least five occasions.

In an example, the second demand number of the product comprises a user provided order demand number of the product to be received and/or having already been received for the first time by one or more receivers.

In an example, the second demand number of the product comprises a user provided forecast demand number of the product to be received for the first time by one or more receivers.

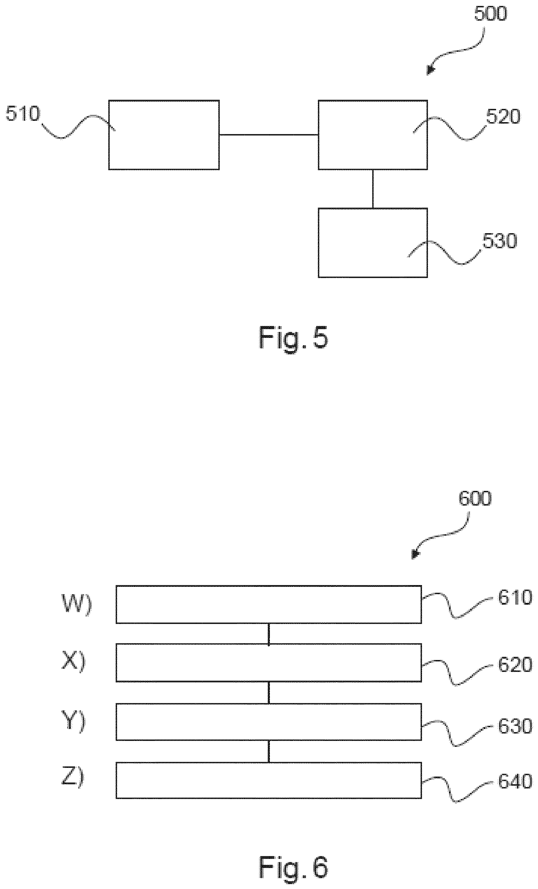

Fig. 5 shows an example of a product supply apparatus 500 for a perishable product. The apparatus 500 comprises an input unit 510, a processing unit 520, and an output unit 530. The input unit is configured to provide the processing unit with a plurality of orders of a product. The plurality of orders is formed from open orders and shipped orders. The input unit is configured also to provide the processing unit with a stock level of the product held in stock. The processing unit is configured to determine an open demand of the product to be received. The determination of the open demand comprises utilisation of the shipped orders, open orders and a total forecast demand number of the product to be received. The processing unit is configured also to determine a product supply plan. The determination of the product supply plan comprises utilisation of the open demand and the stock level. The output unit is configured to output the supply plan.

Thus, demand forecasting information is used in conjunction with order and stock information to determine a supply plan.

Product supply means determining a supply plan, but it can also mean determining a production plan for that product in addition to the supply plan.

According to an example, the open orders and the total forecast demand number relate to a plurality of delivery zones having a plurality of different delivery times. Each delivery zone has a different delivery time.

In this manner, the supply plan can take into account how long it will take to deliver the product to customers, thereby enabling product to be ready for shipping at the optimum time taking into account various delivery times.

In an example, a delivery time for a delivery zone depends upon the day the product is scheduled to be received (determined from the forecast) - thus for example takes into account if delivery is to occur during the week or extends over a weekend including a Sunday, and/or extends over a public holiday and/or extends over a day when there will be a postal or delivery strike in which case the delivery time can be longer. Thus, in an example the delivery time is calculated for each possible day of the product to be received by a receiver in a delivery zone.

According to an example, the processing unit is configured to determine the supply plan of product to the plurality of delivery zones.

In this way, the supply plan can take into account how long it will take to deliver the perishable product to different receivers around the world, enabling better supply planning that can also feed into how to plan production runs.

According to an example, the product has an associated shelf life, and determination of the supply plan comprises utilisation of the shelf life.

In this manner, product supply can take into account the lifetime of the product, with the product supply plan then being able to influence the production plan.

According to an example, the product has a level of efficacy that varies with time. Determination of the supply plan comprises utilisation of how the level of efficacy varies with time.

In others words, the product has a level of efficacy that may require more or less of the product to be supplied to specific receivers, that can also vary depending upon how long it takes to deliver. By taking this into account, better supply planning is enabled, which can also feed into production planning activities.

According to an example, the product has a half-life, with this being a duration in time over which the level of efficacy of the product halves.

According to an example, the input unit is configured to provide the processing unit with at least one product receiving factor of receivers of the product. Determination of the supply plan can then comprise utilisation of the at least one product receiving factor of receivers.

This enables, product to be delivered to receivers taking into account how much they will consume, that can take into account how the efficacy level of the product varies and delivery timescales.

According to an example, the at least one product receiving factor comprises at least one body weight of a receiver in kilograms.

According to an example, the processing unit is configured to determine for each delivery zone a characteristic weight distribution for receivers based on data provided from the input unit. The at least one receiving factor of receivers of the product can then comprise the characteristic weight distributions in the plurality of deliver zones.

According to an example, the at least one product receiving factor comprises an amount of seed a receiver wants to purchase or wants to receive.

According to an example, determination of the supply plan comprises matching the levels of efficacy of at least some of the products held in stock with the at least one product receiving factor of receivers of the product for receivers comprised within the the open demand.

In other words, it is determined what product in stock can be delivered to different receivers from stock, where those receivers can have various product demands, and where the time taken to deliver the product may also need to be taken into account, along with an understanding of how the efficacy of the product may be varying in order to inform the supply plan. This then means that product held in stock can be supplied to the optimum receivers for that product, taking into account all these factors, thereby minimising wastage of stock, and also feeding into production planning, such that only the minimum quantities need to be produced.

According to an example, the matching comprises identifying two separate products held in stock that have a combined efficacy that matches a receiving factor of a receiver of the product.

According to an example, the processing unit is configured to determine a net demand of the product to be received, The determination comprises utilisation of the open demand and the stock level. The processing unit is configured also to determine a production plan, wherein the determination comprises utilization of the net demand.

In an example, the output unit is configured to output the production plan.

According to an example, the input unit is configured to provide the processing unit with a production run schedule. The production run schedule comprises a plurality of dates extending into the future when product production is possible. The determination of the production plan can then comprise utilisation of the production run schedule.

According to an example, when shipped orders added to the open orders is equal to or greater than the total forecast demand number the open demand is determined as the open orders.

According to an example, determination of the open demand comprises a subtraction of the shipped orders from the total forecast demand number.

According to an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open demand comprises a summation of a plurality of sub-open demand extending over the plurality of future dates, wherein the sub-open demand for a future date is the sub-shipped order for that date subtracted from the sub-forecast demand number for that date.

According to an example, when shipped orders added to the open orders is less than the total forecast demand number, determination of the open demand comprises a determination of an open forecast, wherein determination of the open forecast comprises a subtraction of the shipped orders and the open orders from the total forecast demand number.

According to an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open orders comprises a summation of a plurality of sub-open orders extending over the plurality of future dates, and wherein the open forecast comprises a summation of a plurality of sub-open forecasts extending over the plurality of future dates, wherein a sub-open forecast for a future date is the sub-shipped order summed with the sub-open order for that date subtracted from the sub-forecast demand number for that date, and wherein the open forecast is equal to a redistributed open forecast that comprises a summation of a plurality of sub-redistributed forecasts extending over the plurality of future dates, and wherein the sub-open demand for a date equals the sub-open order for that date added to the sub-redistributed open forecast for that date. In this way, even when a demand number of product having already been shipped for receipt on a particular date is greater than an order demand number or forecast demand number for receipt on that particular date, production can still be planned in order that the production facility does not lie idle, by re-organising production planning slightly.

According to an example, determination of the supply plan comprises utilization of the production plan.

In this way, if it is determined that product in stock can not be used to fulfil an order, whether open or forecasted requiring that stock will have to be discarded, this can be taken into account in the production planning with more product then having to be produced.

In an example, determination of the production plan comprises utilization of the supply plan.

Thus determination of the production and supply plans can run hand-in-hand, with an optimised solution being arrived at iteratively.

According to an example, the processing unit is configured to determine the total forecast demand number. The determination comprises utilisation of at least one probability of product re-receipt.

According to an example, the input unit is configured to enable a user to input the at least one probability of product re-receipt. The input unit is configured to provide the processing unit with the at least one probability of product re-receipt.

In this way, a user for example and input the required one or more probabilities of product re-receipt.

According to an example, the input unit is configured to provide the processing unit with information relating to historical product receipt. The processing unit is configured to determine the at least one probability of product re-receipt on the basis of the information relating to the historical product receipt.

According to an example, the historical products relate to products being received by one or more receivers on one or more occasions.

In other words, historical information on the probability of a receiver having received the product once them receiving the product a second time is used to predict the forecast. Similarly, the probability that a receiver who has received the product twice, three times, four times, five times, n times, will receive the product three times, four times, five times, six times, n+1 times is used to predict the forecast of product receipt. Thus, for example a user need only provide the processing unit with information relating to past sales or receipt of products or treatments using products, and the processing unit itself calculates the necessary one or more probabilities of product re-receipt.

According to an example, the processing unit is configured to determine a temporal receipt distribution extending into the future. The determination comprises utilization of the information relating to the historical product receipt.

In this manner, rather than having only a forecasted quantity of product to be received within a time period, that time period can be split into shorter time periods, even on a day basis, and the quantity of product predicted to be received at a higher temporal degree of fidelity can be provided,

According to an example, determination of the receipt distribution comprises a determination of a probability of product receipt for different days of the week.

In other words, an understanding of what days of the week the product is generally received can be used in demand forecasting prediction, thereby provided a degree of fidelity that can be utilized in production planning of products that have a short shelf-life for example.

According to an example, the input unit is configured to enable a user to input information relating to at least one period of time in the future when product receipt will not occur. The input unit is configured also to provide the processing unit with the information relating to at least one period of time in the future when product receipt will not occur. Determination of the receipt distribution can then comprise utilization of the information relating to at least one period of time in the future when product receipt will not occur.

In this way, the forecast can be provided at a level of fidelity that can use historical data to determine an expected distribution of receipt, that then takes into account known information relating to when receipt is predicted not to occur. This enables product receipt to be better predicted at a fidelity level of short periods of time, and even at a daily basis, providing a forecast that can be better used for all aspects of production planning for example,

In an example, the at least one period when product receipt will not occur comprises one or more bank holidays.

In an example, the at least one period when product receipt will not occur comprises one or more Sundays.

In an example, the at least one period when product receipt will not occur comprises one or more weekends.

In an example, the at least one period when product receipt will not occur comprises one or more days when strike and/or industrial action is known or predicted to occur.

According to an example, the input unit is configured to provide the processing unit with a first demand number of a product to be received and/or having already been received over a first period of time. The first demand number of the product comprises a second demand number of the product to be received and/or having already been received by a first plurality of receivers who have previous to the first period of time not received the product. The first demand number of the product also comprises a third demand number of the product to be received and/or having already been received by a second plurality of receivers who have previous to the first period of time received the product on one or more occasions. The total forecast demand number comprises a first sub-total forecast demand number of the product to be received over a second period of time subsequent to the first period of time, wherein the second period of time is in the future. The processing unit is configured to determine the first sub-total forecast demand number, wherein the determination comprises utilization of the at least one probability of product re-receipt. Determination of the first sub-total forecast demand number comprises a determination of a first forecast demand number of the product to be received by a proportion of the first plurality of receivers. The determination of the first forecast demand number comprises a multiplication of the second demand number of the product with a probability of product re-receipt for a receiver having received the product on only one occasion. Determination of the first sub-total forecast demand number comprises a determination of a second forecast demand number of the product to be received by a proportion of the second plurality of receivers. The determination of the second forecast demand number comprises at least one multiplication of the third demand number of the product with at least one probability of product re-receipt for a receiver having received the product on at least two occasions.

In this manner, information in the form of one or more probabilities of a user re-receiving the product, whether they have or will have received the product on one or more occasions, is used in conjunction with information relating to product received by receivers who have already received the product in order to determine product forecast information that can also take into account first time receivers.

Thus, the second demand number of the product relating to the first plurality of receivers can relate to orders that have already been received and orders that have been received and the product already received.

This provides a forecast of product receipt (a prediction of product that will need to be received) going into the future, that can be used for planning of production, planning of storing, planning of delivery, of product, providing for increased efficiency, optimised production of product to match forecast, minimisation of storage facilities, and reduced wastage of products that have a limited shelf-life.

In an example, the first period of time is a week.

In an example, the first period of time is a fortnight.

In an example, the first period of time is four weeks.

In an example, the first period of time is a month.

In an example, the second period of time is a week.

In an example, the second period of time is a fortnight.

In an example, the second period of time is four weeks.

In an example, the second period of time is five weeks.

In an example, the second period of time is six weeks.

In an example, the second period of time is seven weeks.

In an example, the second period of time is eight weeks.

In an example, the second period of time is nine weeks.

In an example, the second period of time is ten weeks.

In an example, the second period of time is a month.

In an example, the second period of time is two months.

In an example, the second period of time is three months.

In an example, the second period of time is four months.

In an example, the second period of time is an integer number of times larger than the first period of time.

In an example, the first period of time is in the past.

In an example, the second period of time is of the same duration as the first period of time.

In an example, the second period of time is of a longer duration that that for the first period of time.

In an example, each occasion of previous receipt occurred in a different period of time.

In an example, the third demand number of the product comprises a user provided order demand number of the product to be received and/or having already been received on one or more occasions.

In an example, the product is a quantity of seeds.

In an example, the product is a medicinal product.

In an example, a particular example of the product has a shelf life that is shorter than the second period of time.

In an example, a particular example of the product has a level of efficacy that varies with time.

In an example, a particular example of the product can be characterised by a half-life, with this being a duration in time over which a level of efficacy of the product halves.

In an example, the product is radioactive.

In an example, the product comprises radium.

In an example, the product comprises radioactive iodine.

In an example, the product is a quantity of seed.

In an example, the determination of the total forecast demand number comprises at least one rounding process. In this way, an integer number can always be generated.

In an example, the at least one probability of product re-receipt comprises a probability that a receiver having received the product only once will receive the product for a second time.

In an example, the at least one probability of product re-receipt comprises a probability that a receiver having received the product only twice will receive the product for a third time.

In an example, the at least one probability of product re-receipt comprises a probability that a receiver having received the product only three times will receive the product for a fourth time.

In an example, the at least one probability of product re-receipt comprises a probability that a receiver having received the product only n times will receive the product for an n+1 time.

According to an example, the third demand number of the product comprises a fourth demand number of the product, and the second plurality of receivers comprises a third plurality of receivers who have previous to the first period of time received the product on only one occasion. The fourth demand number of the product is a demand number of the product to be received and/or having already been received by the third plurality of receivers. Determination of the second forecast demand number comprises a determination of a third forecast demand number of the product to be received by a proportion of the third plurality of receivers. Determination of the third forecast demand number comprises a multiplication of the fourth demand number of the product with a probability of product re-receipt for a receiver having received the product on only two occasions.

According to an example, the third demand number of the product comprises a fifth demand number of the product, wherein the second plurality of receivers comprises a fourth plurality of receivers who have previous to the first period of time received the product on at least two occasions. The fifth demand number of the product is a demand number of the product to be received and/or having already been received by the fourth plurality of receivers. Determination of the second forecast demand number comprises a determination of a fourth forecast demand number of the product to be received by a proportion of the fourth plurality of receivers. Determination of the fourth forecast demand number comprises at least one multiplication of the fifth demand number of the product with at least one probability of product re-receipt for a receiver having received the product on at least three occasions.

According to an example, the fifth demand number of the product comprises a sixth demand number of the product, and the fourth plurality of receivers comprises a fifth plurality of receivers who have previous to the first period of time received the product on only two occasions. The sixth demand number of the product is a demand number of the product to be received and/or having already been received by the fifth plurality of receivers. Determination of the fourth forecast demand number comprises a determination of a fifth forecast demand number of the product to be received by a proportion of the fifth plurality of receivers. Determination of the fifth forecast demand number comprises a multiplication of the sixth demand number of the product with a probability of product re-receipt for a receiver having received the product on only three occasions.

According to an example, the fifth demand number of the product comprises a seventh demand number of the product, wherein the fourth plurality of receivers comprises a sixth plurality of receivers who have previous to the first period of time received the product on at least three occasions. The seventh demand number of the product is a demand number of the product to be received and/or having already been received by the sixth plurality of receivers. Determination of the fourth forecast demand number comprises a determination of a sixth forecast demand number of the product to be received by a proportion of the sixth plurality of receivers. Determination of the sixth forecast demand number comprises at least one multiplication of the seventh demand number of the product with at least one probability of product re-receipt for a receiver having received the product on at least four occasions.

According to an example, the total forecast demand number comprises a second sub-total forecast demand number of the product to be received over a third period of time subsequent to the second period of time, wherein the processing unit is configured to determine the second sub-total forecast demand number, the determination comprising utilization of the first sub-total forecast demand number of the product to be received over the second period of time and at least one probability of product re-receipt that does not include the probability of product re-receipt for a receiver having received the product on only one occasion.

In an example, the second forecast demand number of the product comprises a user provided order demand number of the product to be received and/or having already been received for the first time by one or more receivers multiplied by the probability of product re-receipt for a receiver having received the product on only one occasion.

In an example, the second forecast demand number of the product comprises a user provided forecast demand number of the product to be received for the first time by one or more receivers multiplied by the probability of product re-receipt for a receiver having received the product on only one occasion.

In other words, the forecast can be modelled in terms of a Markov Chain, where the modelling process moves from one state to the next state (from time period to time period into the future) and where the forecast for subsequent time periods depends on the forecast for a previous time periods. To put this another way, the stochastic model allows the modelling of the re-receipt of receivers, depending upon the current demand number of product being received.

In an example, the third period of time is a week.

In an example, the third period of time is a fortnight.

In an example, the third period of time is four weeks.

In an example, the third period of time is a month.

In an example, the third period of time is of the same duration as the first period of time.

According to an example, determination of the second sub-total forecast demand number comprises a determination of a first additional forecast demand number. Determination of the first additional forecast demand number comprises a multiplication of the first forecast demand number with a probability of product re-receipt for a receiver having received the product on only two occasions. Determination of the second sub-total forecast demand number comprises a determination of a second additional forecast demand number. Determination of the second additional forecast demand number comprises at least one multiplication of the second forecast demand number with at least one probability of product re-receipt for a receiver having received the product on at least three occasions.

According to an example, the second additional forecast demand number comprises a third additional forecast demand number. Determination of the third additional forecast demand number comprises a multiplication of the third forecast demand number with a probability of product re-receipt for a receiver having received the product on only three occasions.

According to an example, the second additional forecast demand number comprises a fourth additional forecast demand number. Determination of the fourth additional forecast demand number comprises at least one multiplication of the fourth forecast demand number with at least one probability of product re-receipt for a receiver having received the product on at least four occasions.

According to an example, the second additional forecast demand number comprises a fifth additional forecast demand number. Determination of the fifth additional forecast demand number comprises a multiplication of the fifth forecast demand number with a probability of product re-receipt for a receiver having received the product on only four occasions.

According to an example, the second additional forecast demand number comprises a sixth additional forecast demand number. Determination of the sixth additional forecast demand number comprises at least one multiplication of the sixth forecast demand number with at least one probability of product re-receipt for a receiver having received the product on at least five occasions.

According to an example, the second demand number of the product comprises a user provided order demand number of the product to be received and/or having already been received for the first time by one or more receivers.

According to an example, the second demand number of the product comprises a user provided forecast demand number of the product to be received for the first time by one or more receivers.

Fig. 6 shows a method for product supply 600 in its basic steps. The method 600 comprises:

in a providing step 610, also referred to as step W), providing a processing unit with a plurality of orders of a product, wherein the plurality of orders is formed from open orders and shipped orders;
in a providing step 620, also referred to as step X), providing the processing unit with a stock level of the product held in stock;

in a determining step 630, also referred to as step Y), determining by the processing unit an open demand of the product to be received, wherein the determination comprises utilisation of the shipped orders, open orders and a total forecast demand number of the product to be received; and

in a determining step 640, also referred to as step Z), determining a product supply plan, wherein the determination comprises utilisation of the open demand and the stock level.

In an example, the open orders and the total forecast demand number relate to a plurality of delivery zones having a plurality of different delivery times, wherein each delivery zone has a different delivery time.

In an example, a delivery time for a delivery zone depends upon the day the product is scheduled to be received (determined from the forecast) - thus for example takes into account if delivery is to occur during the week or extends over a weekend including a Sunday, and/or extends over a public holiday and/or extends over a day when there will be a postal or delivery strike in which case the delivery time can be longer. Thus, in an example the delivery time is calculated for each possible day of the product to be received by a receiver in a delivery zone.

In an example, the method comprises the processing unit determining the supply plan of product to the plurality of delivery zones.

In this way, supply can take into account how long it will take to deliver the perishable product to different receivers around the world, enabling better supply (and indeed production) planning.

In an example, the product has an associated shelf life, and wherein determination of the supply plan comprises utilisation of the shelf life.

In an example, the product has a level of efficacy that varies with time, and wherein determination of the supply plan comprises utilisation of how the level of efficacy varies with time.

In an example, the product has a half-life, with this being a duration in time over which the level of efficacy of the product halves.

In an example, the method comprises providing, via an input unit, the processing unit with at least one product receiving factor of receivers of the product. Determination of the supply plan then comprises utilising the at least one product receiving factor of receivers.

This enables, product to be delivered to receivers taking into account how much they will consume, that can take into account how the efficacy level of the product varies and delivery timescales.

In an example, the at least one product receiving factor comprises at least one body weight of a receiver in kilograms.

In an example, the method comprises the processing unit determining for each delivery zone a characteristic weight distribution for receivers based on data provided from the input unit. The at least one receiving factor of receivers of the product can then comprise the characteristic weight distributions in the plurality of deliver zones.

In an example, the at least one product receiving factor comprises an amount of seed a receiver wants to purchase.

In an example, determination of the supply plan comprises matching the levels of efficacy of at least some of the products held in stock with the at least one product receiving factor of receivers of the product for receivers comprised within the open demand.

In an example, the matching comprises identifying two separate products held in stock that have a combined efficacy that matches a receiving factor of a receiver of the product.

In an example, the method comprises the processing unit determining a net demand of the product to be received. The determination comprises utilisation of the open demand and the stock level. The method can then comprise the processing unit determining a production plan, wherein the determination comprises utilization of the net demand.

In an example, the method comprises providing, via an input unit, the processing unit with a production run schedule, the production run schedule comprising a plurality of dates extending into the future when product production is possible. Determination of the production plan can then comprise utilisation of the production run schedule.

In an example, when shipped orders added to the open orders is equal to or greater than the total forecast demand number, in step Y) the open demand is determined as the open orders.

In an example, determination of the open demand comprises a subtraction of the shipped orders from the total forecast demand number.

In an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open demand comprises a summation of a plurality of sub-open demand extending over the plurality of future dates, wherein the sub-open demand for a future date is the sub-shipped order for that date subtracted from the sub-forecast demand number for that date.

In an example, when shipped orders added to the open orders is less than the total forecast demand number, step Y) comprises determining an open forecast, wherein determining the open forecast comprises subtracting the shipped orders and the open orders from the total forecast demand number.

In an example, the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open orders comprises a summation of a plurality of sub-open orders extending over the plurality of future dates, and wherein the open forecast comprises a summation of a plurality of sub-open forecasts extending over the plurality of future dates, wherein a sub-open forecast for a future date is the sub-shipped order summed with the sub-open order for that date subtracted from the sub-forecast demand number for that date, and wherein the open forecast is equal to a redistributed open forecast that comprises a summation of a plurality of sub-redistributed open forecasts extending over the plurality of future dates, and wherein step Y) comprises determining a sub-open demand for a date of the plurality of future dates by adding the sub-open order for that date to the sub-redistributed open forecast for that date.

In this way, even when a demand number of product having already been shipped for receipt on a particular date is greater than an order demand number or forecast demand number for receipt on that particular date, production can still be planned in order that the production facility does not lie idle, by re-organising production planning slightly.

In an example, determination of the production plan comprises utilization of the supply plan.

In this way, if it is determined that product in stock can not be used to fulfil an order, whether open or forecasted requiring that stock will have to be discarded, this can be taken into account in the production planning with more product then having to be produced.

In an example, the method comprises the processing unit determining the total forecast demand number, the determination comprising utilisation of at least one probability of product re-receipt.

In an example, the method comprises a user inputting via an input unit the at least one probability of product re-receipt. The input unit is configured to provide the processing unit with the at least one probability of product re-receipt.

In an example, the method comprises providing an input unit with information relating to historical product receipt and providing the processing unit with the information relating to historical product receipt. The method can then comprise the processing unit determining the at least one probability of product re-receipt on the basis of the information relating to the historical product receipt.

In an example, the historical products relate to products being received by one or more receivers on one or more occasions.

In other words, historical information on the probability of a receiver having received the product once them receiving the product a second time is used to predict the forecast. Similarly, the probability that a receiver who has received the product twice, three times, four times, five times, n times, will receive the product three times, four times, five times, six times, n+1 times is used to predict the forecast of product receipt.

In an example, the method comprises the processing unit determining a temporal receipt distribution extending into the future, the determination comprising utilization of the information relating to the historical product receipt.

In this manner, rather than having only a forecasted quantity of product to be received within a time period, that time period can be split into shorter time periods, even on a day basis, and the quantity of product predicted to be received at a higher temporal degree of fidelity can be provided,

In an example, determination of the receipt distribution comprises a determination of a probability of product receipt for different days of the week.

In other words, an understanding of what days of the week the product is generally received can be used in demand forecasting prediction, thereby provided a degree of fidelity that can be utilized in production planning of products that have a short shelf-life for example.

In an example, the method comprises a user inputting via an input unit information relating to at least one period of time in the future when product receipt will not occur. The input unit provides the processing unit with the information relating to at least one period of time in the future when product receipt will not occur. Determination of the receipt distribution can then comprise utilization of the information relating to at least one period of time in the future when product receipt will not occur.

In this way, the forecast can be provided at a level of fidelity that can use historical data to determine an expected distribution of receipt, that then takes into account known information relating to when receipt is predicted not to occur. This enables product receipt to be better predicted at a fidelity level of short periods of time, and even at a daily basis, providing a forecast that can be better used for all aspects of production planning for example.

In an example, the at least one period when product receipt will not occur comprises one or more bank holidays.

In an example, the at least one period when product receipt will not occur comprises one or more Sundays.

In an example, the at least one period when product receipt will not occur comprises one or more weekends.

In an example, the at least one period when product receipt will not occur comprises one or more days when strike and/or industrial action is known or predicted to occur.

In an example, the method comprises an input unit providing the processing unit with a first demand number of a product to be received and/or having already been received over a first period of time. The first demand number of the product comprises a second demand number of the product to be received and/or having already been received by a first plurality of receivers who have previous to the first period of time not received the product. The first demand number of the product also comprises a third demand number of the product to be received and/or having already been received by a second plurality of receivers who have previous to the first period of time received the product on one or more occasions. The total forecast demand number comprises a first sub-total forecast demand number of the product to be received over a second period of time subsequent to the first period of time, wherein the second period of time is in the future. The processing unit determines the first sub-total forecast demand number, wherein the determination comprises utilization of the at least one probability of product re-receipt. Determination of the first sub-total forecast demand number comprises a determination of a first forecast demand number of the product to be received by a proportion of the first plurality of receivers. Determination of the first forecast demand number comprises a multiplication of the second demand number of the product with a probability of product re-receipt for a receiver having received the product on only one occasion. Determination of the first sub-total forecast demand number comprises determination of a second forecast number of the product to be received by a proportion of the second plurality of receivers. The determination of the second forecast demand number comprises at least one multiplication of the third demand number of the product with at least one probability of product re-receipt for a receiver having received the product on at least two occasions.

In this manner, information in the form of one or more probabilities of a user re-receiving the product, whether they have or will have received the product on one or more occasions, is used in conjunction with information relating to product received by receivers who have already received the product in order to determine product forecast information that can also take into account first time receivers.

Thus, the second demand number of the product relating to the first plurality of receivers can relate to orders that have already been received and orders that have been received and the product already received.

This provides a forecast of product receipt going into the future, that can be used for planning of supply (delivery), planning of production, planning of storing, providing for increased efficiency, optimised supply and production of product to match forecast, minimisation of storage facilities, and reduced wastage of products that have a limited shelf-life.

In an example, the first period of time is a week.

In an example, the first period of time is a fortnight.

In an example, the first period of time is four weeks.

In an example, the first period of time is a month.

In an example, the second period of time is a week.

In an example, the second period of time is a fortnight.

In an example, the second period of time is four weeks.

In an example, the second period of time is five weeks.

In an example, the second period of time is six weeks.

In an example, the second period of time is seven weeks.

In an example, the second period of time is eight weeks.

In an example, the second period of time is nine weeks.

In an example, the second period of time is ten weeks.

In an example, the second period of time is a month.

In an example, the second period of time is two months.

In an example, the second period of time is three months.

In an example, the second period of time is four months.

In an example, the second period of time is an integer number of times larger than the first period of time.

In an example, the first period of time is in the past.

In an example, the second period of time is of the same duration as the first period of time.

In an example, the second period of time is of a longer duration that that for the first period of time.

In an example, each occasion of previous receipt occurred in a different period of time.

In an example, the third demand number of the product comprises a user provided order demand number of the product to be received and/or having already been received on one or more occasions.

In an example, the product is a quantity of seeds.

In an example, the product is a medicinal product.

In an example, a particular example of the product has a shelf life that is shorter than the second period of time.

In an example, a particular example of the product has a level of efficacy that varies with time.

In an example, a particular example of the product can be characterised by a half-life, with this being a duration in time over which a level of efficacy of the product halves.

In an example, the product is radioactive.

In an example, the product comprises radium.

In an example, the product comprises radioactive iodine.

In an example, the product is a quantity of seed.

In an example, the determination of the total forecast demand number comprises at least one rounding process.

In this way, an integer number can always be generated.

In an example, the at least one probability of product re-receipt comprises a probability that a receiver having received the product only once will receive the product for a second time.

In an example, the at least one probability of product re-receipt comprises a probability that a receiver having received the product only twice will receive the product for a third time.

In an example, the at least one probability of product re-receipt comprises a probability that a receiver having received the product only three times will receive the product for a fourth time.

In an example, the at least one probability of product re-receipt comprises a probability that a receiver having received the product only n times will receive the product for an n+1 time.

In an example, the third demand number of the product comprises a fourth demand number of the product, and the second plurality of receivers comprises a third plurality of receivers who have previous to the first period of time received the product on only one occasion. The fourth demand number of the product is a demand number of the product to be received and/or having already been received by the third plurality of receivers. Determination of the second forecast demand number comprises determination of a third forecast demand number of the product to be received by a proportion of the third plurality of receivers. Determination of the third forecast demand number comprises a multiplication of the fourth demand number of the product with a probability of product re-receipt for a receiver having received the product on only two occasions.

In an example, the third demand number of the product comprises a fifth demand number of the product, wherein the second plurality of receivers comprises a fourth plurality of receivers who have previous to the first period of time received the product on at least two occasions. The fifth demand number of the product is a demand number of the product to be received and/or having already been received by the fourth plurality of receivers. Determination of the second forecast demand number comprises a determination of a fourth forecast demand number of the product to be received by a proportion of the fourth plurality of receivers. Determination of the fourth forecast demand number comprises at least one multiplication of the fifth demand number of the product with at least one probability of product re-receipt for a receiver having received the product on at least three occasions.

In an example, the fifth demand number of the product comprises a sixth demand number of the product, and the fourth plurality of receivers comprises a fifth plurality of receivers who have previous to the first period of time received the product on only two occasions. The sixth demand number of the product is a demand number of the product to be received and/or having already been received by the fifth plurality of receivers. Determination of the fourth forecast demand number comprises a determination of a fifth forecast demand number of the product to be received by a proportion of the fifth plurality of receivers. Determination of the fifth forecast demand number comprises a multiplication of the sixth demand number of the product with a probability of product re-receipt for a receiver having received the product on only three occasions.

In an example, the fifth demand number of the product comprises a seventh demand number of the product, wherein the fourth plurality of receivers comprises a sixth plurality of receivers who have previous to the first period of time received the product on at least three occasions. The seventh demand number of the product is a demand number of the product to be received and/or having already been received by the sixth plurality of receivers. Determination of the fourth forecast demand number comprises determination of a sixth forecast demand number of the product to be received by a proportion of the sixth plurality of receivers. Determination of the sixth forecast demand number comprises at least one multiplication of the seventh demand number of the product with at least one probability of product re-receipt for a receiver having received the product on at least four occasions.

In an example, the total forecast demand number comprises a second sub-total forecast demand number of the product to be received over a third period of time subsequent to the second period of time. The method then comprises the processing unit determining the second sub-total forecast demand number. The determination comprises utilizing the first sub-total forecast demand number of the product to be received over the second period of time and at least one probability of product re-receipt that does not include the probability of product re-receipt for a receiver having received the product on only one occasion.

In an example, the second forecast demand number of the product comprises a user provided order demand number of the product to be received and/or having already been received for the first time by one or more receivers multiplied by the probability of product re-receipt for a receiver having received the product on only one occasion.

In an example, the second forecast demand number of the product comprises a user provided forecast demand number of the product to be received for the first time by one or more receivers multiplied by the probability of product re-receipt for a receiver having received the product on only one occasion.

In other words, the forecast can be modelled in terms of a Markov Chain, where the modelling process moves from one state to the next state (from time period to time period into the future) and where the forecast for subsequent time periods depends on the forecast for a previous time periods. To put this another way, a stochastic model allows the modelling of the re-receipt of receivers, depending upon the current demand number of product being received.

In an example, the third period of time is a week.

In an example, the third period of time is a fortnight.

In an example, the third period of time is four weeks.

In an example, the third period of time is a month.

In an example, the third period of time is of the same duration as the first period of time.

In an example, determination of the second sub-total forecast demand number comprises a determination of a first additional forecast demand number, wherein determination of the first additional forecast demand number comprises a multiplication of the first forecast demand number with a probability of product re-receipt for a receiver having received the product on only two occasions. Determination of the second sub-total forecast demand number comprises a determination of a second additional forecast demand number. Determination of the second additional forecast demand number comprises at least one multiplication of the second forecast demand number with at least one probability of product re-receipt for a receiver having received the product on at least three occasions.

In an example, the second additional forecast demand number comprises a third additional forecast demand number. Determination of the third additional forecast demand number comprises a multiplication of the third forecast demand number with a probability of product re-receipt for a receiver having received the product on only three occasions.

In an example, the second additional forecast demand number comprises a fourth additional forecast demand number. Determination of the fourth additional forecast demand number comprises at least one multiplication of the fourth forecast demand number with at least one probability of product re-receipt for a receiver having received the product on at least four occasions.

In an example, the second additional forecast demand number comprises a fifth additional forecast demand number. Determination of the fifth additional forecast demand number comprises a multiplication of the fifth forecast demand number with a probability of product re-receipt for a receiver having received the product on only four occasions.

In an example, the second additional forecast demand number comprises a sixth additional forecast demand number. Determination of the sixth additional forecast demand number comprises at least one multiplication of the sixth forecast demand number with at least one probability of product re-receipt for a receiver having received the product on at least five occasions.

In an example, the second demand number of the product comprises a user provided order demand number of the product to be received and/or having already been received for the first time by one or more receivers.

In an example, the second demand number of the product comprises a user provided forecast demand number of the product to be received for the first time by one or more receivers.

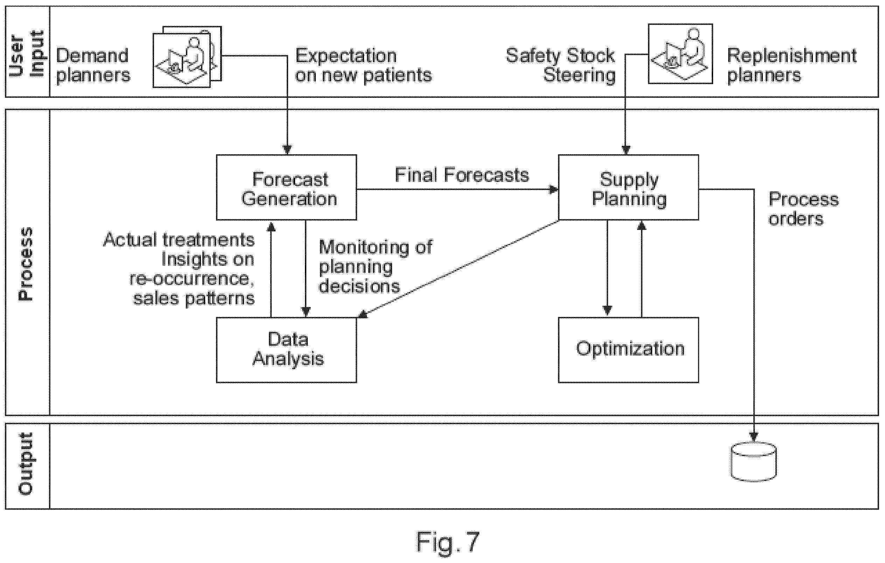

The product demand forecasting apparatus and associated method, and product supply apparatus and associated method, and product planning apparatus and associated method are now explained in further detail with respect to Figs. 7-16, relating to a specific example of demand forecasting, supply and production planning for a medicament.

The specific demand forecasting, supply planning and production planning situation described with respect to Figs. 7-16 relates to a Bayer's radioactive medicament called Xofigo. However, as made clear in the description relating to Figs- 1-6, the described demand forecasting apparatus, product supply apparatus, product planning apparatus and associated methods have utility for the demand forecasting, supply planning and production planning of a range of different products. For example, to the demand forecasting, supply and production of: other medicaments; seeds; fertilizers; insecticides and herbicides having active ingredients; and even to receiver products that have limited lifetimes such as specific models of mobile telephones that have a life time governed by how attractive they are perceived to be by receivers, and how quickly they become redundant due to newer, better models coming along, and where shops or outlets will periodically receive numbers of products from the manufacturer (for onward sale to customers). In all these situations, the apparatuses and methods as described with respect to Figs. 1-6 enable the accurate demand forecasting, supply and production of product, and the skilled person would understand that the specific situation described in relation to Figs. 7-16 can be applied more widely than that for the medicament Xofigo.

Specific cell killing can be essential for the successful treatment of a variety of diseases in mammalian subjects. Typical examples of this are in the treatment of malignant diseases such as sarcomas and carcinomas. However the selective elimination of certain cell types can also play a key role in the treatment of many other diseases, especially immunological, hyperplastic and/or other neoplastic diseases.

The most common methods of selective treatment are currently surgery, chemotherapy and external beam irradiation. Targeted endo-radionuclide therapy is, however, a promising and developing area with the potential to deliver highly cytotoxic radiation to unwanted cell types. The most common forms of radiopharmaceutical currently authorised for use in humans employ beta-emitting and/or gamma-emitting radionuclides. There has, however, been a recent surge in interest in the use of alpha-emitting radionuclides in therapy because of their potential for more specific cell killing. One alpha-emitting nuclide in particular, radium-223 ($^{223}$Ra) has proven remarkably effective, particularly for the treatment of diseases associated with the bone and bone-surface.

The radiation range of typical alpha emitters in physiological surroundings is generally less than 100 micrometers, the equivalent of only a few cell diameters. This makes these nuclei well suited for the treatment of tumours, including micrometastases, because little of the radiated energy will pass beyond the target cells and thus damage to surrounding healthy tissue might be minimised (see Feinendegen et al., Radiat Res 148:195-201 (1997)). In contrast, a beta particle has a range of 1 mm or more in water (see Wilbur, Antibody Immunocon Radiopharm 4: 85-96 (1991)).

The energy of alpha-particle radiation is high compared to beta particles, gamma rays and X-rays, typically being 5-8 MeV, or 5 to 10 times that of a beta particle and 20 or more times the energy of a gamma ray. Thus, this deposition of a large amount of energy over a very short distance gives α-radiation an exceptionally high linear energy transfer (LET), high relative biological efficacy (RBE) and low oxygen enhancement ratio (OER) compared to gamma and beta radiation (see Hall, "Radiobiology for the radiologist", Fifth edition, Lippincott Williams & Wilkins, Philadelphia PA, USA, 2000). This explains the exceptional cytotoxicity of alpha emitting radionuclides and also imposes stringent demands on the level of purity required where an isotope is to be administered internally. This is especially the case where any contaminants may also be alpha-emitters, and most particularly where long half-life alpha emitters may be present, since these can potentially cause significant damage over an extended period of time.

One radioactive decay chain leading to $^{223}$Ra, which has been used as a source for this isotope in small quantities, is indicated blow. The table shows the element, molecular weight (Mw), decay mode (mode) and Half-life (in years (y) or days (d)) for $^{223}$Ra and its two precursor isotopes. This preparation begins from $^{227}$Ac, which is itself found only in traces in uranium ores, being part of the natural decay chain originating at $^{235}$U. One ton of uranium ore contains about a tenth of a gram of actinium and thus although $^{227}$Ac is found naturally, it is more commonly made by the neutron irradiation of $^{226}$Ra in a nuclear reactor.

$^{Mw}$Element
Mode
Half-life

$^{227}$Ac
β
21.8 y

$^{227}$Th
α
18.7 d

$^{223}$Ra
α
11.4 d

It can be seen from this illustration that $^{227}$Ac, with a half-life of over 20 years, is a very dangerous potential contaminant with regard to preparing $^{223}$Ra from the above decay chain for pharmaceutical use. In particular, although $^{227}$Ac itself is a beta-emitter, its long half-life means that even very low activities represent a significant lifetime radiation exposure, and furthermore, once it decays, the resulting daughter nuclei (i.e. $^{227}$Th) generate a further 5 alpha-decays and 2 beta-decays before reaching stable $^{207}$Pb. These are illustrated in the table below:

| Nuclide | $^{227}$Th | $^{223}$Ra | $^{219}$Rn | $^{215}$Po | $^{211}$Pb | $^{211}$Bi | $^{207}$Tl | $^{207}$Pb |
|---|---|---|---|---|---|---|---|---|
| ½-life | 18.7d | 11.4d | 4.0s | 1.8ms | 36.1m | 2.2m | 4.8m | stable |
| α-energy /MeV | 6.15 | 5.64 | 6.75 | 7.39 | | 6.55 | | |
| β-energy (max)/MeV | | | | | 1.37 | | 1.42 | |
| Energy % | 17.5 | 16.0 | 19.1 | 21.0 | 3.9 | 18.6 | 4.0 | |

It is evident from the above two decay tables that more than 35 MeV of energy is deposited by one $^{227}$Ac decay chain, representing a significant toxicity risk for essentially the entire lifetime of any human subject administered with $^{227}$Ac. As a result, the content of $^{227}$Ac contaminant in $^{223}$Ra for pharmaceutical use is strictly limited to 45 Bq $^{227}$Ac in 1 MBq $^{223}$Ra. Thus for practical purposes, a method which is to provide $^{223}$Ra for pharmaceutical use should preferably provide a purity of 10 Bq $^{227}$Ac in 1 MBq $^{223}$Ra or better to ensure that this safety limit is always adhered to.

A number of studies into the purification of $^{223}$Ra have been published, primarily in environmental contexts, where the authors desire to accumulate the $^{223}$Ra from a high-volume sample so as to allow analysis of the degree of environmental contamination (e.g. Howitz et al., Reactive and Functional Polymers, 33, 25-36 (1997)).

To address this Bayer developed a production process for Xofigo ($^{223}$Ra dichloride), a production method for the generation of $^{223}$Ra that addresses issues such as yield of $^{223}$Ra, speed of the purification process, automation, minimising of wasted isotopes and corresponding production or radioactive waste or any similar issues associated with commercial-scale production. This is an improved method by which $^{223}$Ra may be generated and purified for pharmaceutical use at a purity appropriate for direct injection into human subjects.

The dose regimen for Xofigo is 50 kBq (1.35 microcurie) per kg body weight, given at 4 week intervals for 6 injections.

However, the radioactive nature of the sales product and a very short shelf-life (28 days) can lead to high scrapping cost. Supply planning for Xofigo is highly challenging and time-consuming due to the short shelf life, decaying strength, and treatment dose depending on the patient's weight. Challenges such as delivering a >99% service level and keeping scrapping cost low in a highly dynamic business environment are faced.

The product demand forecasting apparatus and associated method, product supply apparatus and associated method, and product planning apparatus and associated method developed and described here address these issues.

In brief, a digital supply chain planning solution uses SQL database, specific data model, customized algorithm and smart end-user frontend based on DeltaMaster software. The solution combines tailored data integration with SAP, advanced analysis through data analytics, planning through tailored algorithm as well as scenario based simulation. A user-friendly IT solution increases decision making speed & efficiency, enabling supply of the drug in time as well as reduction of scrapping cost. A tailored algorithm for demand forecasting as well as supply planning are developed for reduction of high scrapping cost as well as precise decision making with high-granularity, which is needed due to 28 days decaying shelf-life. Business insights and steering parameters for planning are derived through data analytics.

Supply planning for Xofigo is done within the organization of Bayer Consumer Care AG. It is a highly challenging and time-consuming task due to the radioactive nature of the product, the very short shelf-life (28 days), the decaying strength of the product over time, and the fact that the required strength/dose for the treatment depends on the weight of the patient. High cost due to scrapping is a major business problem beside the time-consuming planning process. Scrapping is driven by the short shelf-life in combination with the requirement to deliver >99% service level, but it can be caused as well by inaccuracies in planning in a highly dynamic business environment.

Prior to the development of the described demand forecasting, supply planning and production planning solution, no existing supply chain planning system was able to tackle the planning complexities of Xofigo. Before introduction of the new business solution, planning was an inefficient, time consuming and highly simplified approach using spreadsheets resulting in high manual work load, which could easily lead to non-transparent and inaccurate decisions causing lost sales and to the scrapping of product.

A quick summary of the issues being faced helps to set the scene:

Technical Problem

The supply chain planning process for the product at hand is facing several challenges: demand needs to be satisfied in a cost effective way, while maintaining very high service levels. Challenges to be considered include uncertainties with respect to demand, supply and transportation times. Up to now, no algorithm or IT solution exists to tackle these simultaneously.

The product at hand is perishable with an extremely short shelf life. Due to its radioactive nature its effectiveness decreases within few days. Consequently, when trying to find a suitable match of a particular product for a specific patient, the treatment day, the patient's weight, as well as the lead time to his location should be taken into account.

The product is administered in regular intervals. The number of treatment cycles per patient is unknown and can be estimated when generating a forecast.

When planning the product several sources of uncertainty on both the supply and demand side can be considered, as well as with respect to transportation lead times. An integrated IT solution is therefore provided to support and enhance the decision making process of manual planners.

System

The digital supply chain planning solution integrates planning and analytics side-by-side. Unlike classical enterprise systems in the supply chain area, this IT solution enables to derive business insights and steering parameters through data analytics and to immediately feed these insights into the supply and forecast planning to obtain the best possible planning accuracy. The different functions are integrated into one user-friendly frontend and one backend data model, increasing the speed of decision making. The IT solution provides tailored algorithms for precise decision making with high granularity, while allowing automatic data exchange with existing enterprise planning systems for an efficient process.

Demand Forecasting

The embedded demand forecasting module supports planners to determine a total forecast per country and day. Based on a forecast for patients being treated for the very first time and patterns derived from historical orders, the system estimates reoccurrence rates, the distribution of treatments within a week and provides a suggestion for the total forecast per country and day. The resulting forecast then can be reviewed by the planner, before being considered for subsequent planning module.

Planning

The embedded supply planning module supports planners to determine the right production quantities during upcoming weeks under all constraints to be considered, especially related to the decreasing activity of the product over time. It translates the demand, measured in number of patients to be treated, into product units to be produced on a certain day, and as such covers both supply planning and product planning. This calculation cannot be done in a simple formula, but instead an algorithm dynamically considers e.g. assumptions about patients' weights, detailed holiday calendars and times for shipping the product to the hospitals, and the possible dates to produce new batches of fresh product. The planner is supported in the decision making through what-if scenarios, and an additional optimization algorithm will help to determine the best plan under different uncertainties in demand, supply, and transportation times.
The following is a detailed description of the solution relating as it does to the specific example of demand forecasting, supply planning and production planning of Xofigo.

**1. Process and end-user perspective**

The supply chain planning solution is used by different groups of people in the organisation. Supply planners, usually based at a central headquarter location, are coordinating the supply of products across the chain from manufacturing to delivery to country organizations. Especially, they are making production decisions, aiming at maintaining a high service level, while at the same time avoiding high scrapping cost. Demand planners, usually based in the individual countries, are consolidating local information as well as their experience and market intelligence in order to come up with a forecast per day and country, especially for new patients.
Based on their input, forecasts for reoccurring patients are calculated within the Forecast Generation module. More details on this step will be provided in Section 0.
Within the Supply Planning module, final forecasts from countries are consolidated and the production volumes are determined using the algorithm. More details on this process are detailed out in Section 0.
Users are provided with views for Process Analysis to support their process monitoring through data analytics. More details are provided in Section 0.
A high level overview on the overall process and information flow can be found in Fig. 7.

**1.1 Forecast Generation**

The Forecast Generation module assists users in determining a total forecast per country and day[1] based on historical treatment patterns.
Users initiate the process by entering their (manual) forecast per country and week for new patients, i.e. patients about to receive treatment for the very first time. In order to propose a total forecast on a daily level, the Forecast Generation module first calculates a weekly forecast for reoccurring patients, before breaking the weekly forecast to a daily level. Details on the calculation steps are described herein.
1 exemplary level of aggregation for purpose of description chosen, variations in terms of regional and temporal dimensions possible
Historical treatment patterns are considered to estimate on which days of a week treatments will take place. In order to disaggregate any weekly forecast across weekdays, the system by default considers those patterns, as well as a set of exceptions in order to determine which days within a particular week are considered possible. Optionally, a user may overwrite the default settings to be applied.
In order to determine the number of reoccurring patients, the system considers historical treatment patterns and its derived characteristics and distributions. Similarly to the previous case, users may overwrite the default distributions to be applied.
Users then review the total forecast at different levels of aggregations (such as total forecast per week), and also drill down to lower levels of detail (such as forecast per day, forecast per treatment cycle). For increased transparency, users may also review the underlying calculation steps, as well as any orders already placed.
Users may update any forecast provided by the system at different levels of aggregations (per week vs per day). Depending on the level of aggregation at which forecasts will be updated, additional calculations will be triggered to update and take into account the resulting impact on forecasts on other levels of aggregation, as well as resulting consequences for future treatments. Details on the consequences of any manual input are provided in in Section **Fehler! Verweisquelle konnte nicht gefunden werden..**

Once users confirmed the total forecasts, they will be considered as in input for the Supply Planning module (as described in Section 0).

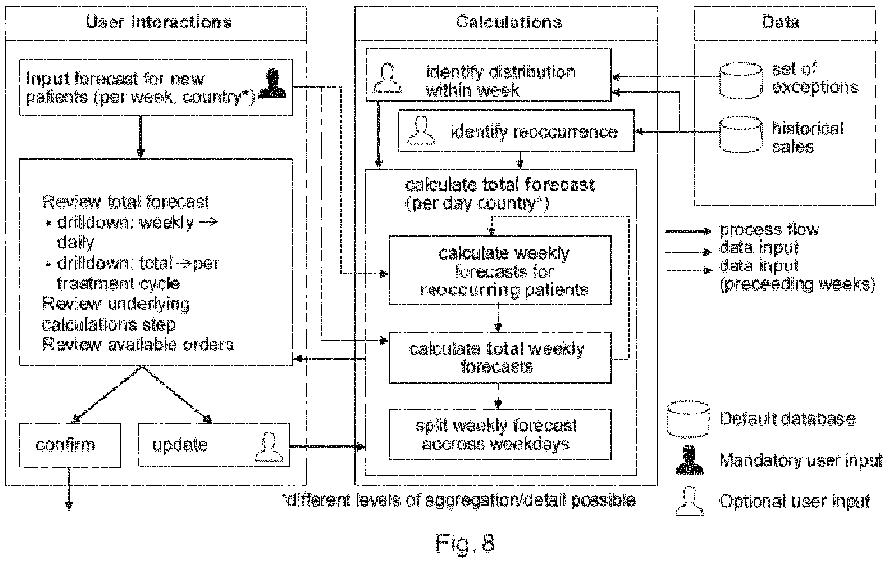

A high level overview on the Forecast Generation module from the users' point of view is provided in Fig. 8.

## 1.2 Supply Planning

The Supply Planning module assists users in determining the production quantities for the upcoming production batches.

Users initiate the module by providing possible dates when new batches could be produced during the upcoming weeks of the planning horizon. From the total forecast provided by the Forecast Generation module (see Section 0), current sales orders and current inventory position the module calculates a net demand. Based on the net demand calculation and additional inputs for safety stock requirements the system then suggests the quantities that should be produced. Details on the calculations steps are provided in Section 3.2.

In order to determine the net demand the model first determines the open demand by taking into account any open and shipped orders from the system, and especially reducing or "consuming" the forecast with orders that have been shipped already. Based on historical sales patterns the open demand is disaggregated from country level to a more granular ship-zone level, reflecting different regions within a country associated with different transportation times[2].

Optionally, a user may overwrite the default settings to be applied as well as the open demand that goes into the next calculation step.

The system takes into account the necessary lead times to relate the desired treatment day of open demand with the corresponding day the product needs to be picked and prepared for shipping at the central hub location. Standard calendars and sets of rules are used to do so. The system checks which open demand can be satisfied from the current inventory position taking into account inventory age and assumptions about patients' weight. The remaining open demand is considered as the net demand, which needs to be produced. More details on the calculation steps are provided in Section 3.2.

In order to derive the final quantities to be produced, including production of safety stock to mitigate against uncertainties, the system iteratively calculates the production quantity for a sequence of worst-case supply scenarios.

Users then review the production quantities and check the underlying calculation steps at different levels of aggregation (such as daily vs. weekly), and also drill down to lower levels of detail (such as batch level). They may also run additional what-if scenarios to analyse the impact of potential changes of supply and demand.

Users can decide to confirm the production quantities or overwrite them manually before transferring them into the supply chain planning system.

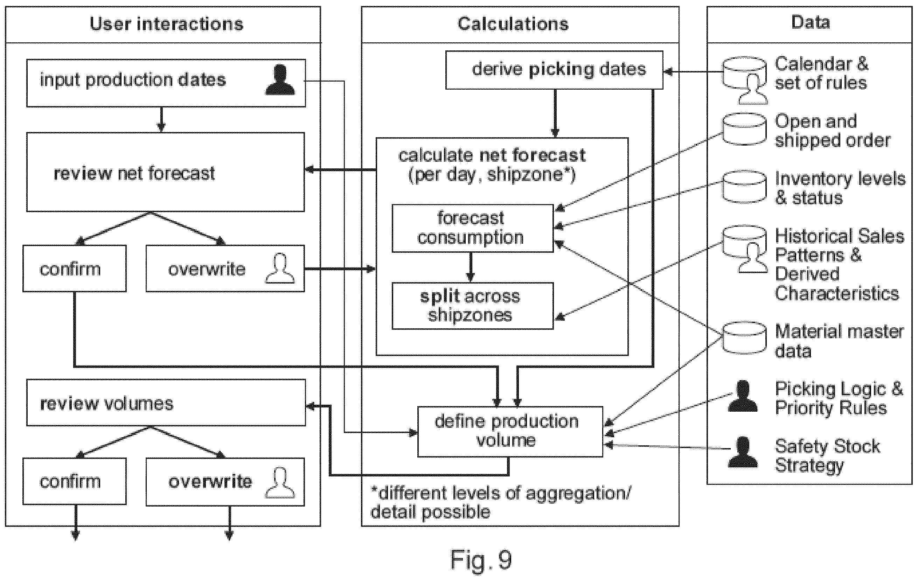

A high level overview on the Supply Planning module from the users' point of view in provided in Fig. 9.

## 1.3 Process Analysis

Users will be supported in monitoring all processes through data analytics. A selection of predefined analytical reports is made available to them in a visually appealing way to further assist them to generate insights about patients' treatment and order patterns and efficiency of product supply, for instance.

Exemplary analyses include - but are not limited to:

2 exemplary level of aggregation for purpose of description chosen, variations in terms of regional and temporal dimensions possible

- analyse the distribution of treatments across days per month, as well as any changes in the distribution on a monthly level;
- compare the split between new patients and patients being retreated on a weekly level, as well as any changes in the split week over week;
- get insights on the reoccurrence rates of patients, according to orders placed within a specified time interval;
- analyse the weight of patients and its change month over month;
- measure the percentage of production quantity which is scrapped after expiry, and whether there is a pattern changing over time.

The reports are setup in a very flexible way, allowing them to drill-down and perform various analyses at different level of aggregation.

## 2. IT System

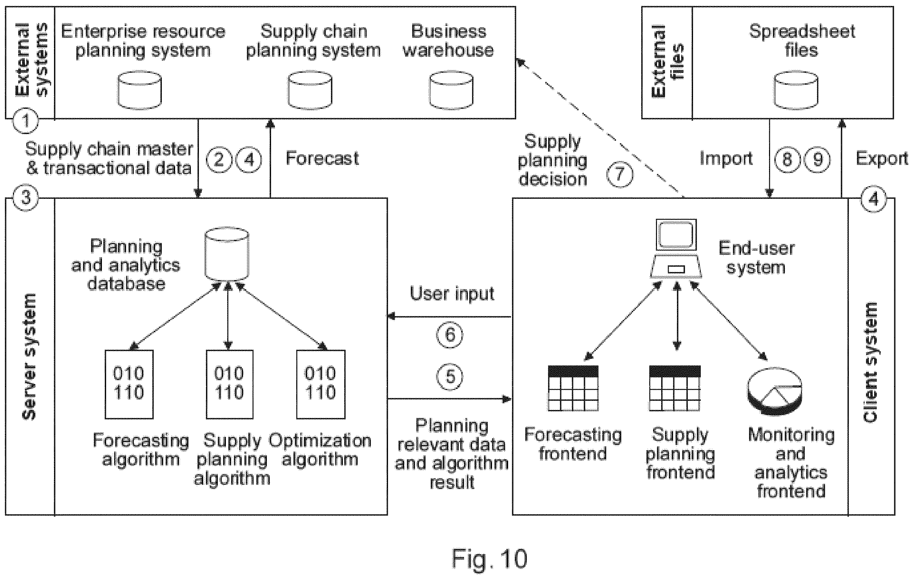

The supply chain planning solution is implemented as an IT system, which is embedded into the existing enterprise system architecture. The main components and flows of information are indicated in Fig. 10.

2.1 External system components [1]

The planning solution is integrated with other enterprise systems that are relevant in the context of supply chain planning.

2.1.1 Enterprise resource planning system (ERP)

In the supply chain planning context the ERP system covers, for example, master data of products, production locations, and customers of the company, and manages transactions such as orders involving internal or external parties as well as execution of processes.

2.1.2 Supply chain planning system (SCM)

The SCM system is used to support the supply chain planning processes across many levels and parties of the organisation. It usually covers the full process from sales and demand planning to rough-cut planning and scheduling.

2.1.3 Business Warehouse

The business warehouse stores historical data for the purpose of reporting and analytics. In the supply chain context it holds e.g. snapshots of forecasts being made, material movements, and sales orders.

2.2 Data flows from external systems [2]

The planning solution obtains different types of data from these external systems. This transfer can be, for example, automated as a nightly process.

2.2.1 Master data

Supply chain master data defines the supply network in scope, which is especially the set of products (stock keeping units, SKUs) with relevant attributes, set of plants/locations and customers, which can be individual external parties, of country organizations, the mapping which country is requesting which SKU, bills of materials for production, and transportation lanes with lead times.
On a planning related level there are parameters such as resource capacities, holiday calendars, and possible shipping patterns.

2.2.2 Transactional data

Supply chain transactional data obtained from external systems comprises both historical data and current transactions.
Relevant historical data include sales orders, from which patterns of customers' reoccurrence can be identified. Sales orders are flagged with an identifier referring to the individual customer for that purpose. These patterns are fed as input into the algorithmic components of the application. Other typical supply chain related data, which is provided to the user for the purpose of generating business insights, is material movements or snapshots of the demand forecasting process.
Current transactions that are relevant for supply planning are especially current inventories and current sales orders.

2.3 Client/server components

The core IT system itself consists of a central server system, to which users are connecting using client systems.

### 2.3.1 Server system [3]

The server component resides on a central installation within the enterprise network and offers services to the client systems operated by the users of the planning solution.

A central database contains relevant data to perform the different tasks of demand forecasting, supply planning, and process analysis. It holds the different types of data obtained from the external systems, the inputs that users are providing as a part of the demand forecasting and supply planning processes, and also the results of the algorithmic calculations.

The different algorithms for demand forecasting, supply planning, and optimization are also part of the central server component. They are obtaining their input data from the central database, and writing back their outputs after execution.

### 2.3.2 Client system [4]

A client system can be installed as a local application on the user's computer, but also be provided virtually through a web interface. Users can access different frontends of the client system depending on their role in the organization. They can also quickly switch between these frontends or even access multiple ones in parallel.

There is a frontend for managing the forecast, a frontend for supply planning and a frontend for monitoring the supply chain processes. The frontends have a common look-and-feel, so that the user can navigate smoothly between them. This can be obtained by using generic frontend software, which allows the flexible design of input masks and reports, as well as a common data model shared by the different system modules.

In the client system the planner can enter data and planning parameters which do not come from an external system. These can be e.g. parameters or policies steering the amount of risk buffering in the supply planning based on the planner's preferences, or alternative scenarios that a planner wants to evaluate. Also, the planner may override the algorithmic planning suggestions.

### 2.3.3 Communication between client and server

When the user starts the client system and opens or switches to another planning mask the client puts a request to the central database to retrieve the relevant data to be displayed. [5]

This can be data originally coming from the external system, potentially in an adjusted format, or results calculated by the algorithms. Depending on the roles and responsibilities of the end-user in the organisation the view or access to data can be restricted in terms of e.g. certain products, regions, or key figures.

Conversely, the user enters certain inputs into the masks for demand forecasting and supply planning, as mentioned above, which are transferred and written to the central database. [6] Permissions regarding the scope of allowed input might be restricted here as well. The user inputs become again visible for other end-users.

### 2.4 Data flows back to external systems [7]

The planning solution is supporting the supply chain processes through tailored algorithms and data analytics, and the planner enters the planning decision into the respective masks. In order for the decisions to be implemented and executed in the supply chain they are written back to the external enterprise systems.

Integration of the systems can be achieved in an automated fashion or as a loose connection involving manual steps. Typically, automation is very beneficial if many users are involved and updates happen frequently.

This applies especially to the demand forecasting process, where forecasts are provided regularly by many people in the organisation. An automated nightly upload process transfers the forecast, obtained through algorithm and manual user input, to the external SCM system.

In order to start execution of the supply planning decisions the planer goes to the ERP system and places an internal order manually. The planner might do that exactly according to the proposal of the algorithm or apply a manual correction while placing the order. In general, also this process may be automated.

### 2.5 External files

Data import from and export to external files is also part of the process.

The end-user may prepare certain inputs, which are not obtained from the external systems, in a convenient way in an external spreadsheet application. The spreadsheet file may then be imported into the planning solution [8].

Conversely, the content of analytical reports and planning masks may be exported to a spreadsheet file for further processing and distribution [9].

**3. Calculations and Algorithmic Contribution**

General Notes:

- All numbers provided are fictional and for illustration purposes of the underlying calculation steps only.
- Due to the shelf life of the product of hand, most calculation steps are described in terms of calendar weeks or days; a similar logic using a different level of aggregation logic may be chosen depending on the products' shelf life and other characteristics.
- Calculation steps will be executed for a planning horizon of 12 calendar weeks, starting from the current week. Depending on the specifics products characteristics, a different length for the planning horizon may be chosen
- The algorithms will be described in the business context of a pharmaceutical product, which is received by patients receiving treatments. The body weight of the patients influences the maximum age of the product upon receipt and used for treatment. The algorithms can be applied in the same way in other contexts of customers receiving certain products, where the product age upon receipt and use for treatment is restricted through certain customer attributes.

**3.1 Demand Forecasting**

3.1.1 Input Data

a) Historical Sales Data

Sales records, indicating the characteristics [weight, treatment cycle, treatment day] of the patient, are recorded and stored within our database. Based on historical sales data the statistical properties [average, distribution] of orders' characteristics [weekday of treatment, patients' weight, treatment cycle, reoccurrence rate, resulting distribution per treatment cycle, resulting distribution of treatments across days within week] can be calculated at frequent intervals. Resulting properties are used as input for further calculation by default.

b) Weekly forecast for first treatments (provided by users on country level)

When generating statistical forecasts, for the purpose of this invention, generating forecasts for reoccurring customer orders with system support are a particular focus. Additionally, users can provide their forecasts for customers ordering for the very first time within each country as an input into our system.

c) List of exceptions affecting default possible treatment days

Patients could be treated on any particular day of the week, i.e. Monday to Sunday. However, certain exceptions may further restrict the possible days for treatment in a particular week in each country.
Holidays and other country-specific exceptions are considered upon generating forecasts. These exceptions are maintained centrally in our database for each country. By default, no forecasts would be created on affected calendar days. Users however - upon overwriting any calculated forecast - may still foresee forecasts on days originally not foreseen as possible treatment days.

d) Updated distribution of treatments across week

Upon disaggregating any weekly forecast across individual calendar days within the week, by default a distribution derived from past sales records (see Section 0.0 for details on calculations). The user however may overwrite the default distribution, which would be used for all subsequent calculations instead.

e) Updated reoccurrence rate

Upon calculating any forecasts for reoccurring treatments, by default a reoccurrence rate will be used which is derived from past sales records (see Section 0.0 for details on calculations). The user however may overwrite the default reoccurrence rates, which would be used for all subsequent calculations instead.

f) Delta for total forecasts (weekly or daily, per country)

By default, users only provide forecasts for the first treatment of patients (see Section 0); any forecasts for reoccurring treatments on a daily level, per week, or per treatment cycle and week will be calculated by the system. The user however may update any total daily or weekly forecast, by providing a "delta". Consequences thereof are described in Sections 0.d and 0.0, respectively.

3.1.2 Preprocessing of Input Data

a) Identify possible weekdays for treatment (by country, in general)

**High Level**

Hospitals and clinics executing the treatments typically follow a certain pattern within the week. Typically treatments will not happen on each day. Historical sales records (as described in Section 3.1.1.a) are analysed in order to determine the weekdays on which treatments did take place in the past. By default, the system will only propose forecasts for treatment days on which treatments took place in the past.

**More Detailed**

The following table illustrates the analysis. Assuming 200 orders have been placed in the past, for treatments on various weekdays between Monday and Friday; as a consequence these weekdays will be considered as possible treatment days. In the example at hand, no orders have been placed for treatments over the weekend, consequently Saturday and Sunday are not considered as possible treatment days. These days however will not be blocked for any treatment and forecasts completely, as users may still update any forecasts on these days (as described in Section 0)

Table 1: Identification of possible default treatment days for a particular country

| Weekday | Mo | Tu | We | Th | Fr | Sa | Su | **Total** |
|---|---|---|---|---|---|---|---|---|
| Number of treatments | 20 | 40 | 60 | 40 | 40 | 0 | 0 | **200** |
| Weekday considered **possible** | Yes | Yes | Yes | Yes | Yes | No | No | |

Upon analysing past sales orders, by default, the system will analyse sales records of the previous six months. All underlying calculations are updated daily. Once confirmed by the user, the updated results will be used as an input for all subsequent calculations.

b) Identify possible days for treatment (by country, for particular week)

**High Level**

In addition to the weekdays typically considered possible for treatments (see Section 0.0) in a country, for a particular week, one can also take into account a set of exceptions (see Section 0), which may further restrict the set of possible days within a particular week. Hence, before generating any forecasts, the system will determine for each day within the planning horizon whether it is considered possible for treatments within a particular country or not.

**More Detailed**

By default, only those weekdays days considered feasible will be considered when generating forecasts on a daily level. Particular days not labelled as possible days however will not be blocked for any treatment and forecasts completely, as users may still update any forecasts on these days (see 0)

The following Table 2 illustrates the steps in order to identify the feasible days for treatments within an exemplary week (Jan 1st - Jan 7th, 2018): In this example, according to the initial analysis (see Section 0.0) all weekdays from Monday to Friday are considered possible for treatment. The set of days may further be restricted according to the prevailing specific rules and exceptions within the particular country and week at hand. In the given particular week, due to exceptions no treatments are supposed to take place on Jan 1st and Jan 6th, thereby further restricting the set of feasible days to Jan 2nd - Jan 5th.

Table 2: Identification of feasible treatment days for a particular country and week

| Date<br>Calendar day | Jan 1st<br>Mo | Jan 2nd<br>Tu | Jan 3rd<br>Wed | Jan 4th<br>Thu | Jan 5th<br>Fr | Jan 6th<br>Sa | Jan 7th<br>Su |
|---|---|---|---|---|---|---|---|
| Feasible **weekdays** for treatment (default) | Yes | Yes | Yes | Yes | Yes | No | No |
| Feasible day according to **additional exceptions** | No | Yes | Yes | Yes | Yes | No | Yes |
| **Feasible treatment day** | **No** | **Yes** | **Yes** | **Yes** | **Yes** | **No** | **No** |

c) Determine default distribution of treatments across week (by country, in general)

**High level**

Initially planning of forecasts takes place on a weekly level. Due to the perishable nature of the product any weekly forecasts can be further disaggregated into daily forecasts for higher granularity of planning. The disaggregation takes place based on the distribution seen in historical data (see Section 3.1.a). This section elaborates on how the default split is derived from past historical data. Granularity at different levels of fidelity than daily are possible.

**More Detailed**

In order to derive a daily forecast for patients, the weekly forecast is split across the days considered possible for treatments within a particular week. In general, weekly forecasts are split according to the distribution of treatment days within past sales orders.

In order to derive the distribution of treatment days, past sales orders of the corresponding country[3] are analysed. The distribution is derived by calculating the relative frequency of orders placed for treatments for each day of the week.

The following table illustrates the calculation steps in more detail. Assuming 200 orders have been placed in past, for treatments on various weekdays between Monday and Friday. The distribution can be identified by calculating the relative frequency (%) of orders per day of the week. Let $o_i$ denote the number of orders received for day i, the

relative frequency $f_i$ is calculated as $f_i = o_i / \sum_{j=1}^{7} o_j$.

Table 3: Calculation of default distribution for treatments across week (for a particular country and week)

| Weekday | 1<br>Mo | 2<br>Tu | 3<br>We | 4<br>Th | 5<br>Fr | 6<br>Sa | 7<br>Su | **Total** |
|---|---|---|---|---|---|---|---|---|
| Number of orders ($o_i$) | 20 | 40 | 60 | 40 | 40 | 0 | 0 | **200** |
| Default % ($f_i$) | 10% | 20% | 30% | 20% | 20% | 0% | 0% | **100%** |

Upon analysing past sales orders, by default, the system will analyse sales records of the previous six months. All underlying calculations are updated daily. Once confirmed by the user, the updated results will be used as default input for all subsequent calculations.

Optionally, the user may overwrite default distribution proposed (see Section 0), which will be used instead for all subsequent calculations.

d) Determine distribution of treatments across week (by country, for particular week)

**High Level**

In case of any prevailing exceptions (see Section 0) the resulting distribution (see Section for 0.0 for relevant calculation steps) will be adjusted. The distribution will be adjusted in way, such that treatments will be spread proportionally across the remaining days still considered possible for treatments.

**More Detailed**

3 in case not sufficient past sales data is available, the distribution can be provided by user

The distribution will be adjusted in case of any updates and changes with respect to possible weekdays for a particular week. Adjustments are made such that the split across the remaining possible treatment days is still proportional to the split originally observed. Again, let $f_i$ denote the relative frequency observed for each day of week i, the indicator $I_i$ evaluates to 1 if and only if the particular day of the week is considered possible for treatment, and zero, otherwise.

The adjusted relative frequency $af_i$ may then be derived as follows:

$$af_i = I_i \cdot f_i / \sum_{j=1}^{7} I_j \cdot f_j.$$

| Date | Jan 1st | Jan 2nd | Jan 3rd | Jan 4th | Jan 5th | Jan 6th | Jan 7th |
|---|---|---|---|---|---|---|---|
| Weekday | Mo | Tu | Wed | Thu | Fr | Sa | Su |
| Feasible treatment day | No | Yes | Yes | Yes | Yes | No | No |
| Indicator ($I_i$) | 0 | 1 | 1 | 1 | 1 | 0 | 0 |
| Default % ($f_i$) | 10 | 20 | 30 | 20 | 20 | 0 | 0 |
| Adjusted % ($af_i$) | 0 | 22.2 | 33.4 | 22.2 | 22.2 | 0 | 0 |

Table 4: Calculation of distribution for treatments across week (for a particular country and particular week)

e) Determine default reoccurrence rate and distribution across treatment cycles (per country)

**High level**

Patients may receive up to a certain number of treatments at regular intervals. The actual number of treatments received by (and hence orders placed for) a particular patient is unknown, as patients may decide or be forced to stop their treatment cycles at any time. In order to calculate a forecast for those so called recurrent patients, reoccurrence rates will be derived from historical sales data (see Section 0 0), which allows the probability that a second, third, etc... order will be placed for a particular patient to be determined.

**More Detail**

In order to estimate the reoccurrence rates, past sales data are analysed.

For the product at hand patients may undergo up to 6 treatment cycles. As patients may decide (or be forced) to discontinue the treatment any time before the maximum number of treatments is reached, the actual number of treatments received is random. Consequently also the number of orders placed in general is random.

The number of orders placed for a patient can be modelled in terms of a Markov Chain. This stochastic model allows to model for any particular patient their reoccurring orders being placed, as well as the probabilities for this to happen, depending on the current number of orders placed already.

For modelling purposes a finite number of states per patient is considered: in this case six states are considered corresponding to the number of treatments received already, as well as one additional state for patients whose treatment is discontinued. Reoccurring orders are modelled as events, leading to a transition into another state. Consequently a patient's state may change in two ways: either he receives an additional treatment, or the treatment will be discontinued. Once the maximum number of treatments has been obtained by the patient, he is also considered as having discontinued his treatment.

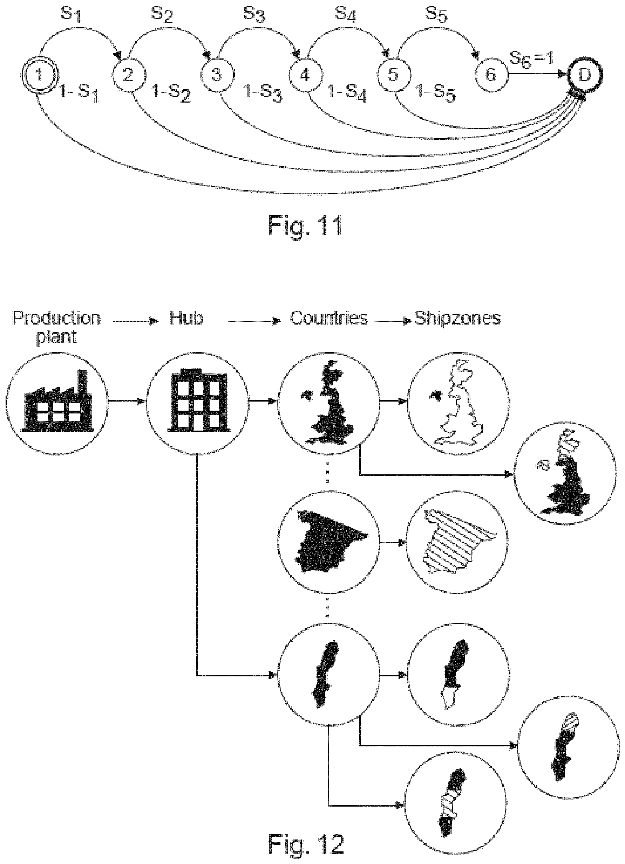

Fig. 11 shows a graphical representation of a Markov Chain using reoccurrence rates $s_i$. Individual states are represented in terms of nodes (circles), where the label within each node refers to the number of treatments received so far (1-6). The additional state D will be used for patients who discontinued their treatment cycle. Directed arcs connecting any two nodes visualize a transition. The labels along the arcs refer to the probability for a certain transition to happen. An additional order being placed for a patient after already having received i treatments is visualized as an arc connecting node i and node i + 1, which will happen with a probability of $s_i$. In the contrary, if a patient discontinues his treatment after i treatments, he will transition into state D with the corresponding counter probability 1 - $s_i$.

For modelling purposes patients will only be considered once the first order has been placed for them, in which case their corresponding status is modelled in terms of the very first state 1. Once a patient discontinued the treatment (and consequently has reached status D), he will no longer be considered for modelling purposes.

Using past data (see Section 3.1.1.a) probabilities $s_i$ can be estimated for additional orders being placed, based on the number of orders placed (and hence treatments received) so far. These probabilities may also be seen as conditional probabilities, based on the current state a patient is currently in (i.e. how many treatments he has obtained so far). Additionally, it is possible to calculate the resulting related default distribution across treatment cycles $t_i$ to be expected across any point in time.

The following Table 5 illustrates the steps to derive the reoccurrence rates. In this example it is assumed that a total number of 2735 orders have been placed for 793 individual patients. Based on a unique patient ID and the date of the treatments the treatment cycle i of each order can be derived easily. Let $D_i$ denote the number of patients who overall received exactly i treatments and discontinued their treatment afterwards. Consequently, the number of patients $P_i$ having received at least i treatments can be recursively derived, where $P_i = P_{i+1} + D_i$ and $P_6 = D_6$. Consequently, assuming stationarity, the distribution of patients per treatment cycle $t_i$ can be derived as $t_i = P_i / \sum_{j=1}^{6} P_j$.

The total number of patients having received at least i treatments, allows the determination of the relative frequency of patients $p_i$ having received at least i treatments, where $p_i = P_i / \sum_{j=1}^{6} D_j$.

Finally, reoccurrence rates $s_i$ may be derived by calculating the conditional probabilities of patients having received i treatments already and also having an order placed for their next treatment i + 1, where $s_i = p_{i+1}/p_i$, while the maximum number of treatments has not yet been reached. By default, due to the maximum number of treatments considered, $S_6 = 1$.

| Treatment Cycle (TC) ($i$) | 1 | 2 | 3 | 4 | 5 | 6 | **Total** |
|---|---|---|---|---|---|---|---|
| # of patient receiving exactly $i$ treatments ($D_i$) | 192 | 126 | 109 | 90 | 52 | 224 | **793** |
| # of patients receiving at least $i$ treatments ($P_i$) | 793 | 601 | 475 | 366 | 276 | 224 | **2735** |
| **Default distribution across TCs ($t_i$)** | **29.0** | **22.0** | **17.4** | **13.4** | **10.1** | **8.2** | **100%** |
| Proportion of patients receiving at least $i$ treatments ($p_i$) | 100.0 | 75.8 | 59.9 | 46.2 | 34.8 | 28.2 | |
| **Reoccurrence rate of patients ($s_i$)** | **75.8** | **79.0** | **77.1** | **75.4** | **81.2** | - | |

Table 5: Calculation of reoccurrence per treatment cycle (per country)

Upon analysing past sales orders, by default, the system will analyse sales records of the previous six months. All underlying calculations are updated daily. Once confirmed by the user, the updated results will be used as default input for all subsequent calculations.

Optionally, the user may overwrite default reoccurrence rates of patients proposed (see Section 0) which will be used instead for all subsequent calculations. Upon a manually provided update of reoccurrence rates, the resulting distribution across treatment cycles will be updated automatically.

The following Table 6 illustrates the calculation. Based on the manually provided reoccurrence rate $s_i$ one may derive an estimate of the proportion of patients who would receive exactly i treatments ($d_i$), where

$$d_i = (1 - s_i) \cdot \prod_{j=1}^{i-1} s_j$$

Based on $d_i$, the (cumulative) proportion of patients receiving at least i treatments ($p_i$) can be derived, where $p_i = \sum_{j=i}^{6} d_j$. Finally the distribution across treatment cycles ($t_i$) can be derived, where $t_i = p_i / \sum_{j=1}^{6} p_j$.

| Treatment Cycle (TC) (i) | 1 | 2 | 3 | 4 | 5 | 6 | Total |
|---|---|---|---|---|---|---|---|
| Reoccurrence rate, manually overwritten ($s_i$) | 67.7 | 61.9 | 53.8 | 42.9 | 33.3 | - | |
| Proportion of patients receiving exactly i treatments ($d_i$) | 32.3 | 25.8 | 19.4 | 12.9 | 6.5 | 3.2 | 100% |
| Proportion of patients receiving at least i treatments ($p_i$) | 100.0 | 67.7 | 41.9 | 22.6 | 9.7 | 3.2 | |
| **Distribution across TCs ($t_i$)** | **40.8** | **27.6** | **17.1** | **9.2** | **3.9** | **1.3** | **100%** |

Table 6: Calculation of distribution per treatment cycle (per country)

### 3.1.3 Business logic & Algorithms

a) Calculating a forecast for reoccurring patients (per country and week)

**High Level**

Patients are treated at regular intervals of four weeks. Users can provide a forecast for patients receiving their first treatment. Forecasts for reoccurring patients, i.e. patients receiving their second, third, etc... treatment, will be estimated based on the forecasts for patients four weeks earlier, as well as the prevailing reoccurrence rates, i.e. the probability for them to be retreated again in the current week.

To ensure integer forecasts for reoccurring patients these may can be rounded, taking into account the impact of rounding, as well as their overall reoccurring rate, such that the resulting distribution of forecasts across treatment cycles is as close as possible to the empirical distribution.

**More detailed**

For every calendar week a track is kept of the number of patients (forecasted) to be treated by treatment cycle. For a particular week one can then derive the forecasts for reoccurring patients based on the user-provided forecasts for patients receiving their first treatment (see Section 0), forecast for patients per treatment cycle 2-6 4 weeks earlier (calculation follows the same principle), as well as the prevailing reoccurrence rates (see Section 0.0). It is possible to estimate the number of patients within treatment cycle i in week w, by considering the number of patients within the previous treatment cycle i-1, four weeks earlier $F_{i-1}$, as well as their reoccurrence rates $s_{i-1}$. To avoid numerical issues the resulting forecasts per treatment cycle are rounded down to the closest integer, thus equivalent to $\lfloor s_{i-1} \cdot F_{i-1} \rfloor$. The total number of reoccurring patients to be considered within the week under consideration will be estimated as $\lfloor \sum s_{i-1} \cdot F_{i-1} \rfloor$.

Let $\Delta(x) = x - \lfloor x \rfloor$ denote the impact of the embedded rounding operation. To ensure the sum of the resulting forecasts per treatment cycle corresponds to the total number of reoccurring patients, a priority rank will be associated with each treatment cycle: the higher the value of $\Delta(s_{i-1} \cdot F_{i-1})$, the higher the resulting priority rank. In case of ties, a higher priority rank will be assigned to earlier treatment cycles.

Let $d = \lfloor \sum s_{i-1} \cdot F_{i-1} \rfloor - \sum_i \lfloor s_{i-1} \cdot F_{i-1} \rfloor$ denote the difference in forecasts initially not yet distributed. The difference will be distributed across the relevant treatment cycles, by adding one additional unit of forecast to those d treatment cycles with highest priority ranks.

The table below illustrates the calculation of forecasts for reoccurring patients, based on 31 patients (forecasted) to be treated four weeks earlier. The two patients who were forecasted to having received their final treatment cycle four weeks earlier will not be considered as reoccurring patients in the current week. Upon rounding the resulting forecasts per treatment cycle to the closest lower integer number, the total number of forecasts is only 14. Consequently, the forecasts for treatment cycle 2 and 5 and increased by one patient, resulting in a total forecast of 16 reoccurring patients within this week.

| Treatment Cycle (TC) | Total | 1 | 2 | 3 | 4 | 5 | 6 |
|---|---|---|---|---|---|---|---|
| **Week w − 4** | | | | | | | |
| Forecast for patients ($F_i$) | **31** | **10** | **7** | **6** | **4** | **2** | **2** |
| Reoccurrence rate ($s_i$) | | 67.7 | 61.9 | 53.8 | 42.9 | 33.3 | - |
| **Week w** | | | | | | | |
| Unrounded forecast ($s_{i-1} \cdot F_{i-1}$) | **16.7** | | 6.8 | 4.3 | 3.2 | 1.7 | 0.7 |
| Rounded forecast ($\lfloor s_{i-1} \cdot F_{i-1} \rfloor$) | **14** | | 6 | 4 | 3 | 1 | 0 |
| Impact by rounding ($\Delta(s_{i-1} \cdot F_{i-1})$) | **2.7** | | 0.8 | 0.3 | 0.2 | 0.7 | 0.7 |
| Rank of impact | | | 5 | 1 | 2 | 4 | 3 |
| Added forecast due to rounding | **2** | | 1 | 0 | 0 | 1 | 0 |
| Forecast for reoccurring patients | **16** | | 7 | 4 | 3 | 2 | 0 |

Table 7: Calculation of forecasts for reoccurring patients (for a particular country and particular week)

Thus, table 7 shows the situation at a snap shot in time relating to how "Forecasts for re-occurring patients" (at the next treatment cycle in the future) is determined from known forecasts of patients having received a certain number of treatments or it being known that they will receive those treatments ("Forecast for patients ($F_i$)"). Thus, referring to the description relating to Figs. 1-6, the:

- "Forecast for patients ($F_i$) value 31" is a specific example of the "first demand number of a product";
- "Forecast for patients ($F_i$) value 10" is a specific example of the "second demand number of a product";
- "Forecast for patients ($F_i$) values 7, 6, 4, 2 ...." are a specific example of the "third demand number of a product";
- "Forecast for patients ($F_i$) value 7" is a specific example of the "fourth demand number of a product";
- "Forecast for patients ($F_i$) values 6, 4, 2 ...." are a specific example of the "fifth demand number of a product";
- "Forecast for patients ($F_i$) value 6" is a specific example of the "sixth demand number of a product";
- "Reoccurrence rates ($s_i$) 67.7, 61.9, 53.8, 42.9, 33.3 ..." are a specific example of the "at least one probability of product re-receipt";
- "Reoccurrence rate ($s_i$) 67.7" is a specific example of the "probability of product re-receipt for a receiver having received the product on only one occasion";
- "Reoccurrence rates ($s_i$) 61.9, 53.8, 42.9, 33.3 ..." are a specific example of the "at least one probability of product re-receipt for a receiver having received the product on at least two occasions";
- "Reoccurrence rate ($s_i$) 61.9" is a specific example of the "probability of product re-receipt for a receiver having received the product on only two occasions";
- "Reoccurrence rates ($s_i$) 53.8, 42.9, 33.3 ..." are a specific example of the "at least one probability of product re-receipt for a receiver having received the product on at least three occasions";
- "Reoccurrence rate ($s_i$) 53.8" is a specific example of the "probability of product re-receipt for a receiver having received the product on only three occasions";
- "Reoccurrence rates ($s_i$) 42.9, 33.3 ..." are a specific example of the "at least one probability of product re-receipt for a receiver having received the product on at least four occasions";
- "Forecast for reoccurring patients values 7, 4, 3, 2 ... equalling a total of 16" that is derived from the "Unrounded forecast ($S_{i-1} \cdot F_{i-1}$) values 6.8, 4.3, 3.2, 1.7 ... equalling a total of 16.7 " are a specific example of the "first sub-total forecast demand number";
- "Forecast for reoccurring patients value 7" that is derived from the "Unrounded forecast ($s_{i-1} \cdot F_{i-1}$) value 6.8" is a specific example of the "first forecast demand number";
- "Forecast for reoccurring patients values 4, 3, 2 ... " that are derived from the "Unrounded forecast ($s_{i-1} \cdot F_{i-1}$) values 4.3, 3.2, 1.7 ... " are a specific example of the "second forecast demand number";
- "Forecast for reoccurring patients value 4" that is derived from the "Unrounded forecast ($s_{i-1} \cdot F_{i-1}$) value 4.3" is a specific example of the "third forecast demand number";
- "Forecast for reoccurring patients values 3, 2 ... " that are derived from the "Unrounded forecast ($s_{i-1} \cdot F_{i-1}$) values 3.2, 1.7 ... " are a specific example of the "fourth forecast demand number";
- "Forecast for reoccurring patients value 3" that is derived from the "Unrounded forecast ($s_{i-1} \cdot F_{i-1}$) value 3.2" is a specific example of the "fifth forecast demand number";
- And so forth

Thus, the forecast for re-occurring patients value 16 (a specific example of the first sub-total forecast demand number) gives a forecast of product receipt in the future (in 4 weeks' time in this specific example), made up of customers who are receiving the product for various numbers of time.

Then, the forecast for re-occurring patients can be treated in the same way that the "Forecast for patients ($F_i$)" has been treated above, to provide a forecast in the future (in 8 weeks' time in this specific example (a specific example of the second sub-total forecast demand number). And, again that forecast can similarly be used to determine the forecast for 12 weeks' time, and so forth into the future.

In this manner, a forecast can be determined that enables efficient supply planning of the product, and enables efficient production planning of the product.

**In more detail:**

b) Calculating a total forecasts for patients (per country and week)

Based on the calculated forecast for reoccurring patients (see Section 0.0), as well the forecast for new patients provided by the user (see Section 0), one may easily calculate the total forecasts for patients within a given week by just adding them up.

c) Split weekly forecast across weekdays based on calendar

**High level**

Forecasts are provided and generated in weekly buckets, i.e. for an entire week. Due to the perishable nature of the product at hand it is possible to further disaggregate any weekly forecasts into daily forecasts.

Upon disaggregation, the total weekly forecast (see Section 0.0) will be split proportionally according to the relevant distribution (see Section 0.0). To ensure integer forecasts on a daily level, the disaggregation will be adjusted automatically, such that the deviation of the resulting distribution from the desired distribution is as small as possible.

**More Detailed**

Based on the distribution $af_i$ of treatments identified for a particular calendar week and country, any weekly forecast is distributed across all possible treatment days and rounded down to the closest integer, thus equivalent to $\lfloor af_i \cdot F \rfloor$. Let $\Delta(x) = x - \lfloor x \rfloor$ denote the impact of the embedded rounding operation. To ensure the sum of the resulting daily forecasts corresponds to the weekly forecast, a priority rank will be associated with each day: the higher the value of $\Delta(af_i \cdot F)$, the higher the resulting priority rank. In case of ties, a higher priority rank will be assigned to weekdays earlier within the week. Let $d = F - \sum_i \lfloor af_i \cdot F \rfloor$ denote the difference in forecasts initially not yet distributed. The difference will be distributed across the week by adding one additional unit of forecast to those d weekdays with highest priority ranks.

The table below illustrates the split of a weekly forecast of 50 across a particular week, according to the provided adjusted frequencies $af_i$. Upon rounding the resulting daily forecast to the closest lower integer, the total number of daily forecasts is only 49, hence one additional unit is distributed across the possible treatment days. The impact of rounding assigns the highest rank to Wednesday. Consequently the daily forecast of Wednesday will be increased by one, resulting in a successful and full split of the weekly forecast of 50.

| Date<br>Weekday | Total | Jan 1st<br>Mo | Jan 2nd<br>Tu | Jan 3rd<br>Wed | Jan 4th<br>Thu | Jan 5th<br>Fr | Jan 6th<br>Sa | Jan 7th<br>Su |
|---|---|---|---|---|---|---|---|---|
| Weekly forecast (F)<br>adjusted % ($af_i$) | **50**<br>**100%** | <br>0.0 | <br>22.2 | <br>33.3 | <br>22.2 | <br>22.2 | <br>0.0 | <br>0.0 |
| unrounded daily forecast ($af_i \cdot F$) | **50** | | 11.1 | 16.7 | 11.1 | 11.1 | | |
| rounded daily forecast ($\lfloor af_i \cdot F \rfloor$) | **49** | | 11 | 16 | 11 | 11 | | |
| impact by rounding ($\Delta(af_i \cdot F)$) rank of impact | **1** | | 0.1  3 | 0.7  4 | 0.1  2 | 0.1  1 | | |
| added daily forecast due to rounding | **1** | | **0** | **1** | **0** | **0** | | |
| daily forecast | **50** | | **11** | **17** | **11** | **11** | | |

Table 8: Calculation of daily forecasts (for a particular country and particular week)

d) Calculations in case of updated total weekly forecast (per country)

**High Level**

Optionally the user may update the total weekly forecast, by providing a "delta" value to it, i.e. the difference by which the original calculated forecast should be changed. In case of an increase the user would provide a positive delta; any negative delta[4] would result in a decrease of the original forecast value.

Upon manually updating a weekly forecast, several related forecast figures at various levels of aggregation can be updated as well: the weekly forecast can be disaggregated into a daily forecast (see calculation as provided in Section 0.0). Additionally, the weekly forecast can be further disaggregated across treatment cycles, to allow for proper calculation for subsequent forecasts for reoccurring patients (more details provided below). Optionally, one may want to trigger a recalculation of the future weekly forecasts for reoccurring patients in 4, 8, 12, etc. weeks (see calculation steps as provided in Section 0.0).

Upon disaggregation, the user updated weekly forecast (see Section 0) will be split proportionally according to the relevant distribution (see Section 0.0). To ensure integer forecasts per treatment cycle, the disaggregation will be adjusted automatically, such that the deviation of the resulting distribution form the desired distribution is as small as possible. In principle, the calculation steps are similar to the ones carried out to disaggregate a weekly into a daily forecast (see Section 0.0 for more details on calculations steps).

**More Detailed**

Based on the distribution $t_i$ of treatments identified, an updated weekly forecast is distributed across all treatment cycles and rounded down to the closest integer, thus equivalent to $\lfloor t_i \cdot U \rfloor$. Let $\Delta(x) = x - \lfloor x \rfloor$ denote the impact of the embedded rounding operation. To ensure the sum of the resulting forecasts per treatment cycle corresponds to the total weekly forecast, a priority rank will be associated with each treatment cycle: the higher the value of $\Delta(t_i \cdot U)$, the higher the resulting priority rank. In case of ties, a higher priority rank will be assigned to treatment earlier treatment cycles. Let $d = U - \sum_i \lfloor t_i \cdot U \rfloor$ denote the difference in forecasts initially not yet distributed. The difference will be distributed across treatment cycles, by adding one additional unit of forecast to those d treatment cycles with highest priority ranks.

The table below illustrates the split of a weekly forecast of 30 patients across treatment cycles within a particular week, according to the relevant frequencies $t_i$. Upon rounding the resulting forecasts per treatment cycle to the closest lower integer, the total

4 The resulting total forecast has to remain non-negative. An error message will be issued to user to avoid any deltas which would result in a negative forecast quantity. number of forecasts is only 28, hence two additional units are distributed across the treatment cycles. The impact of rounding assigns the highest rank to treatment cycles 4 and 6. Consequently the daily forecast of those two treatment cycles will be increased by one respectively, resulting in a successful and full split of the weekly forecast of 30 patients.

| Treatment Cycle (TC) | Total | 1 | 2 | 3 | 4 | 5 | 6 |
|---|---|---|---|---|---|---|---|
| Weekly forecast (U) | **30** | | | | | | |
| Distribution of TCs % ($t_i$) | **100%** | 40.8 | 27.6 | 17.1 | 9.2 | 3.9 | 1.3 |
| Unrounded daily forecast ($t_i \cdot U$) | **30** | 12.2 | 8.3 | 5.1 | 2.8 | 1.2 | 0.4 |
| Rounded daily forecast ($\lfloor t_i \cdot U \rfloor$) | **28** | 12 | 8 | 5 | 2 | 1 | 0 |
| Impact by rounding ($\Delta(t_i \cdot U)$) | **2** | 0.2 | 0.3 | 0.1 | 0.8 | 0.2 | 0.4 |
| Rank of impact | | 3 | 4 | 1 | 6 | 2 | 5 |
| Added daily forecast due to rounding | **2** | 0 | 0 | 0 | 1 | 0 | 1 |
| Weekly forecast (per TC) | **30** | 12 | 8 | 5 | 3 | 1 | 1 |

Table 9: Calculation of forecasts per treatment cycle (for a particular country and particular week)

e) Calculations in case of updated total daily forecasts (per country)

Optionally the user may update the total weekly forecast, by providing a "delta" value to it, i.e. the difference by which the original forecast should be changed. In case of an increase the user would provide a positive delta; any negative delta[5] would result in a decrease of the original forecast value.

Upon manually updating a daily forecast, several related forecast figures at various levels of aggregation can be updated as well: the total weekly forecast can be updated for the particular week. All subsequent steps are identical to the ones described in Section 0.0.

3.2 Supply Planning

3.2.1 Input Data

a) Network structure and supply process

The supply planning algorithm considers the following general structure, but could support planning on different structures as well.

- The product is manufactured in one production plant.
- From the production plant it is shipped to a central hub location (or distribution centre).
- At the hub location or distribution centre a minor production step for packaging and labelling may take place.
5 The resulting total forecast has to remain non-negative. An error message will be issued to user to avoid any deltas which would result in a negative forecast quantity.

- From the hub location the product is shipped to customers that are located in different countries. Each country may be divided into separate shipzones for planning purposes, reflecting different transportation times from the hub to the respective customer location. Typically, a country has between one and three shipzones.
- This is exemplified in Fig. 12.

Two different types of stock-keeping units (SKUs) are differentiated:

- Bulk material is initially produced at the production plant.
- Country-specific product is shipped to the countries. Usually, a country is assigned to an own SKU (single-country SKU), but in some cases multiple countries may receive the same SKU (shared-country SKU).

Two different sourcing options are differentiated. Each country is assigned one of those two options:

- Sourcing option 1: The bulk material is produced at the production plant and shipped to the hub location. The bulk material receives a country-specific repackaging at the hub before being shipped to a country. As the repackaging is done only as a consequence of an incoming sales order, this sourcing mechanism is denoted as make-to-order (MTO).
- Sourcing option 2: The country-specific product is produced at the production plant and shipped to a country via the hub location. This sourcing mechanism is denoted as non-make-to-order (non-MTO).

Products are shipped via the hub location in both sourcing options, and also material stock is kept at the hub. When a material unit on stock is selected/assigned to satisfy the demand coming from a certain sales order, this assignment step is denoted as picking in the following.

b) Location master data

The supply planning algorithm runs on an aggregated network structure, which aggregates countries to country groups. Those countries having the same following characteristics are assigned to the same group:

1. The demand translates to the same SKU in the production plant, i.e. the countries either have MTO sourcing (bulk material produced at the production plant) or they have non-MTO sourcing and are using the same country-specific SKU (produced at the production plant).

2. The counties have the same allowance of two-unit treatments: In some countries it is allowed to apply two units of the product for the same patient's treatment in order to increase the treatment dose.

Typically, the following groups of countries can be defined:

| Country group identifier | Description | Two units allowed |
| --- | --- | --- |
| MTO_ONE_UNIT | Group of MTO countries with 1-unit treatment only | No |
| MTO_TWO_UNITS | Group of MTO countries with 2-units treatment allowed | Yes |
| NON_MTO_CTRY1 | Group consisting of non-MTO country 1, using a single-country SKU | No |
| NON_MTO_CTRY2_CTRY3 | Group consisting of non-MTO countries 2 and 3, using the same shared-country SKU | Yes |

Each country is assigned to a group:

| Country identifier | Country group identifier |
| --- | --- |
| CTRY1 | NON_MTO_CTRY1 |
| CTRY2 | NON_MTO_CTRY2_CTRY3 |
| CTRY3 | NON_MTO_CTRY2_CTRY3 |
| CTRY4 | MTO_ONE_UNIT |
| CTRY5 | MTO_ONE_UNIT |

c) Material master data

The list of relevant SKUs is provided as a list, based on product master data maintained in the external ERP system, including the material number, description, as well as a flag indicating whether the SKU corresponds to the bulk article.

| Material number | Description | Bulk article |
| --- | --- | --- |
| 10000001 | BULK 1X6ML | Yes |
| 10000002 | FINISHED 1X6ML ES | No |
| 10000003 | FINISHED 1X6ML UK | No |

A second list associates countries and SKUs. If a country is using MTO sourcing, then it is associated not only with its respective country-specific SKU (single-country or shared-country), but also with the bulk material.

| Country identifier | Material number |
| --- | --- |
| CTRY1 | 10000002 |
| CTRY4 | 10000001 |
| CTRY4 | 10000003 |

d) Calendar and set of rules for shipment from hub location to patient

The supply lead time from the hub location to the patient (hospital) is an input parameter for the supply planning algorithm and is calculated with high granularity due to the nature of the product. Every increase of a single day has the consequence that the delivered product becomes unsuitable for a certain group of patients. That is why the lead time is calculated independently for every possible treatment day, as due to weekends, public holidays the lead time can vary.

The following types of dates are relevant in this context, representing process steps or events in the supply chain:

- Treatment day (TD): Day of treatment in the hospital;
- Delivery day (DD): Day when the product needs to arrive at the hospital;
- Shipment day (SD): Day when the product needs to be shipped out of the hub location;
- Picking day (PD): Day when the product on stock needs to be allocated/reserved.

The lead times (not considering any specific calendar exceptions) between these days are obtained from the external ERP system: Offset between TD and DD, between DD and SD (transportation time), and between SD and PD.

The following standard calendars and exceptions are considered:

- List of weekdays, which are in general feasible as TD, DD, SD, PD for deliveries to a specific country
- List of exception dates, which are not feasible as TD, DD, SD, PD for deliveries to a specific country
- List of exception dates, which are not feasible for transit (between SD and DD) in a specific country

e) Production campaigns and lead times from production plant to hub location

The production campaign table lists the possible manufacturing dates of the planning horizon, for which the production quantity is to be decided. Each campaign is referred to by a unique identifier, the dates for manufacturing and availability for picking at the hub location. A maximum quantity can be specified by the user for reporting purposes, which can be compared against the production quantity suggested by the algorithm.

| Campaign identifier | Manufacturing date | Availability for picking | Maximum quantity |
| --- | --- | --- | --- |
| CW04_2015_a | 04.10.2015 | 13.10.2015 | 700 |
| CW04_2015_b | 06.10.2015 | 14.10.2015 | 300 |
| CW05_2015_a | 13.10.2015 | 20.10.2015 | 700 |

In every campaign a certain selection of SKUs can be produced:

| Campaign / SKU | 10000001 | 10000002 | 10000003 |
|---|---|---|---|
| CW04_2015_a | Yes | Yes | No |
| CW04_2015_b | Yes | No | Yes |
| CW05_2015_a | Yes | Yes | No |

f) Forecast

The forecast is obtained from the Demand Forecasting Generation module.

g) Open and shipped orders

Customer orders, maintained in the ERP system, are taken into account for the supply planning as a basis for the demands that need to be fulfilled. Orders are especially relevant for the short-term demand, as they are usually placed on short notice 1-2 weeks ahead of treatment. The demand for the remaining weeks of the horizon is mostly derived from the forecast. Orders and forecast are combined to a single demand signal by the forecast algorithm, see below.

Sales orders are especially required to have the following attributes for processing in the supply planning algorithm:

- Country and shipzone;
- Product number;
- Treatment day;
- Quantity;
- Indicator whether a corresponding delivery has already been shipped out of the hub location or not. An order is denoted open order if it has not been shipped, yet. Otherwise it is denoted shipped order.

h) Inventory levels

The algorithm checks which demands can be satisfied from current inventories, so that no additional production needs to be planned for these demands. Typically, inventory data from the ERP system is provided with following attributes:

- Location;
- Product number;
- Production batch identifier;
- Manufacturing date;
- Quantity.

The manufacturing date is especially relevant to determine the age of the product, which can be taken into account when checking whether stock from a production batch is suitable for treatments on a specific day.

Inventory, reported on the hub location, may still be in transit and not yet available for picking. The system can derive the planned day of availability for picking of a stock item from the production campaign table.

i) Open process orders

The algorithm checks which demands can be satisfied from material shipments which are planned to be received from the production plant, similar as inventories explained above. This is done based on open process orders, which are obtained from the ERP system with following attributes:

- Location
- Product number
- Manufacturing date
- Shipment date (out of production plant)
- Quantity

Similar to the processing of inventory data the algorithm determines the planned day of availability for picking at the hub location based on the production campaign table.

j) Safety stock strategy

The days-to-recover is a steering parameter provided by the planner for the required coverage of safety stock. Safety stock needs to be planned in order to safeguard against possible delays of supply availability. On a country group level the parameter indicates the supply risk that needs to be taken into account.

| Country group identifier | Days to recover |
| --- | --- |
| MTO_ONE_UNIT | 3 |
| NON_MTO_CTRY1 | 7 |

k) Product decay

The strength of the product is decaying over time, while different patients require different product strengths for their treatments based on their body weight. The relationship between product age and the maximum patient weight is established in the following table. If the weight of the patient is high and the country (group) permits doing so, then he or she may also receive two units of older product instead of one unit of very fresh product. But the preferred option is always to use a fresh, single unit.

| Product age (days) | Maximum body weight for 1 unit treatment (kg) | Maximum body weight for 2 units treatment (kg) |
| --- | --- | --- |
| ... | ... | ... |
| 13 | 110 | 220 |
| 14 | 104 | 208 |
| ... | ... | ... |

3.2.2 Pre-processing of Input Data

a) Determine Picking Dates

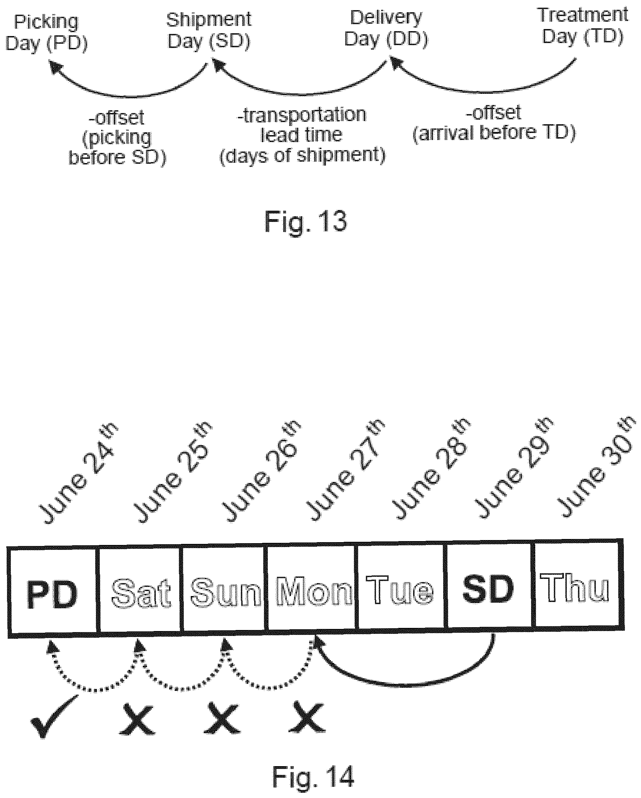

Products are ordered for treatment on a particular weekday. For a requested treatment date the corresponding required picking date at the hub location is determined automatically by the system, based on calendars, exceptions, and lead times (see input).
The calculation is done in a backward fashion as shown in Fig. 13. Starting from a particular treatment day in a specific shipzone the different lead times (offsets) are applied in backward direction to determine days DD, SD, and PD.
In this process different exceptions are considered, which can require a certain step of the logistic process being executed earlier than in the usual case. The example below illustrates holiday and weekend exceptions. Let the required lead time between PD and SD be two days. If Wednesday, June 29th is the required SD, then picking would be required on Monday, June 27th in a typical situation. The system checks whether this day is a feasible day. In case it is not feasible, e.g. due to a public holiday listed as an exception, then the system checks for feasibility one day earlier. In the example 26th is a Sunday, which is not allowed, and the same applies for Saturday as well. That is why Friday, June 24th would be the required PD. This is shown in Fig. 14.

b) Determine distribution across shipzones

The system evaluates historical sales orders for each country with respect to the location of the customer within the country. As a result the system calculates the share of treatments of each shipzone among the total number of treatments in the country. As sales orders in the ERP system are usually provided with an address, but not with a shipzone, the system needs to translate e.g. the postal code to the shipzone based on a mapping table.
This evaluation is done in a similar fashion as described for the distribution of weekdays in Section 0.0 in the context of Forecast Generation. Also here the user may decide to overwrite the parameters manually.
The resulting split percentages are used by the algorithm to split the open country forecast across the shipzones, see below.

c) Determine distribution of patients' weight

The system evaluates historical sales orders for each country with respect to the weight of the patients, assuming a normal distribution. The table below illustrates weight distributions per country, characterized by mean value and standard deviation. As for other distributions based on historical data explained above, the user may override these parameters for planning purposes based on own expectations.

| Country | Average patient weight (kg) | Standard deviation of patient weight (kg) |
|---------|-----------------------------|-------------------------------------------|
| CTRY1 | 85 | 15 |
| CTRY2 | 83 | 17 |

3.2.3 Business logic & algorithms

a) Combine forecast and sales orders into open demand (forecast)

As explained above, both actual sales orders and forecast are taken into account for the supply planning as the basis for the demands that need to be fulfilled. Orders are usually placed on short notice 1-2 weeks ahead of treatment. Rather precise demand information is available for weeks 1-2 of the planning horizon based on these actual orders, while an estimation based on forecast is available for the full horizon.

Orders and forecast are combined into a single demand signal as an input for the supply planning. As e.g. for week 2 it is not known whether the currently placed orders already give the picture of the full demand, a certain logic is used to incorporate the forecast as well.

Both orders and forecast are provided on treatment day level. Two cases are distinguished based on the quantity on treatment week level:

- Case 1: The number of total (shipped and open) orders is equal to or higher than the forecast in a week.

- Case 2: The number of total (shipped and open) orders is smaller than the forecast in a week.

Then, the open demand to be satisfied is assumed as the following:

- Case 1: Open orders are used as open demand for each day.
- Case 2: Open orders are used as open demand for each day, plus a redistributed open forecast.

Example for case 1: The currently known demand for a week (represented by total orders = 59) is higher than the previously estimated demand (forecast = 52), so that orders overrule the forecast. The supply planning does not need to consider demand for which deliveries have been shipped already, that is why only open orders (= 25) are considered for the open demand on daily level.

| Treatment date | Weekly total | Jan 1st | Jan 2nd | Jan 3rd | Jan 4th | Jan 5th | Jan 6th | Jan 7th |
| Weekday | | Mo | Tu | Wed | Thu | Fr | Sa | Su |
|---------|------|----|----|-----|-----|----|----|----|
| Forecast (daily) | 52 | 10 | 10 | 12 | 10 | 10 | 0 | 0 |
| Shipped orders | 34 | 10 | 7 | 7 | 5 | 5 | 0 | 0 |
| Open orders | 25 | 0 | 4 | 4 | 5 | 12 | 0 | 0 |
| Open demand | 25 | 0 | 4 | 4 | 5 | 12 | 0 | 0 |

Example for case 2: The currently known demand for a week (represented by total orders = 46) is smaller than the previously estimated demand (forecast = 50). It is expected that additional orders for the week might still be submitted.

The open forecast, i.e. forecast for treatments for which no orders have been created yet, by orders, is 50-26-20 = 4 for the week. This open forecast can then be reflected in the supply planning. Yet, when it is calculated on daily level, it can turn out to be negative. Thus, the weekly open forecast is redistributed proportionally to the days having a positive open forecast. Finally, the open demand on daily level is the sum of daily open orders and the daily redistributed open forecast.

| Treatment date<br>Weekday | Weekly total | Jan 1st<br>Mo | Jan 2nd<br>Tu | Jan 3rd<br>Wed | Jan 4th<br>Thu | Jan 5th<br>Fr | Jan 6th<br>Sa | Jan 7th<br>Su |
|---|---|---|---|---|---|---|---|---|
| Forecast (daily) | **50** | 10 | 10 | 10 | 10 | 10 | 0 | 0 |
| Shipped orders | **26** | 8 | 3 | 11 | 3 | 1 | 0 | 0 |
| Open orders | **20** | 0 | 4 | 1 | 5 | 10 | 0 | 0 |
| Open forecast | **4** | 2 | 3 | -2 | 2 | -1 | 0 | 0 |
| Redistributed open forecast | **4** | 1 | 2 | 0 | 1 | 0 | 0 | 0 |
| Open demand | **24** | 1 | 6 | 1 | 6 | 10 | 0 | 0 |

b) Split open demand across shipzones

The open demand is first calculated on country and daily level, as explained above. As an input for the supply planning, it is split from country to shipzone level. This is done using the same mechanisms as described before for the daily split: Based on historical sales orders the distribution of treatments across the shipzones of a country is estimated. The distribution obtained is applied to split the open demand from country to shipzone level, with possibilities for the user to override the default estimation of the system.

c) Calculation of production quantity

Step 1: Create list of receipt elements

All sources of material, produced at the production plant and received at the hub location, are denoted as receipt elements. They can be differentiated depending on whether the actual receipts have already occurred in the past or are expected in the future and whether they are "fixed" or not in terms of quantity:

- Physical inventory at the hub location has been received based on one or multiple production campaigns/batches in the past. The current quantity is known, as well as what is the age of each product unit;
- In transit inventory is in the process of being shipped from the production plant to the hub location. The quantity is known, as well as the age, but the actual receipt will take place in the future, with a certain date being expected;
- Process orders in the context of this supply planning correspond to planned replenishments from the production plant, which are not shipped yet. They are characterized by a planned quantity and planned receipt date in the future;
- The receipt from a planned production is a special element: The manufacturing date as well as the planned receipt date are known and fixed already. But the production quantity, and hence the receipt quantity is still to be decided, and it is the main output of the supply planning algorithm for the current planning cycle.

The system collects all receipt elements in a list, which are or will become available within the current rolling planning horizon. Relevant attributes are: product number, manufacturing date, availability date for picking, and the quantity.

The algorithm keeps track of how many units from each receipt element are being picked / assigned to satisfy a certain demand in order to reflect its limited availability. This variable for received quantity is initialized with 0.

| Type | Product number | Manufacturing date | Availability date for picking | Total quantity | To be received quantity |
|---|---|---|---|---|---|
| Physical inventory | 10000001 | 04.10.2015 | 13.10.2015 | 50 | 0 |
| Intransit inventory | 10000002 | 06.10.2015 | 14.10.2015 | 75 | 0 |
| Process order | 10000001 | 13.10.2015 | 20.10.2015 | 60 | 0 |
| Planned production | 10000001 | 15.10.2015 | 21.10.2015 | Not fixed | 0 |

Step 2: Aggregate demand and supply on country group level

The open demand, which is the result of matching forecast and orders, is mainly characterized by the following attributes. Note that the product number is implicitly given by the country information, and the picking day is calculated as explained above for the given treatment day and shipzone.

| Shipzone | Country | Treatment day | Picking day | Quantity |
|---|---|---|---|---|
| CTRY4_24 | CTRY4 | 01.10.2016 | 26.09.2016 | 5 |
| CTRY5_48 | CTRY5 | 01.10.2016 | 26.09.2016 | 7 |
| CTRY4_24 | CTRY4 | 02.10.2016 | 27.09.2016 | 6 |

This open demand is aggregated on the following dimensions:
• Country translated to country group - demand is implicitly translated to the SKU which is produced at the production plant, i.e. either bulk material or country-specific SKU;
• Treatment day - required to consider feasibility of product age;
• Picking day - required to make sure that the product becomes available in time at the hub location.

| Country group | Treatment day | Picking day | Quantity |
|---|---|---|---|
| MTO_ONE_UNIT | 01.10.2016 | 26.09.2016 | 12 |
| MTO_ONE_UNIT | 02.10.2016 | 27.09.2016 | 6 |

Aggregating the demands allows the system to apply empirical distributions on patients' weights on a higher number of demand points at once, thus obtaining a more precise estimation of the overall requirements.
In a similar way as countries are mapped to country groups, also the SKUs of the receipt elements are mapped. Here, the country-specific SKUs belonging to MTO sourcing countries are translated to the bulk material.

Step 3 (loop): Iterate over all demands in the planning horizon

The algorithm iterates over all demands in the following loop sequence:

1. Iterate over all picking days (as of today) in increasing sequence.
2. For each picking day iterate over all treatment days (corresponding to the picking day) in increasing sequence.
3. For each combination of picking & treatment day iterate over country groups in a given sequence.

A possible iteration sequence is illustrated here:

Example for picking sequence across dates & country groups:
Sequence indicated by (number)
Country priority:   1) Non-MTO   2) MTO 1 vial   3) MTO 2 vials

| | Picking date | | |
|---|---|---|---|
| **Treatment date** | 01.01.2016 | 02.01.2016 | 03.01.2016 |
| 10.01.2016 | Non-MTO (1) | | |
| | MTO 1 vial (2) | | |
| 11.01.2016 | MTO 2 vials (3) | MTO 2 vials (5) | |
| 12.01.2016 | MTO 1 vial (4) | Non-MTO (6) | Non-MTO (8) |
| | | MTO 2 vials (7) | |
| 13.01.2016 | | | MTO 2 vials (9) |

For each combination of picking day, treatment day, and country group the algorithm conducts the steps described below.

Step 3.1: Identify suitable receipt elements for picking

For a specific demand (on level picking day, treatment day, and country group) select all suitable receipt elements (out of the list generated above) by following criteria:

- Suitable SKU for the current country group
- Will not be expired on the treatment day
- Is or will be available on picking day
- Available quantity not assigned to satisfy open demand yet

In the following the term "batch" is used to refer to the respective production campaign or batch that a receipt element is originating from.

Step 3.2: Derive weight classes

After having identified the suitable receipt elements for a demand (on level picking day, treatment day, and country group) the algorithm determines which classes of patients can be satisfied from the corresponding batches, i.e. which maximum patient weights can be treated.

The first step is to identify for each batch what will be the age on the respective treatment day, which is the difference in days between treatment and manufacturing day.

Based on this age the system checks in the decay table, explained above, what is the maximum weight that a patient may have when receiving a treatment using product from the batch. This is done for the two cases that one or two units of the product are used (given that the country group permits treatment with two units).

| Batch | Age on treatment day (days) | Maximum body weight for 1 unit treatment (kg) | Maximum body weight for 2 units treatment (kg) |
|---|---|---|---|
| A | 13 | 110 | 220 |
| B | 20 | 72 | 144 |
| C | 27 | 46 | 92 |

Then, the system derives weight classes or intervals from those maximum weights. Every weight class is associated with a target batch, referring to the batch and the number of product units used, corresponding to the upper bound of the weight interval. The sequence of target batches will be used by the algorithm to derive the priorities to pick units from certain receipt elements in order to satisfy demand.

| Weight class (kg) | Target batch |
|---|---|
| 0-46 | 1 x C |
| 46-72 | 1 x B |
| 72-92 | 2 x C |
| 92-110 | 1 x A |
| 110-144 | 2 x B |
| 144-220 | 2 x A |
| >220 | Cannot be satisfied |

The final priority list must be based on the "one-unit priority FEFO" (first expiring, first out) picking rule. This means that the first priority for picking is to choose a batch that allows treatment using a single unit instead of two units, and the second priority is to make use of the oldest possible batch. Thus, the target batch list is sorted as indicated below.

| Sequence number | Weight class (kg) | Target batch |
|---|---|---|
| 1 | 0-46 | 1 x C |

(continued)

| Sequence number | Weight class (kg) | Target batch |
|---|---|---|
| 2 | 46-72 | 1 x B |
| 3 | 92-110 | 1 x A |
| 4 | 72-92 | 2 x C |
| 5 | 110-144 | 2 x B |
| 6 | 144-220 | 2 x A |
| | >220 | Cannot be satisfied |

Step 3.3: Split open demand by weight classes

The open demand is split across the weight classes for each combination of picking day, receipt day (which in this example is also treatment day), and country group based on the average country weight distributions. As the demand is processed on country group level, not on country level, the system first determines the weight distribution of the country group. This is done dynamically in the following way.

Going back to the open demand on country level instead of country group level, the demand share of each country among the demand of all countries of the country group is calculated:

| Country group | Country | Treatment day | Picking day | Open demand | % of country group |
|---|---|---|---|---|---|
| MTO_ONE_UNIT | CTRY4 | 01.10.2016 | 26.09.2016 | 27 | 52% |
| MTO_ONE_UNIT | CTRY5 | 01.10.2016 | 26.09.2016 | 10 | 19% |
| MTO_ONE_UNIT | CTRY6 | 01.10.2016 | 26.09.2016 | 15 | 29% |

The following country weight distributions are assumed for the example:

| Country | Average patient weight (kg) | Standard deviation of patient weight (kg) |
|---|---|---|
| CTRY4 | 85 | 15 |
| CTRY5 | 83 | 10 |
| CTRY6 | 80 | 20 |

Then, for every country group an estimation of the average patient weight distribution is calculated for the specific days, simply based on a weighted average of the countries' weight distributions:

| Country group | Treatment day | Picking day | Average patient weight (kg) | Standard deviation of patient weight (kg) |
|---|---|---|---|---|
| MTO_ONE_ UNIT | 01.10.2016 | 26.09.2016 | 83,17 | 15,48 |

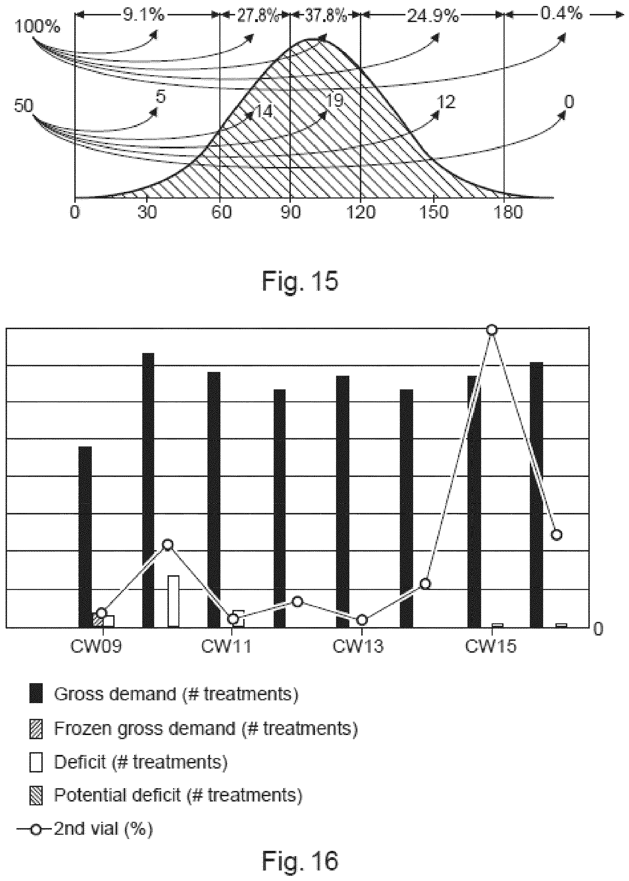

Finally, the open demand of the country group is split across the derived weight intervals, assuming the weight distribution being a normal distribution. This splitting logic is illustrated graphically in Fig. 15.

The output of the demand split has this format (numbers are exemplary):

| Country group | Treatment day | Picking day | Weight class (kg) | Open demand |
|---|---|---|---|---|
| MTO_ONE_UNIT | 01.10.2016 | 26.09.2016 | 0-46 | 5 |
| MTO_ONE_UNIT | 01.10.2016 | 26.09.2016 | 46-72 | 15 |
| ... | ... | ... | ... | ... |
| MTO_ONE_UNIT | 01.10.2016 | 26.09.2016 | >220 | 3 |

The last weight class represents very heavy patients for which no suitable batch exists on the treatment day. If any open demand is split distributed on this weight class, this will be reported as a "deficit" in the end, which cannot be satisfied.

Step 3.4: Calculation of additional production quantity for safety stock

In order to calculate the production quantity the algorithm determines which portion of the open demand can be satisfied from the different suitable receipt elements. Open demand which cannot be satisfied from existing inventory or process orders needs to be satisfied from new production to be planned. That portion of the open demand is called net demand, and the required new production quantity is the main output of the algorithm.

In the subsequent process the algorithm keeps track of the received quantity of each receipt element, i.e. the quantity picked, and how much quantity of it is still available. At the end, the proposed production quantity corresponds to the quantities to be received, i.e. the quantity picked, from planned production elements.

For each picking day, treatment day, and country group the algorithm loops over the weight classes and their associated demands, which have been determined in the previous step. Weight classes are considered in a sequence from the heaviest to the lightest patients.

For a specific weight class demand the algorithm checks the suitable receipt elements according to the sequence given in the target batch table. It checks what is the remaining quantity of a receipt element and how many treatments can be satisfied. Note that if two product units are required for one treatment, then they must be taken from the same batch. The algorithm memorizes the quantity picked from the receipt element.

If the weight class demand could be fulfilled completely from the receipt element, then the loop continues with the next weight class. If not, the next suitable receipt element according to the list of target batches is considered. The algorithm again checks how much remaining demand can be satisfied from this receipt element and continues the process until either the weight class demand has been satisfied completely, or there is no more suitable receipt element. In the latter case the remaining open demand is memorized as a "deficit", i.e. a demand which cannot be fulfilled based on the available supply options.

d) Safety Production Calculation

The supply planning algorithm is reflecting the need to produce additional safety stock in order to maintain a high service level in the case that a campaign fails to arrive. This is done through an iterative process by simulating delayed receipts of the campaigns and analyzing the changes in required production quantity.

If the campaigns to be planned during the horizon are denoted as n = 1, ..., N then the algorithm runs a separate what-if scenario for each campaign n = 2, ..., N and each country group. In the what-if scenario for a campaign n the "availability date for picking" of the campaign is assumed to be delayed according to the time-to-recovery parameter. Under this adjusted situation the required production quantities are calculated. The delay of campaign n will be compensated by an increased production quantity in the previous campaign n-1. These production increases correspond to the safety production.

The example below illustrates a simulated delay of campaign CW41_2016_b by three days. Comparing the baseline calculation with the what-if scenario shows that production quantity of the previous campaign CW41_2016_a needs to be increased from 100 to 200, which is the quantity to cover the possible supply delay.

Result of baseline scenario, not assuming any delay:

| Campaign identifier | Product number | Manufacturing date | Availability date for picking | To be received quantity = Production quantity |
|---|---|---|---|---|
| CW40_2016_b | 10000001 | 03.10.2016 | 08.10.2016 | 55 |
| CW41_2016_a | 10000001 | 10.10.2016 | 15.10.2016 | 100 |
| CW41_2016_b | 10000001 | 12.10.2016 | 17.10.2016 | 150 |
| CW41_2016_c | 10000001 | 16.10.2016 | 21.10.2016 | 80 |

Result of what-if scenario, assuming a delay of the third campaign:

| Campaign identifier | Product number | Manufacturing date | Availability date for picking | To be received quantity = Production quantity |
|---|---|---|---|---|
| CW40_2016_b | 10000001 | 03.10.2016 | 08.10.2016 | 55 |
| CW41_2016_a | 10000001 | 10.10.2016 | 15.10.2016 | **200** |
| CW41_2016_b | 10000001 | 12.10.2016 | **20.10.2016** | 150 |

(continued)

| Campaign identifier | Product number | Manufacturing date | Availability date for picking | To be received quantity = Production quantity |
|---|---|---|---|---|
| CW41_2016_c | 10000001 | 16.10.2016 | 21.10.2016 | 80 |

If in one of these what-if iterations a deficit occurs, this is recorded as a "potential out-of-stock", meaning that the potential supply delay cannot be mitigated at all with safety stock.

3.2.4 Visualization of results

The results of the algorithmic calculation are presented to the user, allowing him or her to understand the current balance of supply and demand, the projection into the future, which production decision should be made, and which potential issues need to be addressed.

Different views and reports in both tabular and graphical form can be accessed by the user. Some of these are illustrated below. Typical key figures of interest for the user are e.g.

- Demand measured in patients/treatments on treatment day level

- Demand measured in product units on picking day level

- Picked quantity in product units

- Stock on hand

- 2nd vial ratio which indicates the percentage of treatments that needs to be supplied with a second unit of material

- Deficit, i.e. the demand (in treatments) that cannot be satisfied

- Scrapped quantity

- Production quantity

| Date (at hub location) | Weekly total | Jan 1st | Jan 2nd | Jan 3rd | Jan 4th | Jan 5th | Jan 6th | Jan 7th |
|---|---|---|---|---|---|---|---|---|
| Weekday | | Mo | Tu | Wed | Thu | Fr | Sa | Su |
| Open demand (treatments) | **500** | 100 | 100 | 100 | 100 | 100 | | |
| 2nd vial (%) | **15%** | 20% | 10% | 30% | 10% | 11% | | |
| Deficit (treatments) | **5** | | | | | 5 | | |
| Stock (units, end of day) | | 50 | 395 | 265 | 155 | 0 | 0 | 0 |
| | | | | | | | | |
| Receipt from plant (units) | **455** | | 455 | | | | | |
| Picking (units) | **575** | 120 | 110 | 130 | 110 | 105 | | |
| Scrapping (units) | **50** | | | | | 50 | | |

Depending on the specific key figure the user may further drill-down into details, e.g. showing the stock age on batch level or aggregate on weekly level. An aggregated view is especially useful in combination with a graphical representation, which gives a quick understanding of trends and issues as shown in Fig. 16.

The final suggested production plan calculated by the algorithm is condensed in the following format. The user can take this information and place internal orders in the external systems in order to implement the production decision. A further drill-down could indicate, for instance, which percentage of the production quantity is for safety stock.

| Material number | Description | CW 41/2016 | | CW 42/2016 | |
|---|---|---|---|---|---|
| | | Quantity | Manuf. date | Quantity | Manuf. date |
| 10000001 | BULK 1X6ML | 100 50 | 10.10.2016 12.10.2016 | 80 60 | 17.10.2016 19.10.2016 |
| 10000002 | FINISHED 1X6ML ES | 20 | 10.10.2016 | 10 | 17.10.2016 |
| 10000003 | FINISHED 1X6ML UK | 10 | 12.10.2016 | 15 | 19.10.2016 |

3.2.5 What-if scenario analysis

The planning solution allows the user to analyse different scenarios to understand the impact of e.g. changes in supply and demand in order to support decisions under uncertainty. The user may change any input, which could be a shift of demand in a country from one week to another one, or a change of a production time slot as an exception.

The user can re-run the algorithm and analyse the difference between the scenarios, e.g. how production needs to be shifted or what is the risk of an unsatisfied demand by comparing the main key figures:

| Key figure | Scenario 1 | Scenario 2 | Delta |
|---|---|---|---|
| $2^{nd}$ vial (%) | 10% | 12% | +2% |
| Deficit (treatments) | 3 | 5 | +2 |
| Scrapping (units) | 200 | 180 | -20 |

As discussed, the specific example described with respect to Figs. 7-16 relates to the demand forecasting, supply planning and production planning of a radioactive medicament (Xofigo) having a short shelf life, however the above described demand forecasting, supply planning and production planning solution has wider applicability.

In another exemplary embodiment, a computer program or computer program element is provided that is characterized by being configured to execute the method steps of the method according to one of the preceding embodiments, on an appropriate system.

The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments.

This exemplary embodiment of the invention covers both, a computer program that right from the beginning uses the invention and computer program that by means of an update turns an existing program into a program that uses invention.

Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A product planning apparatus (300), comprising:

   - an input unit (310);
   - a processing unit (320); and
   - an output unit (330);

   wherein, the input unit is configured to provide the processing unit with a plurality of orders of a product, wherein the plurality of orders is formed from open orders and shipped orders;
   wherein, the input unit is configured to provide the processing unit with a stock level of the product held in stock;
   wherein, the processing unit is configured to determine an open demand of the product to be received, wherein the determination comprises utilisation of the shipped orders, open orders and a total forecast demand number of the product to be received;
   wherein, the processing unit is configured to determine a net demand of the product to be received, wherein the determination comprises utilisation of the open demand and the stock level;
   wherein the processing unit is configured to determine a production plan, wherein the determination comprises utilisation of the net demand; and
   wherein, the output unit is configured to output the production plan.

2. Apparatus according to claim 1, wherein the input unit is configured to provide the processing unit with a production run schedule, the production run schedule comprising a plurality of dates extending into the future when product production is possible; and wherein determination of the production plan comprises utilisation of the production run schedule.

3. Apparatus according to any of claims 1-2, wherein when the shipped orders added to the open orders is equal to or greater than the total forecast demand number the open demand is determined as the open orders.

4. Apparatus according to any of claims 1-3, wherein determination of the open demand comprises a subtraction of the shipped orders from the total forecast demand number.

5. Apparatus according to any of claims 1-4, wherein the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open demand comprises a summation of a plurality of sub-open demand extending over the plurality of future dates, wherein the sub-open demand for a future date is the sub-shipped order for that date subtracted from the sub-forecast demand number for that date.

6. Apparatus according to any of claims 1-5, wherein when the shipped orders added to the open orders is less than the total forecast demand number, determination of the open demand comprises a determination of an open forecast, wherein determination of the open forecast comprises a subtraction of the shipped orders and the open orders from the total forecast demand number.

7. Apparatus according to claim 6, wherein the total forecast demand number comprises a summation of a plurality of sub-forecast demand numbers extending over a plurality of future dates, and the shipped orders comprises a summation of a plurality of sub-shipped orders that are scheduled to arrive over the plurality of future dates, and the open orders comprises a summation of a plurality of sub-open orders extending over the plurality of future dates, and wherein the open forecast comprises a summation of a plurality of sub-open forecasts extending over the plurality of future dates, wherein a sub-open forecast for a future date is the sub-shipped order summed with the sub-open order for that date subtracted from the sub-forecast demand number for that date, and wherein the open forecast is equal to a redistributed open forecast that comprises a summation of a plurality of sub-redistributed open forecasts extending over the plurality of future dates, and wherein the sub-open demand for a date equals the sub-open order for that date added to the sub-redistributed open forecast for that date.

8. Apparatus according to any of claims 1-7, wherein the open orders and the total forecast demand number relate to a plurality of delivery zones having a plurality of different delivery times, wherein each delivery zone has a different delivery time.

9. Apparatus according to claim 8, wherein the processing unit is configured to determine a supply plan of product to the plurality of delivery zones, the determination comprising utilisation of the open demand and stock level.

10. Apparatus according to claim 9, wherein the product has an associated shelf life, and wherein determination of the supply plan comprises utilisation of the shelf life.

11. Apparatus according to claim any of claims 9-10, wherein the product has a level of efficacy that varies with time, and wherein determination of the supply plan comprises utilisation of how the level of efficacy varies with time.

12. Apparatus according to claim 11, wherein the product has a half-life, with this being a duration in time over which the level of efficacy of the product halves.

13. Apparatus according to any of claims 9-12, wherein the input unit is configured to provide the processing unit with at least one product receiving factor of receivers of the product, and wherein determination of the supply plan comprises utilisation of the at least one product receiving factor of receivers.

14. Apparatus according to claim 13, wherein the at least one product receiving factor of receivers of the product comprises at least one body weight of a receiver in kilograms.

15. Apparatus according to claim 14, wherein the processing unit is configured to determine for each delivery zone a characteristic weight distribution for receivers based on data provided from the input unit, and wherein the at least one receiving factor of receivers of the product comprises the characteristic weight distributions in the plurality of deliver zones.

16. Apparatus according to claim 13, wherein the at least one product receiving factor comprises an amount of seed a receiver wants to purchase.

17. Apparatus according to any of claims 13-16 when dependent upon any of claims 11-12, wherein determination of the supply plan comprises matching the levels of efficacy of at least some of the products held in stock with the at least one product receiving factor of receivers of the product for receivers comprised within the open demand.

18. Apparatus according to claim 17, wherein the matching comprises identifying two separate products held in stock that have a combined efficacy that matches a receiving factor of a receiver of the product.

19. Apparatus according to any of claims 9-18, wherein determination of the production plan comprises utilization of the supply plan.

20. Apparatus according to any of claims 1-19, wherein the processing unit is configured to determine the total forecast demand number, the determination comprising utilisation of at least one probability of product re-receipt.

21. Apparatus according to claim 20, wherein the input unit is configured to enable a user to input the at least one probability of product re-receipt, and wherein the input unit is configured to provide the processing unit with the at least one probability of product re-receipt.

22. Apparatus according to claim 20, wherein the input unit is configured to provide the processing unit with information relating to historical product receipt, and wherein the processing unit is configured to determine the at least one probability of product re-receipt on the basis of the information relating to the historical product receipt.

23. Apparatus according to claim 22, wherein the historical products relate to products being received by one or more receivers on one or more occasions.

24. Apparatus according to any of claims 22-23, wherein the processing unit is configured to determine a temporal receipt distribution extending into the future, wherein the determination comprises utilization of the information relating to the historical product receipt.

25. Apparatus according to claim 24, wherein determination of the receipt distribution comprises a determination of a probability of product receipt for different days of the week.

26. Apparatus according to any of claims 24-25, wherein the input unit is configured to enable a user to input information relating to at least one period of time in the future when product receipt will not occur, and wherein the input unit is configured to provide the processing unit with the information relating to at least one period of time in the future when product receipt will not occur, and wherein determination of the receipt distribution comprises utilization of the information relating to at least one period of time in the future when product receipt will not occur.

27. Apparatus according to any of claims 20-26, wherein, the input unit is configured to provide the processing unit with a first demand number of a product to be received and/or having already been received over a first period of time; wherein, the first demand number of the product comprises a second demand number of the product to be received and/or having already been received by a first plurality of receivers who have previous to the first period of time not received the product; wherein, the first demand number of the product comprises a third demand number of the product to be received and/or having already been received by a second plurality of receivers who have previous to the first period of time received the product on one or more occasions; wherein the total forecast demand number comprises a first sub-total forecast demand number of the product to be received over a second period of time subsequent to the first period of time, wherein the second period of time is in the future; wherein, the processing unit is configured to determine the first sub-total forecast demand number, wherein the determination comprises utilization of the at least one probability of product re-receipt; wherein determination of the first sub-total forecast demand number comprises a determination of a first forecast demand number of the product to be received by a proportion of the first plurality of receivers, wherein the determination of the first forecast demand number comprises a multiplication of the second demand number of the product with a probability of product re-receipt for a receiver having received the product on only one occasion; and wherein determination of the first sub-total forecast demand number comprises determination of a second forecast demand number of the product to be received by a proportion of the second plurality of receivers, wherein the determination of the second forecast demand number comprises at least one multiplication of the third demand number of the product with at least one probability of product re-receipt for a receiver having received the product on at least two occasions.

28. Apparatus according to claim 27, wherein the third demand number of the product comprises a fourth demand number of the product, and the second plurality of receivers comprises a third plurality of receivers who have previous to the first period of time received the product on only one occasion, wherein the fourth demand number of the product is a demand number of the product to be received and/or having already been received by the third plurality of receivers, and wherein determination of the second forecast demand number comprises determination of a third forecast demand number of the product to be received by a proportion of the third plurality of receivers, wherein determination of the third forecast demand number comprises a multiplication of the fourth demand number of the product with a probability of product re-receipt for a receiver having received the product on only two occasions.

29. Apparatus according to claim 28, wherein the third demand number of the product comprises a fifth demand number of the product, wherein the second plurality of receivers comprises a fourth plurality of receivers who have previous to the first period of time received the product on at least two occasions, wherein the fifth demand number of the product is a demand number of the product to be received and/or having already been received by the fourth plurality of receivers, and wherein determination of the second forecast demand number comprises determination of a fourth forecast demand number of the product to be received by a proportion of the fourth plurality of receivers, wherein determination of the fourth forecast demand number comprises at least one multiplication of the fifth demand number of the product with at least one probability of product re-receipt for a receiver having received the product on at least three occasions.

30. Apparatus according to claim 29, wherein the fifth demand number of the product comprises a sixth demand number of the product, and the fourth plurality of receivers comprises a fifth plurality of receivers who have previous to the first period of time received the product on only two occasions, wherein the sixth demand number of the product is a demand number of the product to be received and/or having already been received by the fifth plurality of receivers, and wherein determination of the fourth forecast demand number comprises determination of a fifth forecast demand number of the product to be received by a proportion of the fifth plurality of receivers, wherein determination of the fifth forecast demand number comprises a multiplication of the sixth demand number of the product with a probability of product re-receipt for a receiver having received the product on only three occasions.

31. Apparatus according to claim 30, wherein the fifth demand number of the product comprises a seventh demand number of the product, wherein the fourth plurality of receivers comprises a sixth plurality of receivers who have previous to the first period of time received the product on at least three occasions, wherein the seventh demand number of the product is a demand number of the product to be received and/or having already been received by the sixth plurality of receivers, and wherein determination of the fourth forecast demand number comprises determination of a sixth forecast demand number of the product to be received by a proportion of the sixth plurality of receivers, wherein determination of the sixth forecast demand number comprises at least one multiplication of the seventh demand number of the product with at least one probability of product re-receipt for a receiver having received the product on at least four occasions.

32. Apparatus according to any of claims 27-31, wherein, the total forecast demand number comprises a second sub-total forecast demand number of the product to be received over a third period of time subsequent to the second period of time, wherein the processing unit is configured to determine the second sub-total forecast demand number, the determination comprising utilization of the first sub-total forecast demand number of the product to be received over the second period of time and at least one probability of product re-receipt that does not include the probability of product re-receipt for a receiver having received the product on only one occasion.

33. Apparatus according to claim 32, wherein determination of the second sub-total forecast demand number comprises a determination of a first additional forecast demand number, wherein determination of the first additional forecast demand number comprises a multiplication of the first forecast demand number with a probability of product re-receipt for a receiver having received the product on only two occasions, and wherein determination of the second sub-total forecast demand number comprises a determination of a second additional forecast demand number, wherein determination of the second additional forecast demand number comprises at least one multiplication of the second forecast demand number with at least one probability of product re-receipt for a receiver having received the product on at least three occasions.

34. Apparatus according to claim 33 when claim 32 is dependent on any of claims 28-31, wherein the second additional forecast demand number comprises a third additional forecast demand number, wherein determination of the third additional forecast demand number comprises a multiplication of the third forecast demand number with a probability of product re-receipt for a receiver having received the product on only three occasions.

35. Apparatus according to claim 34, when claim 32 is dependent on any of claims 29-31, wherein the second additional forecast demand number comprises a fourth additional forecast demand number, wherein determination of the fourth additional forecast demand number comprises at least one multiplication of the fourth forecast demand number with at least one probability of product re-receipt for a receiver having received the product on at least four occasions.

36. Apparatus according to claim 35, when claim 32 is dependent on any of claims 30-31, wherein the second additional forecast demand number comprises a fifth additional forecast demand number, wherein determination of the fifth additional forecast demand number comprises a multiplication of the fifth forecast demand number with a probability of product re-receipt for a receiver having received the product on only four occasions.

37. Apparatus according to claim 36, when claim 32 is dependent on claim 31, wherein the second additional forecast demand number comprises a sixth additional forecast demand number, wherein determination of the sixth additional forecast demand number comprises at least one multiplication of the sixth forecast demand number with at least one probability of product re-receipt for a receiver having received the product on at least five occasions.

**38.** Apparatus according to any of claims 27-37, wherein the second demand number of the product comprises a user provided order demand number of the product to be received and/or having already been received for the first time by one or more receivers.

**39.** Apparatus according to any of claims 27-38, wherein the second demand number of the product comprises a user provided forecast demand number of the product to be received for the first time by one or more receivers.

**40.** A method for product planning (400), comprising:

A) providing (410) a processing unit with a plurality of orders of a product, wherein the plurality of orders is formed from open orders and shipped orders;
B) providing (420) the processing unit with a stock level of the product held in stock;
C) determining (430) by the processing unit an open demand of the product to be received, wherein the determination comprises utilisation of the shipped orders, open orders and a total forecast number of the product to be received;
D) determining (440) by the processing unit a net demand of the product to be received, wherein the determination comprises utilisation of the open demand and the stock level; and
F) determining (450) by the processing unit a production plan, wherein the determination comprises utilisation of the net demand.

**41.** A computer program element for controlling an apparatus according to any of claims 1 to 39, which when executed by a processor is configured to carry out the method of claim 40.

**42.** A computer readable medium having stored the computer program element of claim 41.

10

20

30

40

**Fig. 1**

100

a) ——— 110

b) ——— 120

c)

140

130

190

180

200

d)

220

230

210

240

250

260

270

160

e)

**Fig. 2**

Fig. 3

Fig. 4

Fig.5

Fig.6

Fig. 7

Fig. 8

Fig. 9

Fig. 10

Fig. 11

Fig. 12

Fig. 13

Fig. 14

Fig. 15

■ Gross demand (# treatments)

▨ Frozen gross demand (# treatments)

☐ Deficit (# treatments)

▨ Potential deficit (# treatments)

—○—2nd vial (%)

Fig. 16

**Europäisches Patentamt**
**European Patent Office**
**Office européen des brevets**

# EUROPEAN SEARCH REPORT

**Application Number**

EP 18 19 9605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/35437 A1 (MANUGISTICS INC [US]) 2 May 2002 (2002-05-02) * abstract; figure 1a * * page 2, line 21 - page 3, line 23 * ----- | 1-42 | INV. G06Q10/06 G06Q10/08 |
| X | US 7 480 623 B1 (LANDVATER DARRYL V [US]) 20 January 2009 (2009-01-20) * abstract; figures 1-12 * * column 4, line 19 - column 5, line 16 * * column 9, line 27 - line 65 * ----- | 1-12 | |

**TECHNICAL FIELDS SEARCHED (IPC)**

G06Q

The present search report has been drawn up for all claims

| Place of search | Date of completion of the search | Examiner |
|---|---|---|
| Munich | 13 December 2018 | Lopes Margarido, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 19 9605

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2018

| Patent document cited in search report | | Publication date | Patent family member(s) | | Publication date |
|---|---|---|---|---|---|
| WO 0235437 | A1 | 02-05-2002 | AU | 1466302 A | 06-05-2002 |
| | | | EP | 1340175 A1 | 03-09-2003 |
| | | | TW | 541483 B | 11-07-2003 |
| | | | US | 2002188499 A1 | 12-12-2002 |
| | | | WO | 0235437 A1 | 02-05-2002 |
| US 7480623 | B1 | 20-01-2009 | US | 7480623 B1 | 20-01-2009 |
| | | | US | 2009125385 A1 | 14-05-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FEINENDEGEN et al.** *Radiat Res,* 1997, vol. 148, 195-201
- **WILBUR.** *Antibody Immunocon Radiopharm,* 1991, vol. 4, 85-96
- **HALL.** Radiobiology for the radiologist. Lippincott Williams & Wilkins, 2000
- **HOWITZ et al.** *Reactive and Functional Polymers,* 1997, vol. 33, 25-36